# EUROPEAN PATENT APPLICATION

(11) **EP 4 736 970 A1**
(43) Date of publication of application: **06.05.2026**
(21) Application number: 23954859.7
(22) Date of filing: 25.12.2023
(51) Int. Cl.: A63F 13/24, A63F 13/23, A63F 13/98

(54) **PERIPHERAL DEVICE**

(30) Priority: 03.10.2023 WO PCT/JP2023/036082
(71) Applicant: Nintendo Co., Ltd., Kyoto-shi, Kyoto 601-8501 (JP)
(72) Inventor: AMANO, Masaki, Kyoto-shi, Kyoto 601-8501 (JP); OKAMURA, Takanori, Kyoto-shi, Kyoto 601-8501 (JP); TAOKA, Sai, Kyoto-shi, Kyoto 601-8501 (JP)
(74) Representative: Bardehle Pagenberg Partnerschaft mbB Patentanwälte Rechtsanwälte
(86) International application number: PCT/JP2023/046478
(87) International publication number: WO 2025/074653

(57) **Abstract**

A peripheral device is a peripheral device to which a first game controller and a second game controller are removably attachable. The peripheral device includes a first portion to which the first game controller and the second game controller are removably attachable and a second portion fixed to a rear surface of the first portion and to be held by both hands of a user. The first portion is provided with a first recess with which the first projection is to be matched, the first recess being provided with a first abutment area, and a second recess with which the second projection is to be matched, the second recess being provided with a second abutment area. The second portion includes a right portion and a left portion. In a right side view, the right portion is located in the rear of the first game controller at a position in an upward-downward direction the same as the first game controller attached to the first portion. In a left side view, the left portion is located in the rear of the second game controller at a position in the upward-downward direction the same as the second game controller attached to the second portion.

## Description

### TECHNICAL FIELD

The present disclosure relates to a peripheral device.

### BACKGROUND ART

Japanese Patent Laying-Open No. 2017-000758 (PTL 1) discloses a peripheral device to which a game controller is to be attached.

### CITATION LIST

### PATENT LITERATURE

PTL 1: Japanese Patent Laying-Open No. 2017-000758

### SUMMARY OF INVENTION

### TECHNICAL PROBLEM

An object of the present disclosure is to provide a peripheral device to which a novel game controller is to be attached.

### SOLUTION TO PROBLEM

A peripheral device according to the present disclosure is a peripheral device to which a first game controller and a second game controller are removably attachable. The first game controller is removably attachable to a game device right side surface which is a right side surface of a game device, and the first game controller includes a first input portion located at a first game controller front surface, a first projecting portion that projects in a rear direction, the first projecting portion located at a first game controller rear surface, a first projection located at a first game controller side surface, the first projection being to be matched with a game device right recess located at the game device right side surface, a first operation portion, and a first pusher that projects from a top surface of the first projection as a result of an operation on the first operation portion. The second game controller is removably attachable to a game device left side surface which is a left side surface of the game device, and the second game controller includes a second input portion located at a second game controller front surface, a second projecting portion that projects in the rear direction, the second projecting portion being located at a second game controller rear surface, a second projection located at a second game controller side surface, the second projection being to be matched with a game device left recess located at the game device left side surface, a second operation portion, and a second pusher that projects from a top surface of the second projection as a result of an operation on the second operation portion. The peripheral device includes a first portion to which the first game controller and the second game controller are removably attachable such that the first game controller front surface and the second game controller front surface face front and a second portion fixed to a rear surface of the first portion, the second portion being to be held by both hands of a user. The first portion is provided with a first recess with which the first projection is to be matched, the first recess being located at a right side surface, and a second recess with which the second projection is to be matched, the second recess being located at a left side surface. The second portion is provided with a right portion which is a portion on right of the right side surface of the first portion in a front view and includes a portion to be held by a right hand of the user and a left portion which is a portion on left of the left side surface of the first portion in the front view and includes a portion to be held by a left hand of the user. In a right side view, the right portion is located in the rear of the first game controller at the same position in an upward-downward direction as the first game controller attached to the first portion, and at least a part of the right portion is opposed to the first game controller rear surface of the first game controller attached to the first portion, in front of a rear end of the first projecting portion. In a left side view, the left portion is located in the rear of the second game controller at the same position in the upward-downward direction as the second game controller attached to the second portion, and at least a part of the left portion is opposed to the second game controller rear surface of the second game controller attached to the second portion, in front of a rear end of the second projecting portion. The first recess is provided with a first abutment area on which the first pusher that projects is to abut. The second recess is provided with a second abutment area on which the second pusher that projects is to abut.

According to the peripheral device according to the above, an upper surface of the right portion may be located below the rear end of the first projecting portion of the first game controller attached to the first portion in the upward-downward direction and in a shape that extends downward as the upper surface of the right portion extends to the right. An upper surface of the left portion may be located below the rear end of the second projecting portion of the second game controller attached to the first portion in the upward-downward direction and in a shape that extends downward as the upper surface of the left portion extends to the left.

According to the peripheral device according to the above, the first recess may be provided with the first abutment area above a center in the upward-downward direction. The second recess may be provided with the second abutment area above the center in the upward-downward direction.

According to the peripheral device according to the above, the first operation portion may be located at the first game controller rear surface. The second operation portion may be located at the second game controller rear surface. An upper surface of the right portion may be located below the first operation portion of the first game controller attached to the first portion in the upward-downward direction and in a shape that extends downward as the upper surface of the right portion extends to the right. An upper surface of the left portion may be located below the second operation portion of the second game controller attached to the first portion in the upward-downward direction and in a shape that extends downward as the upper surface of the left portion extends to the left.

According to the peripheral device according to the above, the first operation portion may be operable in a direction including the left in a rear view. The second operation portion may be operable in a direction including the right in the rear view. A portion in an upper surface of the second portion between the first operation portion and the second operation portion of the first game controller and the second game controller attached to the first portion in a left-right direction may be located below the first operation portion and the second operation portion in the upward-downward direction.

According to the peripheral device according to the above, the first operation portion may be located at the first game controller rear surface and on the right of the first projecting portion in a rear view and can be pressed down toward the first projecting portion. The second operation portion may be located at the second game controller rear surface and on the left of the second projecting portion in the rear view and can be pressed down toward the second projecting portion. An upper surface of the right portion may be located below the rear end of the first projecting portion of the first game controller attached to the first portion and the first operation portion in the upward-downward direction and in a shape that extends downward as the upper surface of the right portion extends to the right. An upper surface of the left portion may be located below the rear end of the second projecting portion of the second game controller attached to the first portion and the second operation portion in the upward-downward direction and in a shape that extends downward as the upper surface of the left portion extends to the left.

According to the peripheral device according to the above, a portion in an upper surface of the second portion between the first operation portion and the second operation portion of the first game controller and the second game controller attached to the first portion in a left-right direction may be located below the first operation portion and the second operation portion in the upward-downward direction.

A peripheral device according to the present disclosure is a peripheral device to which a first game controller and a second game controller are removably attachable. The first game controller is removably attachable to a game device right side surface which is a right side surface of a game device, and the first game controller includes a first input portion located at a first game controller front surface, a first projection located at a first game controller side surface, the first projection being to be matched with a game device right recess located at the game device right side surface, a first operation portion, and a first pusher that projects from a top surface of the first projection as a result of an operation on the first operation portion. The second game controller is removably attachable to a game device left side surface which is a left side surface of the game device, and the second game controller includes a second input portion located at a second game controller front surface, a second projection located at a second game controller side surface, the second projection being to be matched with a game device left recess located at the game device left side surface, a second operation portion, and a second pusher that projects from a top surface of the second projection as a result of an operation on the second operation portion. The peripheral device includes a first portion to which the first game controller and the second game controller are removably attachable and a second portion fixed to a rear surface of the first portion, the second portion being to be held by both hands of a user. The first portion is provided with a first recess with which the first projection is to be matched, the first recess being located at a right side surface, and a second recess with which the second projection is to be matched, the second recess being located at a left side surface. The second portion includes a right portion which is a portion on right of the right side surface of the first portion in a front view, the right portion including a portion to be held by a right hand of the user, and a left portion which is a portion on left of the left side surface of the first portion in the front view, the left portion including a portion to be held by a left hand of the user. The right portion is in such a shape that the right portion does not cover the first game controller attached to the first portion in a right side view but the right portion is covered at least in part with the first game controller attached to the first portion in a top view. The left portion is in such a shape that the left portion does not cover the second game controller attached to the second portion in a left side view but the left portion is covered at least in part with the second game controller attached to the second portion in the top view. The first recess is provided with a first abutment area on which the first pusher that projects is to abut. The second recess is provided with a second abutment area on which the second pusher that projects is to abut.

According to the peripheral device according to the above, the first recess may be provided with the first abutment area above a center in an upward-downward direction. The second recess may be provided with the second abutment area above the center in the upward-downward direction.

According to the peripheral device according to the above, the first operation portion may be located at a first game controller rear surface. The second operation portion may be located at a second game controller rear surface. An upper surface of the right portion may be located below the first operation portion of the first game controller attached to the first portion in the upward-downward direction and in a shape that extends downward as the upper surface of the right portion extends to the right. An upper surface of the left portion may be located below the second operation portion of the second game controller attached to the first portion in the upward-downward direction and in a shape that extends downward as the upper surface of the left portion extends to the left.

According to the peripheral device according to the above, the first operation portion may be operable in a direction including the left in a rear view. The second operation portion may be operable in a direction including the right in the rear view. A portion in an upper surface of the second portion between the first operation portion and the second operation portion of the first game controller and the second game controller attached to the first portion in a left-right direction may be located below the first operation portion and the second operation portion in the upward-downward direction.

According to the peripheral device according to the above, the first operation portion may be located at the first game controller rear surface and operable in a direction including the left in a rear view. The second operation portion may be located at the second game controller rear surface and operable in a direction including the right in the rear view. A portion in an the upper surface of the second portion between the first operation portion and the second operation portion of the first game controller and the second game controller attached to the first portion in a left-right direction may be located below the first operation portion and the second operation portion in the upward-downward direction.

According to the peripheral device according to the above, the first recess may have such a depth that the entirety of the top surface of the first projection is kept accommodated in the first recess when the first pusher of the first game controller attached to the first portion projects. The second recess may have such a depth that the entirety of the top surface of the second projection is kept accommodated in the second recess when the second pusher of the second game controller attached to the first portion projects.

According to the peripheral device according to the above, each of the first projection and the second projection may include a first projecting portion and a second projecting portion that project from an outer peripheral surface. The first projecting portion may be located above the second projecting portion in the upward-downward direction when the first game controller and the second game controller are attached to the first portion. The first recess may have such a depth that at least a part of the second projecting portion of the first game controller is kept accommodated in the first recess when the first pusher of the first game controller attached to the first portion projects. The second recess may have such a depth that at least a part of the second projecting portion of the second game controller is kept accommodated in the second recess when the second pusher of the second game controller attached to the first portion projects.

According to the peripheral device according to the above, the first recess may have such a depth that the entirety of the first projecting portion of the first game controller is exposed in the first recess when the first pusher of the first game controller attached to the first portion projects. The second recess may have such a depth that the entirety of the first projecting portion of the second game controller is exposed in the second recess when the second pusher of the second game controller attached to the first portion projects.

According to the peripheral device according to the above, the first projecting portion may be formed by the outer peripheral surface of the first projection and the second projecting portion may be formed by the outer peripheral surface of the second projection.

The peripheral device according to the above may further include a first magnet and a second magnet located below the first magnet, the first magnet and the second magnet being located in each of the first recess and the second recess, the first magnet and the second magnet attracting the first game controller and the second game controller by magnetic force. The first abutment area and the second abutment area may be located above the first magnet in the upward-downward direction.

The peripheral device according to the above may further include terminals located in the first recess and the second recess, respectively, each of the terminals being located between the first magnet and the second magnet in the upward-downward direction, the terminals being connectable to the first game controller and the second game controller, respectively.

The peripheral device according to the above may further include terminals located in the first recess and the second recess, respectively, the terminals being located at centers in the upward-downward direction of the first recess and the second recess, respectively, the terminals being connectable to the first game controller and the second game controller, respectively.

According to the peripheral device according to the above, the first portion may be provided with a plurality of first holes aligned in the upward-downward direction, the plurality of first holes passing through a front surface of the first portion and a front-surface-side inner peripheral surface of the first recess, light emitted from the first game controller attached to the first portion passing through the plurality of first holes, and a plurality of second holes aligned in the upward-downward direction, the plurality of second holes passing through the front surface of the first portion and a front-surface-side inner peripheral surface of the second recess, light emitted from the second game controller attached to the first portion passing through the plurality of second holes.

According to the peripheral device according to the above, a depth of the first recess may be smaller than a largest height of the first projection from the first game controller side surface. A depth of the second recess may be smaller than a largest height of the second projection from the second game controller side surface.

According to the peripheral device according to the above, the right side surface of the first portion may be configured not to abut on the first game controller side surface of the first game controller attached to the first portion. The left side surface of the first portion may be configured not to abut on the second game controller side surface of the second game controller attached to the first portion.

According to the peripheral device according to the above, the first portion may be provided with a plurality of first holes aligned in an upward-downward direction, the plurality of first holes passing through a front surface of the first portion and a front-surface-side inner peripheral surface of the first recess, light emitted from the first game controller attached to the first portion passing through the plurality of first holes, and a plurality of second holes aligned in the upward-downward direction, the plurality of second holes passing through the front surface of the first portion and a front-surface-side inner peripheral surface of the second recess, light emitted from the second game controller attached to the first portion passing through the plurality of second holes. The peripheral device may include a first terminal at the same position as at least one of the plurality of first holes in the upward-downward direction, the first terminal being located in the first recess, the first terminal being connectable to the first game controller, and a second terminal at the same position as at least one of the plurality of second holes in the upward-downward direction, the second terminal being located in the second recess, the second terminal being connectable to the second game controller.

### BRIEF DESCRIPTION OF DRAWINGS

Fig. 1 is a schematic front view showing a configuration of a peripheral device according to the present embodiment.
Fig. 2 is a schematic right side view showing the configuration of the peripheral device according to the present embodiment.
Fig. 3 is a schematic front view showing a configuration of an exemplary information device apparatus.
Fig. 4 is a schematic front view showing a state in which each of a first game controller and a second game controller is removed from a game device.
Fig. 5 is a diagram showing an exemplary state in which an information processing apparatus is operated as being held.
Fig. 6 is a diagram showing an exemplary state in which a controller is operated as being horizontally held.
Fig. 7 is a diagram showing an exemplary state in which the controller is operated as being vertically held.
Fig. 8 is a schematic perspective assembly diagram showing a configuration of a right side surface of the game device.
Fig. 9 is a schematic perspective exploded view showing the configuration of the right side surface of the game device.
Fig. 10 is a schematic six-view drawing showing a configuration of the first game controller.
Fig. 11 is a schematic perspective view showing the configuration of the first game controller.
Fig. 12 is a schematic perspective exploded view including a projection.
Fig. 13 is a partial schematic cross-sectional view along the line XIII-XIII in Fig. 11.
Fig. 14 is a schematic cross-sectional view showing a state in which an upper-surface button (right) is attracted to a first game-device-side magnetic element.
Fig. 15 is a schematic diagram when a direction toward a top surface is viewed from the inside of the projection and a schematic plan view showing a configuration of a first elastically deformable body.
Fig. 16 is a schematic cross-sectional view showing a state in which a game controller is attached to the game device.
Fig. 17 is a schematic rear view showing a configuration of the game controller.
Fig. 18 is a schematic cross-sectional view along the line XVIII-XVIII in Fig. 17.
Fig. 19 is a schematic cross-sectional view showing a state in which an operation portion is operated.
Fig. 20 is a schematic cross-sectional view along the line XX-XX in Fig. 11.
Fig. 21 is a six-view schematic diagram showing a configuration of the second game controller.
Fig. 22 is a six-view schematic diagram showing the configuration of the peripheral device according to the present embodiment.
Fig. 23 is a schematic perspective exploded view of the configuration of the peripheral device according to the present embodiment.
Fig. 24 is a schematic front view showing the configuration of the peripheral device according to the present embodiment.
Fig. 25 is a schematic top view showing the configuration of the peripheral device according to the present embodiment.
Fig. 26 is a schematic cross-sectional view along the line XXVI-XXVI in Fig. 24.
Fig. 27A is a schematic rear view showing a configuration in which a rear grip housing of the peripheral device and a fastening member according to the present embodiment are not shown.
Fig. 27B is a schematic rear view showing the configuration of the peripheral device according to the present embodiment.
Fig. 28 is a schematic cross-sectional view along the line XXVIII-XXVIII in Fig. 22.
Fig. 29 is a partial schematic cross-sectional view showing a configuration of a support portion.
Fig. 30 is a partial schematic cross-sectional view along the line XXX-XXX in Fig. 29.
Fig. 31 is a schematic right side view showing a state in which a third housing is removed from Fig. 30.
Fig. 32 is a partial schematic cross-sectional view along the line XXXII-XXXII in Fig. 30.
Fig. 33 is a schematic perspective view showing a configuration of an LED lens.
Fig. 34 is a schematic perspective view showing a configuration of an LED lens cover.
Fig. 35 is a schematic perspective view showing a charging LED component.
Fig. 36 is a schematic diagram showing a state in which the charging LED component is attached to a housing of the support portion.
Fig. 37 is a six-view schematic diagram showing a state in which the first game controller and the second game controller are attached to the peripheral device.
Fig. 38 is a schematic cross-sectional view showing a configuration of a vicinity of a first opposing surface of a right grip.
Fig. 39 is a schematic rear view showing a state of attachment of the first game controller to the peripheral device.
Fig. 40 is a schematic rear view showing a state of removal of the first game controller from the peripheral device.
Fig. 41 is a schematic front view showing a state in which a user operates the first game controller and the second game controller.
Fig. 42 is a partial schematic cross-sectional view showing a state of attachment of the first game controller to the peripheral device when the support portion does not include a tongue-shaped body.
Fig. 43 is a partial schematic cross-sectional view showing a state of attachment of the first game controller to the peripheral device when the support portion includes the tongue-shaped body.
Fig. 44 is a schematic perspective view showing a configuration of the tongue-shaped body of the game device.
Fig. 45 is a partial schematic cross-sectional view showing the configuration of the tongue-shaped body of the game device.
Fig. 46 is a schematic perspective view showing a configuration of a projecting body of the peripheral device according to a modification of the present embodiment.
Fig. 47 is a partial schematic cross-sectional view showing the configuration of the projecting body of the peripheral device according to the modification of the present embodiment.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### <Overview>

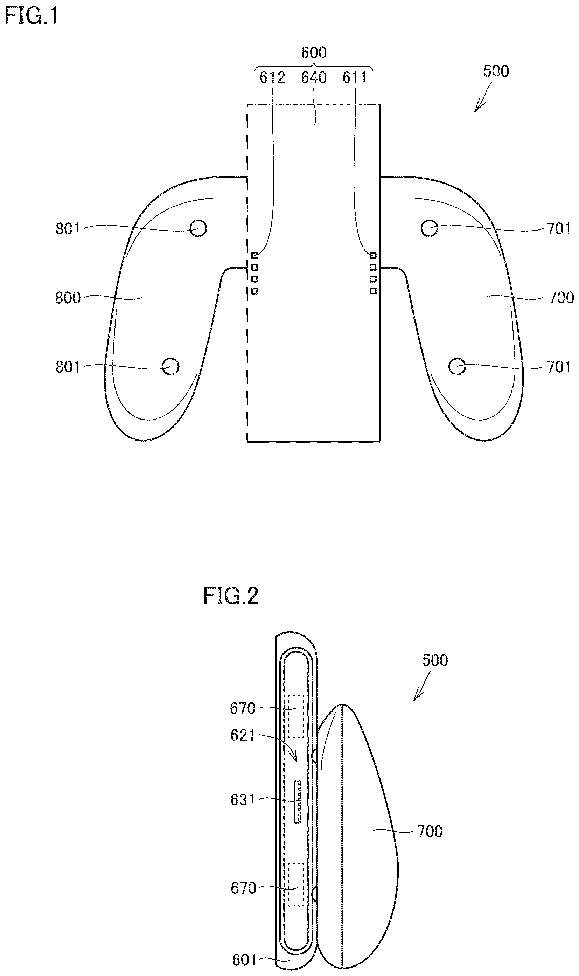

Overview of an exemplary peripheral device according to the present disclosure will initially be described. Fig. 1 is a schematic front view showing a configuration of the peripheral device according to the present embodiment. Fig. 2 is a schematic right side view showing the configuration of the peripheral device according to the present embodiment.

As shown in Figs. 1 and 2, a peripheral device 500 according to the present embodiment includes a support portion 600, a right grip 700, a left grip 800, a right elastic member piece 701, and a left elastic member piece 801. Support portion 600 is provided with a first optical guide path 611 and a second optical guide path 612. A first recess 621 is located at a right side surface of support portion 600 and a second recess 622 is located at a left side surface.

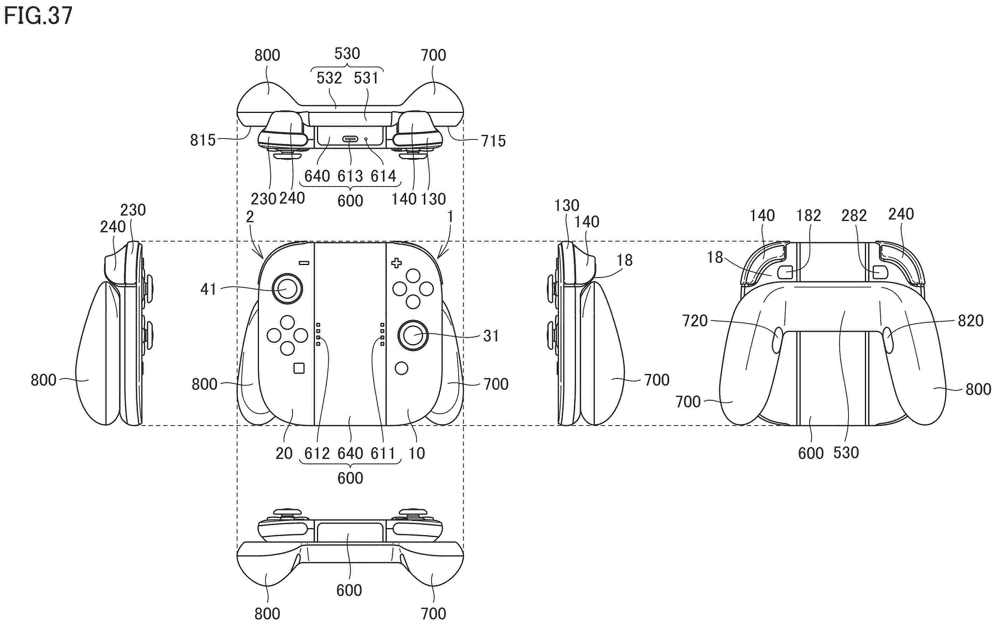

A first game controller 1 and a second game controller 2 which will be described later are removably attachable to peripheral device 500 according to the present embodiment. As shown in Figs. 37, 39, and 40, first game controller 1 and second game controller 2 are attachable to and removable from peripheral device 500.

### <Information Device Apparatus>

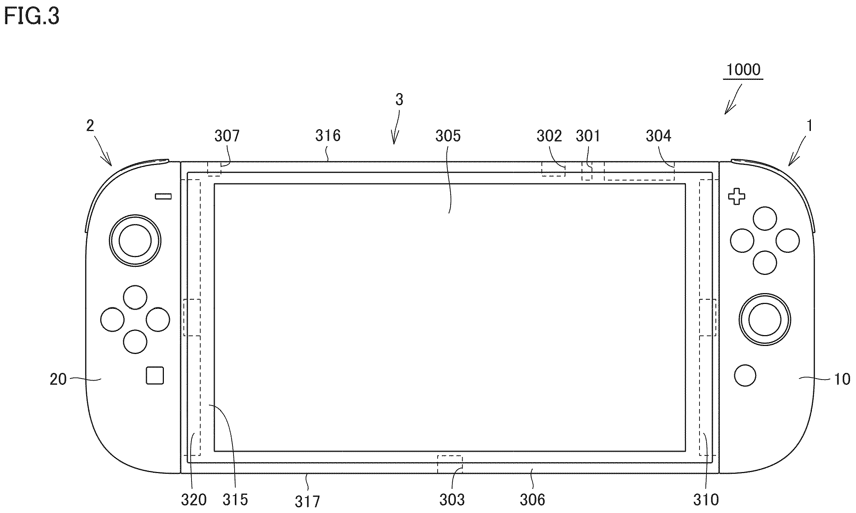

A configuration of an exemplary information device apparatus including the first game controller and the second game controller will now be described. Fig. 3 is a schematic front view showing a configuration of an exemplary information device apparatus.

As shown in Fig. 3, an information device apparatus 1000 includes first game controller 1, second game controller 2, and a game device 3. First game controller 1 or second game controller 2 will simply also collectively be referred to as a game controller below. Each of first game controller 1 and second game controller 2 is an input device. Game device 3 is capable of performing game processing. The game processing is performed based on an input to the game controller. First game controller 1 and second game controller 2 are attachable to and removable from game device 3. In an attached state shown in Fig. 3, first game controller 1 is attached to a right side surface of game device 3 and second game controller 2 is attached to a left side surface of game device 3.

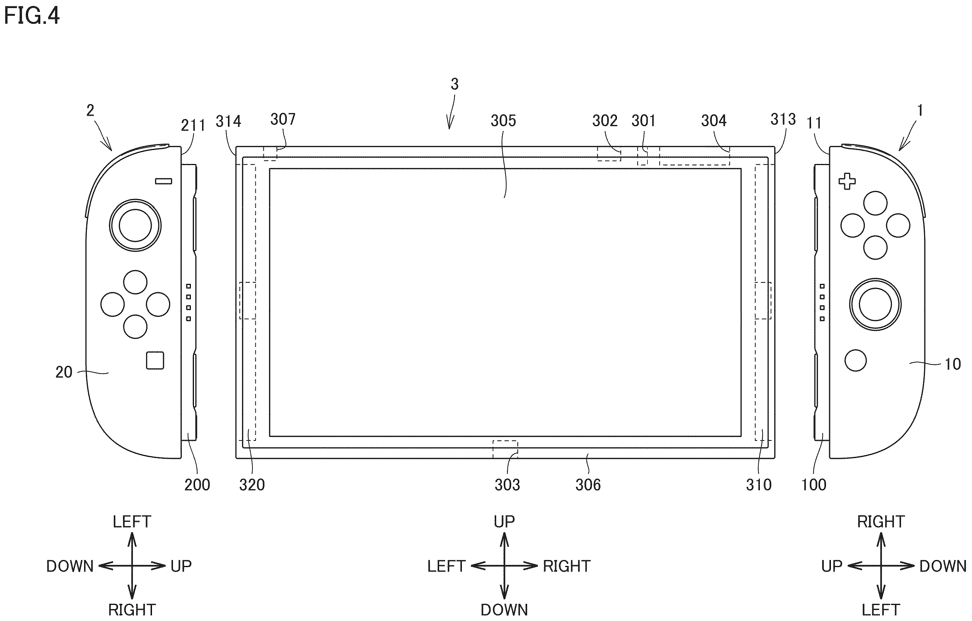

Fig. 4 is a schematic front view showing a state in which each of first game controller 1 and second game controller 2 is removed from game device 3.

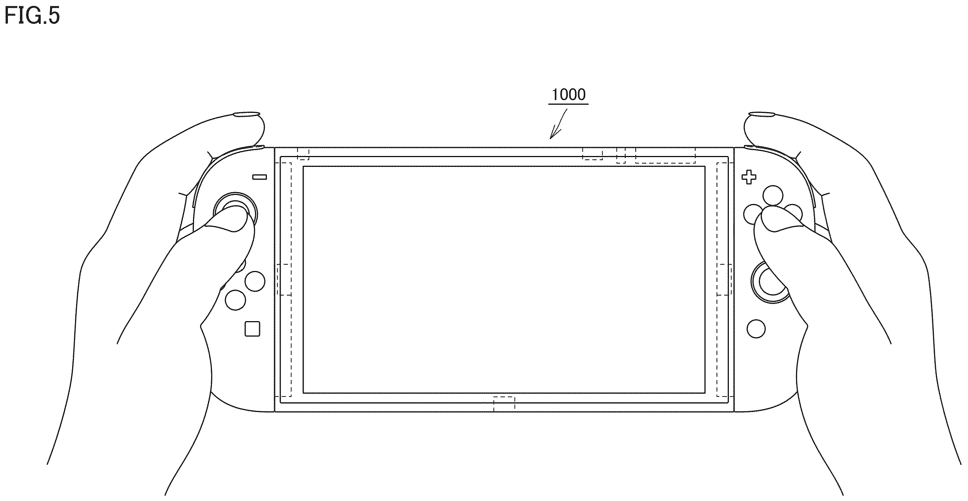

As shown in Figs. 5, 6, and 7, the game controller can be used in each of a state in which the game controller is attached to game device 3 and a state in which the game controller is not attached to game device 3.

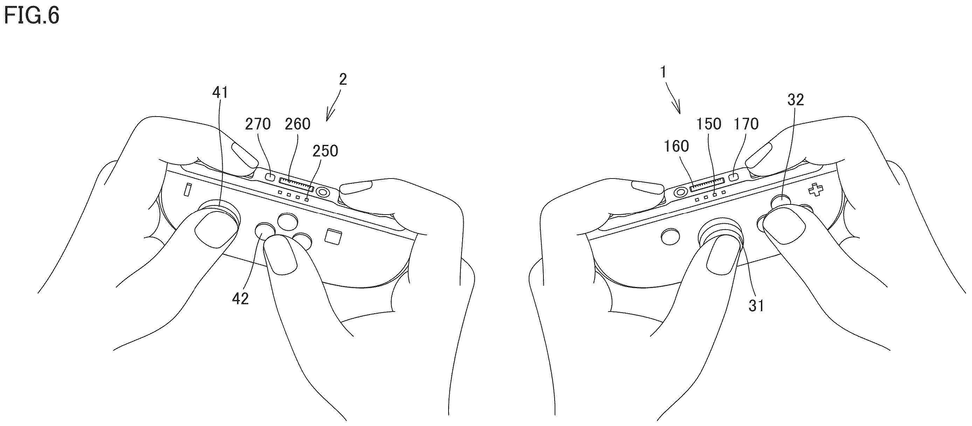

As shown in Fig. 5, while the game controller is attached to game device 3, the game controller is used in such a manner that a longitudinal direction thereof extends, for example, in an upward-downward direction. As shown in Fig. 6, on the other hand, while the game controller is not attached to game device 3, the game controller is used in such a manner that the longitudinal direction thereof extends in a left-right direction (from another point of view, a direction in parallel to the ground).

In the example shown in Fig. 6, different users operate first game controller 1 and second game controller 2, respectively.

When directions (upward-downward and left-right directions) of the game controller are mentioned in the description hereafter, description will be given, with a state of use in which the game controller is not attached to game device 3 and the longitudinal direction extends in the left-right direction being defined as the reference. When directions of game device 3 and directions of information device apparatus 1000 in which the game controller is attached to game device 3 are mentioned in the description hereafter, description will be given, with a state of use in which a direction of connection between side surfaces of game device 3 to which the game controllers are attached extends in the left-right direction being defined as the reference.

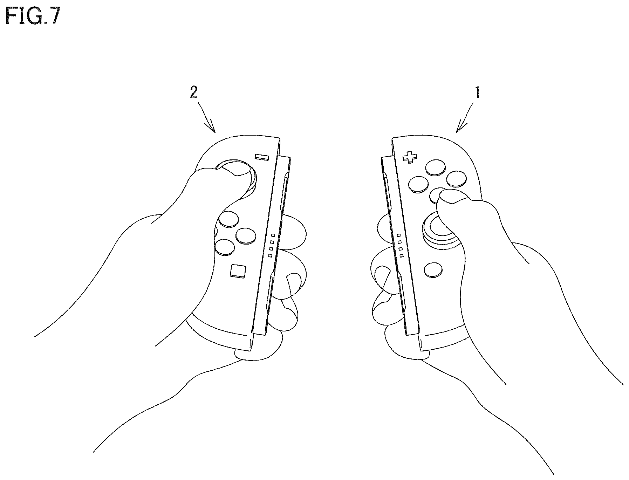

As shown in Fig. 7, while the game controller is not attached to game device 3, the game controller is used also in such a manner that the longitudinal direction thereof extends, for example, in the upward-downward direction (from another point of view, a direction perpendicular to the ground) or a front-rear direction. In the example shown in Fig. 7, a single user operates both of first game controller 1 and second game controller 2. Different users may operate respective controllers.

In the following, the state of use shown in Fig. 5 is also called an integrally held state, the state of use shown in Fig. 6 is also called a horizontally held state, and the state of use shown in Fig. 7 is also called a vertically held state.

As shown in Fig. 4, first game controller 1 includes a projection 100 at an upper side surface 11, projection 100 projecting from the upper side surface. Upper side surface 11 of first game controller 1 is a side surface that extends along the longitudinal direction of first game controller 1. Projection 100 extends in the longitudinal direction of upper side surface 11. Projection 100 is attached to a controller housing 10. Similarly, second game controller 2 includes a projection 200 at an upper side surface 211, projection 200 projecting from the upper side surface and extending in the longitudinal direction of the upper side surface. Upper side surface 211 of second game controller 2 is a side surface that extends along the longitudinal direction of second game controller 2. Projection 200 extends in the longitudinal direction of upper side surface 211. Projection 200 is attached to a controller housing 20.

As shown in Figs. 3 and 4, game device 3 is provided with a game-device-side recess 310 at a main body right side surface 313. Game-device-side recess 310 extends in the longitudinal direction of main body right side surface 313. Game-device-side recess 310 extends along the upward-downward direction of main body right side surface 313. A main body left side surface 314 of game device 3 is provided with a game-device-side recess 320. Game-device-side recess 320 extends in the longitudinal direction of main body left side surface 314. Game-device-side recess 320 extends along the upward-downward direction of main body left side surface 314 of game device 3. Game-device-side recess 310, 320 is a recess in an elongated shape that extends along the longitudinal direction of main body right side surface 313 or main body left side surface 314.

Game-device-side recess 310, 320 is a game device attachment portion provided in game device 3 of the information device apparatus. As shown in Fig. 3, first game controller 1 is attached to game device 3 such that projection 100 is matched with game-device-side recess 310. First game controller 1 is attached to game device 3 such that upper side surface 11 of first game controller 1 is opposed to main body right side surface 313 of game device 3 and the longitudinal direction of upper side surface 11 of first game controller 1 extends along the longitudinal direction of main body right side surface 313 of game device 3. Similarly, second game controller 2 is attached to game device 3 such that projection 200 is matched with game-device-side recess 320. Second game controller 2 is attached to game device 3 such that upper side surface 211 of second game controller 2 is opposed to main body left side surface 314 of game device 3 and the longitudinal direction of upper side surface 211 of second game controller 2 extends along the longitudinal direction of main body left side surface 314 of game device 3.

Each of first game controller 1 and second game controller 2 includes a joystick and a set of four buttons. In attachment to game device 3, first game controller 1 is attached such that the four buttons are located above and the joystick is located below. Second game controller 2 is attached to game device 3, on the other hand, such that the joystick is located above and the four buttons are located below.

The information device apparatus may be able to perform a function other than a game. The information device apparatus may include a casing where a device capable of executing a game can be accommodated. First game controller 1 and second game controller 2 may be attached to a component other than game device 3 of the information device apparatus. For example, first game controller 1 and second game controller 2 may be attachable to each other.

### <Game Device>

As shown in Fig. 3, a display 305 is located at a main body front surface 315 of game device 3.

Game device 3 includes a lower terminal 303. Lower terminal 303 is located at a main body lower side surface 317 of game device 3. Lower terminal 303 may be located at a center in the left-right direction of main body lower side surface 317. Lower terminal 303 is, for example, a terminal for communication with an external apparatus. Lower terminal 303 implements, for example, a universal serial bus (USB) connector. Game device 3 may externally be supplied with electric power through lower terminal 303. Game device 3 may output an image to the outside through lower terminal 303. When game device 3 is placed at a cradle from a side of the main body lower side surface, lower terminal 303 may be connected to a terminal of the cradle.

Game device 3 includes an upper terminal 302 at a main body upper side surface 316. Game device 3 may include a power button 307, a storage medium slot 304, or an audio input and output terminal 301 at main body upper side surface 316. Game device 3 may perform game processing by executing a game application stored in a storage medium inserted in storage medium slot 304.

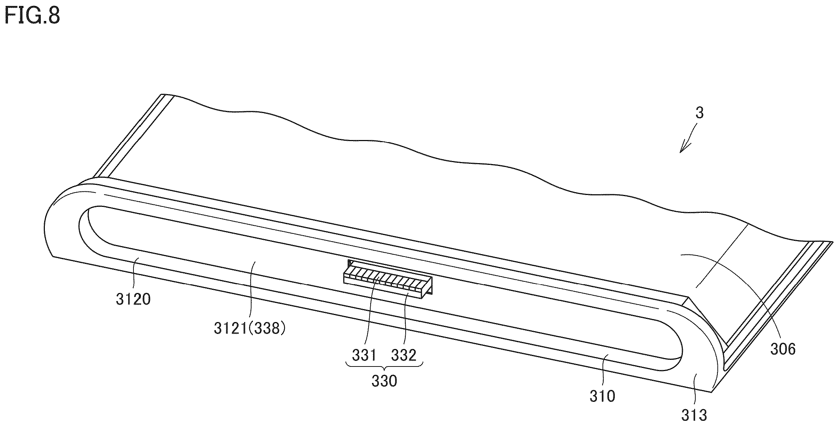

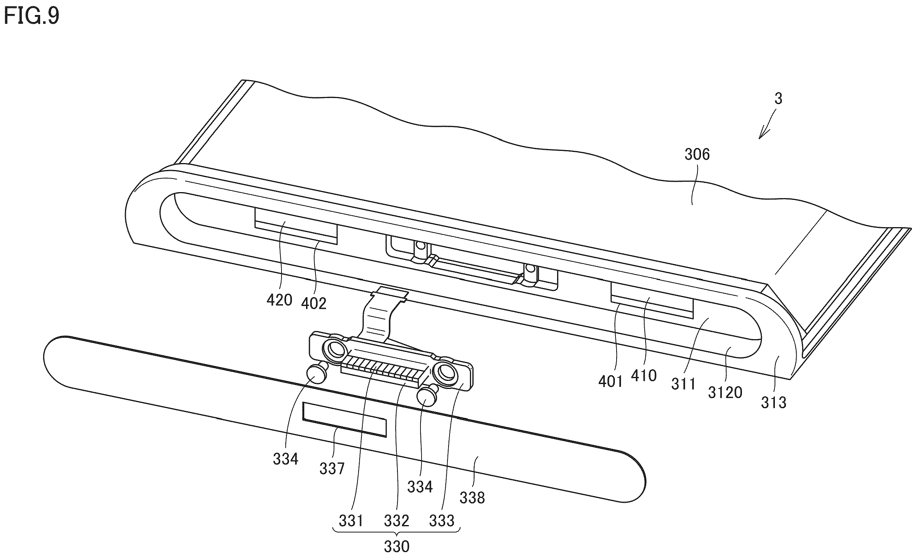

Fig. 8 is a schematic perspective assembly diagram showing a configuration of the right side surface of game device 3. Fig. 9 is a schematic perspective exploded view showing the configuration of the right side surface of game device 3. Game device 3 is similar in configuration also on a side of a left side surface.

As shown in Fig. 8, game-device-side recess 310 is located at main body right side surface 313 of game device 3. Game-device-side recess 310 is a recessed portion in main body right side surface 313. Game-device-side recess 310 includes a game-device-side bottom surface 3121 and a game-device-side inner peripheral surface 3120 that surrounds game-device-side bottom surface 3121. In the present example, a portion of a main body housing 306 that forms the right side surface of game device 3 is recessed to form game-device-side inner peripheral surface 3120 and a base surface (a base surface 311 which will be described later) which serves as the base of the bottom surface. As a cover member 338 is placed over the base surface, a surface of cover member 338 forms game-device-side bottom surface 3121 of game-device-side recess 310. Cover member 338 does not have to be provided, and in that case, a bottom surface formed by main body housing 306 defines game-device-side bottom surface 3121 of game-device-side recess 310.

As shown in Fig. 8, game-device-side bottom surface 3121 of game-device-side recess 310 extends in the longitudinal direction of main body right side surface 313. A side at a front surface side of game-device-side bottom surface 3121 and a side at a rear surface side thereof are substantially linear and extend substantially in parallel. In the present embodiment, an upper area and a lower area of game-device-side bottom surface 3121 decrease in width toward respective ends. More specifically, the upper area and the lower area of game-device-side bottom surface 3121 decrease in width in a curved manner. The upper area and the lower area of game-device-side bottom surface 3121 may linearly decrease in width. Alternatively, the upper area and the lower area of game-device-side bottom surface 3121 may be constant in width. Alternatively, only one of the upper area and the lower area of game-device-side bottom surface 3121 may decrease in width toward the end.

As shown in Fig. 9, game device 3 includes a first plug connector 330, cover member 338, a set of shoulder screws 334, and two game-device-side magnetic elements 410 and 420 located along the longitudinal direction of game-device-side recess 310. First game-device-side magnetic element 410 is arranged above and second game-device-side magnetic element 420 is arranged below. First game-device-side magnetic element 410 is arranged in an area above a center in the longitudinal direction of main body right side surface 313 and second game-device-side magnetic element 420 is arranged in an area below the center. Game-device-side magnetic elements 410 and 420 each include a magnet and yokes between which the magnet lies. Game-device-side magnetic elements 410 and 420 do not have to include the yoke. Game-device-side magnetic elements 410 and 420 may both be arranged in an area above or below.

As shown in Fig. 9, a portion of main body housing 306 that forms the right side surface is recessed to form base surface 311 that serves as the base of the bottom surface of game-device-side recess 310 and game-device-side inner peripheral surface 3120. As described above, the surface of cover member 338 placed on base surface 311 defines game-device-side bottom surface 3121. Base surface 311 and cover member 338 are substantially the same in shape. Though game-device-side inner peripheral surface 3120 surrounds the entire periphery of base surface 311 in the present example, it does not have to surround the entire periphery. In the present example, game-device-side recess 310 opens to the right and does not open in the upward-downward direction and the front-rear direction. Game-device-side inner peripheral surface 3120 is contiguous to base surface 311 and main body right side surface 313. Game-device-side inner peripheral surface 3120 has an upper end (a right side end of game device 3) connected to main body right side surface 313. From another point of view, game-device-side recess 310 is recessed relative to main body right side surface 313. In the present example, game-device-side inner peripheral surface 3120 is generally in a shape of an outer peripheral surface of a frustum of a pyramid with game-device-side bottom surface 3121 being defined as an upper base side. In other words, game-device-side inner peripheral surface 3120 is in a shape spreading from a bottom surface toward the upper end. As will be described later, an end area in the longitudinal direction may be rounded. From another point of view, when game-device-side recess 310 is viewed from an opening side (that is, the right side), game-device-side bottom surface 3121 and game-device-side inner peripheral surface 3120 that surrounds game-device-side bottom surface 3121 are seen. In another manner, game-device-side inner peripheral surface 3120 may extend in parallel to the left-right direction. The shape of game-device-side recess 310 is not limited to the shape of the outer peripheral surface of the frustum of the pyramid. By way of example, game-device-side recess 310 may be in a shape of an outer peripheral surface of a frustum of a cone or an outer peripheral surface of a parallelepiped. Game-device-side inner peripheral surface 3120 may be in a shape not spreading outward from game-device-side bottom surface 3121 to the upper end. In other words, game-device-side inner peripheral surface 3120 may be inclined outward in a direction toward the upper end or does not have to be inclined inward and outward. From another point of view, when game-device-side recess 310 is viewed from the opening side (that is, the right side), the entirety of at least game-device-side bottom surface 3121 may be seen. An opposite side of game device 3 is also similarly configured.

Base surface 311 is provided with a first hole 401 and a second hole 402 for accommodation of game-device-side magnetic elements 410 and 420. First hole 401 and second hole 402 are aligned in the longitudinal direction of main body right side surface 313. In other words, first hole 401 and second hole 402 are aligned in the longitudinal direction of base surface 311. Though details will be described later, first game controller 1 also includes a magnetic element. As magnetic elements at a side of first game controller 1 are attracted to game-device-side magnetic elements 410 and 420, the game controller is attached to game device 3. As the entirety or a part of game-device-side magnetic elements 410 and 420 enter respective holes 401 and 402 from the inside of main body housing 306, the magnetic elements at the side of first game controller 1 attached to game device 3 come closer to game-device-side magnetic elements 410 and 420 and magnetic force for attraction can be strengthened.

First game-device-side magnetic element 410, second game-device-side magnetic element 420, first hole 401, and second hole 402 are covered with cover member 338. Specifically, first game-device-side magnetic element 410 and second game-device-side magnetic element 420 are covered with cover member 338 that defines game-device-side bottom surface 3121 of game-device-side recess 310. In the present example, first game-device-side magnetic element 410 and second game-device-side magnetic element 420 are buried in game-device-side bottom surface 3121 of game-device-side recess 310 owing to cover member 338 as a manner of provision of first game-device-side magnetic element 410 and second game-device-side magnetic element 420 at the bottom of game-device-side recess 310. In another manner of provision of first game-device-side magnetic element 410 and second game-device-side magnetic element 420 at the bottom of game-device-side recess 310, first game-device-side magnetic element 410 and second game-device-side magnetic element 420 may be arranged on game-device-side bottom surface 3121 of game-device-side recess 310. First game-device-side magnetic element 410 and second game-device-side magnetic element 420 may be arranged as being exposed at a surface of a hole located in game-device-side bottom surface 3121 of game-device-side recess 310 or a position deep in the hole.

Second game-device-side magnetic element 420 is similar in configuration to first game-device-side magnetic element 410. A part of second game-device-side magnetic element 420 is accommodated in second hole 402 similarly to first game-device-side magnetic element 410.

As shown in Fig. 9, first plug connector 330 includes a connector support portion 333, a tongue-shaped body 332 that projects from connector support portion 333, and a main body first terminal 331 located along a surface of tongue-shaped body 332. Connector support portion 333 and tongue-shaped body 332 may be integrated with or separate from each other.

First plug connector 330 is located between first game-device-side magnetic element 410 and second game-device-side magnetic element 420 in the longitudinal direction of main body right side surface 313 when viewed in a direction toward the bottom surface of game-device-side recess 310.

### <Controller>

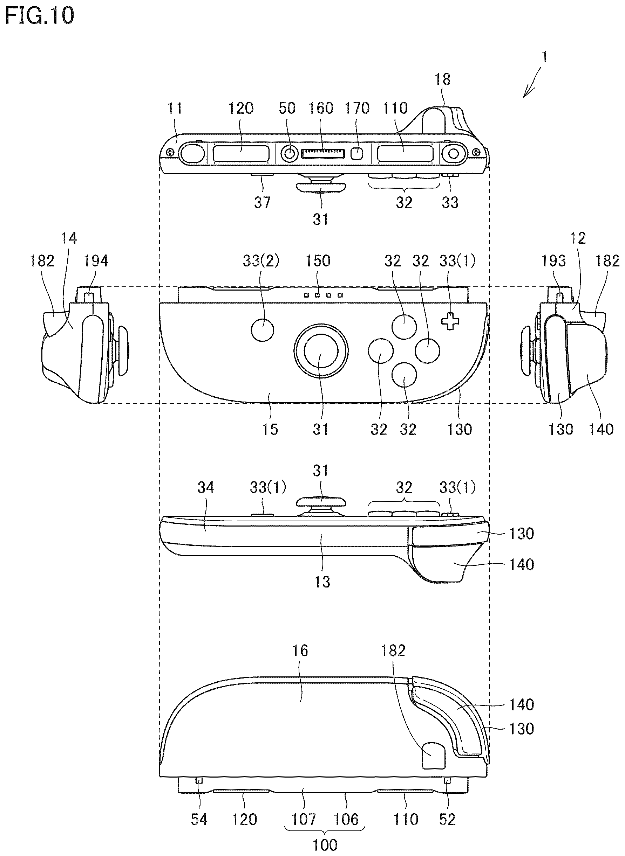

Fig. 10 is a schematic six-view drawing showing a configuration of first game controller 1.

As shown in Fig. 10, first game controller 1 in the present embodiment includes at a front surface thereof, a joystick 31 which represents an exemplary direction input portion, a set of four buttons 32 aligned in a cross shape, a + button 33 (1), and a home button 33 (2). First game controller 1 includes an upper-surface button (right) 110 and an upper-surface button (left) 120, a synchronization button 50, a shoulder button (right) 130, and a Z shoulder button (right) 140. Though details will be described later, upper-surface button (right) 110, upper-surface button (left) 120, and synchronization button 50 are located at projection 100. These are exemplary input portions and all of them do not have to be provided. First game controller 1 may include another input portion such as a touch pad or a pressure sensor instead of or in addition to these input portions. Each of upper-surface button (right) 110 and upper-surface button (left) 120 is an attraction button to be attracted by magnetic force.

While first game controller 1 is attached to game device 3, operation information from the input portion is transmitted to main body first terminal 331 of game device 3 through a first terminal 160 which will be described later and processed in accordance with a program by a CPU of game device 3. In a manner of use where the game controller is not attached to game device 3, operation information from the input portion is transmitted to the CPU of game device 3 through a wireless chip included in the game controller and a wireless chip included in game device 3. The game device does not have to include first terminal 160 and main body first terminal 331, and in that case, information is transmitted through the wireless chips also while the game controller is attached to game device 3.

As shown in Fig. 10, first game controller 1 includes a front surface 15, a rear surface 16, upper side surface 11, a right side surface 12, a lower side surface 13, and a left side surface 14. Front surface 15 is a surface opposed to a user who uses first game controller 1 in the integrally held state, the horizontally held state, and the vertically held state. Rear surface 16 is located opposite to front surface 15. Front surface 15 and rear surface 16 are each contiguous to upper side surface 11, right side surface 12, lower side surface 13, and left side surface 14.

A direction of normal to upper side surface 11 is also referred to as a first direction R1. First direction R1 is a direction in which projection 100 projects and also referred to as an upper side or a projection direction or an upward direction. Projection 100 is located at a side of first direction R1 of upper side surface 11. A direction opposite to first direction R1 is also referred to as a third direction R3. Third direction R3 is also referred to as a lower side or a downward direction. First direction R1 and third direction R3 are also collectively referred to as an upward-downward direction.

A direction toward right side surface 12 which is perpendicular to the upward-downward direction is also referred to as a second direction R2. Second direction R2 is also referred to as a right side or a right direction. A direction opposite to second direction R2 is also referred to as a fourth direction R4. Fourth direction R4 is also referred to as a left side or a left direction. Second direction R2 and fourth direction R4 are also collectively referred to as a left-right direction.

A direction normal to front surface 15 is also referred to as a fifth direction R5. Fifth direction R5 is also referred to as a front surface side or a front direction. A direction opposite to the fifth direction is also referred to as a sixth direction R6. Sixth direction R6 is also referred to as a rear surface side or a rear direction. Fifth direction R5 and sixth direction R6 are also collectively referred to as a front-rear direction.

As described above, upper side surface 11 is located at a side of the upward direction with respect to the front surface. Upper side surface 11 is a side surface that extends in the longitudinal direction of front surface 15. In the present embodiment, the longitudinal direction of front surface 15 corresponds to the left-right direction of front surface 15. Upper side surface 11 extends in the left-right direction. Lower side surface 13 is located opposite to upper side surface 11. Lower side surface 13 is located at a side of third direction R3, of upper side surface 11. Right side surface 12 is a side surface that is contiguous to a right end of upper side surface 11 and extends in a direction away from upper side surface 11. An end of the right side surface distant from upper side surface 11 is contiguous to a right end of lower side surface 13. Left side surface 14 is a side surface that is contiguous to a left end of upper side surface 11 and extends in a direction away from upper side surface 11. An end of the left side surface distant from upper side surface 11 is contiguous to a left end of lower side surface 13. The right side surface is located at a side of second direction R2, of the left side surface.

As shown in Fig. 10, front surface 15 of the first game controller is provided with + button 33 (1), the set of four buttons 32, joystick 31, and home button 33 (2) from the right side in the left-right direction. One set of four buttons 32 and joystick 31 are adjacent to each other. In the upward-downward direction, joystick 31 is located between an upper button and a lower button in the set of four buttons 32. In the left-right direction, joystick 31 is located substantially on an extension of a straight line that connects the button at the right side and the button at the left side in the set of four buttons 32 to each other.

Joystick 31 is tiltable in directions around 360 degrees and may be tiltable in any direction including first direction R1 to fourth direction R4. Joystick 31 may be tiltable only in at least one direction. Joystick 31 may be pushed in. Joystick 31 may be slidable in each direction, instead of being tilted. Game device 3 may perform processing in accordance with a signal indicating an operation direction, in an executed program, as a result of an operation on joystick 31 by the user. The game controller may include another input portion instead of or in addition to joystick 31 as the direction input portion. For example, the game controller may include a cross-shaped key or a set of buttons.

Game device 3 may perform prescribed corresponding processing based on pressing down of + button 33 (1) and the set of four buttons 32 in an executed program. Game device 3 may call a home menu in response to an input to home button 33 (2).

Shoulder button (right) 130 is a button, for example, used in the integrally held state, and arranged at an upper right portion of first game controller 1 in the integrally held state. Shoulder button (right) 130 may be used also in the vertically held state. Shoulder button (right) 130 includes a curved operation surface. Shoulder button (right) 130 extends in a direction away from upper side surface 11. Shoulder button (right) 130 is generally located at a lower right portion of first game controller 1 in the horizontally held state. At least a part of shoulder button (right) 130 may be located at right side surface 12. The operation surface of shoulder button (right) 130 is generally curved along the lower right portion of first game controller 1. Game device 3 performs prescribed processing in accordance with pressing down of the shoulder button (right) in an executed program.

Z shoulder button (right) 140 is a button, for example, used in the integrally held state and located at a rear surface side of shoulder button (right) 130. Z shoulder button (right) 140 may be used also in the vertically held state. Z shoulder button (right) 140 includes a curved operation surface. Shoulder button (right) 130 extends in a direction away from upper side surface 11. Z shoulder button (right) 140 is located generally at the lower right portion of first game controller 1 in the horizontally held state. At least a part of Z shoulder button (right) 140 may be located at right side surface 12. At least a part of Z shoulder button (right) 140 may be located at rear surface 16. The operation surface of Z shoulder button (right) 140 is curved generally along the lower right portion of first game controller 1. Z shoulder button (right) 140 may entirely be located at the rear surface. Game device 3 performs prescribed processing based on pressing down of Z shoulder button (right) 140 in an executed program.

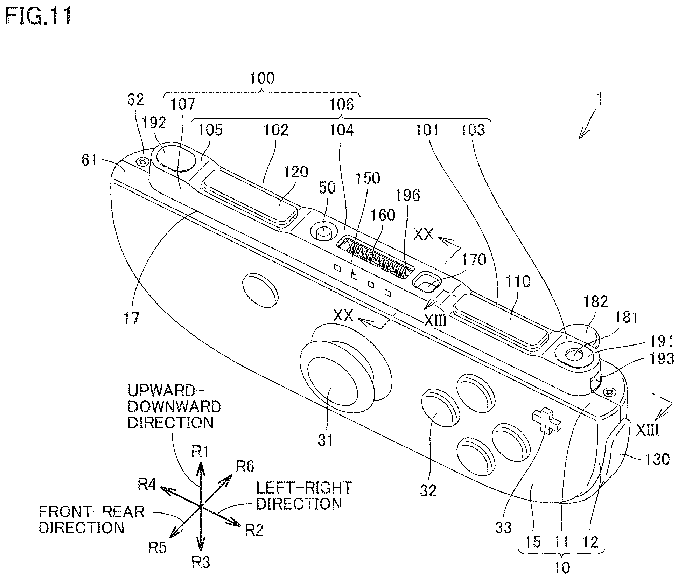

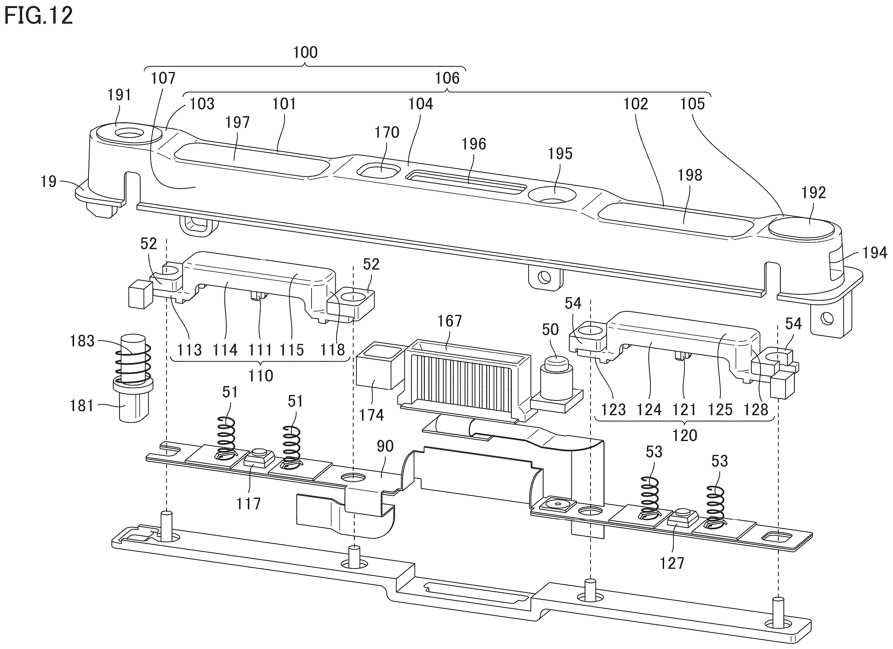

Fig. 11 is a schematic perspective view showing the configuration of first game controller 1. Fig. 12 is a schematic perspective exploded view including projection 100.

As shown in Fig. 11, first game controller 1 includes, in addition to already-described features, a light emission portion 150 that gives a notification of an identification number of the game controller, first terminal 160 connected to main body first terminal 331 of game device 3, a first cushion 191, a second cushion 192, and an operation portion 182 that implements a removal mechanism for removal of projection 100 from game device 3. First terminal 160 is a game controller terminal located at first game controller 1.

As shown in Fig. 11, projection 100 projects upward from upper side surface 11. From another point of view, projection 100 projects in first direction R1 from upper side surface 11. Projection 100 extends along the longitudinal direction of upper side surface 11 (that is, a length in the longitudinal direction is longer than lengths in other directions). Projection 100 does not have to extend in a manner as exactly coinciding with the longitudinal direction of upper side surface 11 but should only extend along the longitudinal direction. In other words, the longitudinal direction of projection 100 extends along the longitudinal direction of upper side surface 11. The longitudinal direction of projection 100 does not have to exactly coincide with the longitudinal direction of upper side surface 11. Projection 100 is a projection in an elongated shape that extends along the longitudinal direction of upper side surface 11. Projection 200 of second game controller 2 is also similar in configuration to projection 100. The configuration of projection 100 of first game controller 1 will mainly be described below.

Projection 100 includes a top surface (which is also referred to as a top surface 106) and a peripheral surface (which is also referred to as an outer peripheral surface 107) that extends downward from the top surface. Top surface 106 is distant from upper side surface 11. Outer peripheral surface 107 is located between top surface 106 and upper side surface 11 and extends from top surface 106 to upper side surface 11. Outer peripheral surface 107 is contiguous to top surface 106 as surrounding an outer edge of top surface 106. Top surface 106 extends along the longitudinal direction of upper side surface 11. Projection 100 extends along the longitudinal direction of upper side surface 11 when viewed in a direction toward top surface 106. A length in the left-right direction of top surface 106 is longer than a length in the front-rear direction of top surface 106. A surface of top surface 106 does not have to be planar as a result of graining, or may be planar.

In the present example, projection 100 is in a shape of a frustum of a pyramid decreasing in cross-section toward top surface 106. An end area in the longitudinal direction may be rounded as will be described later. From another point of view, when projection 100 is viewed from a side of top surface 106 (that is, an upper side), top surface 106 and outer peripheral surface 107 that surrounds top surface 106 are seen. The shape of projection 100 is not limited to the shape of the frustum of the pyramid. By way of example, projection 100 may be in a shape of a frustum of a cone or a parallelepiped. Outer peripheral surface 107 of projection 100 may be in a shape not spreading outward in the direction toward top surface 106. In other words, outer peripheral surface 107 of projection 100 may be inclined inward in the direction toward top surface 106 or may not be inclined inward and outward. For example, outer peripheral surface 107 may extend perpendicularly from upper side surface 11.

A length in the left-right direction of projection 100 (that is, the length in the longitudinal direction of projection 100) may be, for example, at least two times or at least five times as long as the length in the front-rear direction of projection 100. The length in the left-right direction of projection 100 may be, for example, at least fifty percent or at least seventy percent as long as the length in the left-right direction of upper side surface 11. The length in the left-right direction of projection 100 may be, for example, at most twenty-five times or at most fifteen times as long as the length in the front-rear direction of projection 100.

Increase in length in the left-right direction of projection 100 can lead to increase in length in the left-right direction of top surfaces (operation surfaces) of upper-surface button (right) 110 and upper-surface button (left) 120 and better operability. Arrangement of first cushion 191, second cushion 192, and the like at the top surface of projection 100 can also be facilitated.

As shown in Fig. 11, projection 100 lies between a front-surface-side housing 61 and a rear-surface-side housing 62 that form controller housing 10. Upper side surface 11 is provided with a housing opening 17 defined by an end surface of front-surface-side housing 61 and an end surface of rear-surface-side housing 62. Projection 100 projects through housing opening 17 from the inside of controller housing 10.

As shown in Fig. 12, projection 100 includes a projection flange 19. Projection flange 19 extends outward (more specifically, in the left-right direction and the front-rear direction) from a lower end of a wall portion that defines outer peripheral surface 107. An area above projection flange 19 of projection 100 is exposed through housing opening 17. A lower area including projection flange 19 of projection 100 is located inside controller housing 10. Projection flange 19 functions as a stopper that prevents projection 100 from coming off. In another manner, projection 100 may be comprised of a plurality of components. In yet another manner, projection 100 may be a part of controller housing 10. For example, projection 100 may be formed from at least one of front-surface-side housing 61 and rear-surface-side housing 62.

Projection 100 is removably attachable to the game device attachment portion located at the game device. Specifically, projection 100 is configured to be matched with game-device-side recess 310 from the front direction of the recess (a right direction of game device 3). Projection 100 is configured as being compatible with game-device-side recess 310. From another point of view, the shape of top surface 106 and outer peripheral surface 107 of the projection is compatible with the shape of game-device-side bottom surface 3121 and game-device-side inner peripheral surface 3120 of game-device-side recess 310. While first game controller 1 is attached to game device 3, top surface 106 is opposed to game-device-side bottom surface 3121 as abutting thereon or in proximity thereto and outer peripheral surface 107 is opposed to game-device-side inner peripheral surface 3120 as abutting thereon or in proximity thereto. Therefore, for example, when the user attaches first game controller 1 to game device 3, first game controller 1 is guided to an appropriate attachment position. For example, position displacement of first game controller 1 attached to game device 3 in the upward-downward direction or the front-rear direction in game device 3 is suppressed. By way of example, even when force is applied to the game controller in the front-rear direction or the upward-downward direction with an operation input by the user in the integrally held state, great position displacement of the game controller from game device 3 is suppressed.

As shown in Figs. 10 to 12, outer peripheral surface 107 of projection 100 includes a first engagement hole 193 and a second engagement hole 194. First engagement hole 193 is located at one longitudinal end surface of projection 100. Second engagement hole 194 is located at the other longitudinal end surface of projection 100. First engagement hole 193 is different in shape from second engagement hole 194. In the front-rear direction, first engagement hole 193 may be different in length from second engagement hole 194. In the upward-downward direction, first engagement hole 193 may be different in length from second engagement hole 194.

As shown in Figs. 11 and 12, upper-surface button (right) 110 and upper-surface button (left) 120 are located at projection 100. Upper-surface button (right) 110 and upper-surface button (left) 120 are buttons to be pressed down by the user and they are components moved downward by the pressing-down operation. A ground connection portion 51 is connected under upper-surface button (right) 110. A tact switch 117 is located under upper-surface button (right) 110. As upper-surface button (right) 110 is moved downward by the pressing-down operation by the user, tact switch 117 is pressed down by upper-surface button (right) 110. Upper-surface button (right) 110 and tact switch 117 form a button switch. Upper-surface button (left) 120 and a tact switch 127 form a button switch.

Upper-surface button (right) 110 is exposed through a fifth opening 197 located at top surface 106. An exposed portion (see Fig. 10) of each of upper-surface button (right) 110 and upper-surface button (left) 120 forms an operation portion to be pressed down by the user. A ground connection portion 53 is connected under upper-surface button (left) 120. Tact switch 127 is located under upper-surface button (left) 120. Tact switch 127 is pressed down by upper-surface button (left) 120. On signals from tact switch 117 and tact switch 127 are transmitted to game device 3 and processing in accordance with pressing-down of upper-surface button (right) 110 and upper-surface button (left) 120 is performed in an executed program.

Synchronization button 50 is located at projection 100. Synchronization button 50 is pressed down by the user. Synchronization button 50 is located between upper-surface button (right) 110 and upper-surface button (left) 120 in the longitudinal direction of projection 100. More specifically, synchronization button 50 is located between first terminal 160 and upper-surface button (left) 120 in the longitudinal direction of projection 100. Synchronization button 50 may be used for an instruction for setting processing relating to wireless communication between first game controller 1 and game device 3.

First game controller 1 includes a terminal accommodation portion 167. First terminal 160 is located along an inner peripheral surface of terminal accommodation portion 167. First terminal 160 extends along the upward-downward direction. Top surface 106 of projection 100 of first game controller 1 is provided with a terminal opening 196. First terminal 160 is located inside terminal opening 196. Terminal accommodation portion 167 communicates with terminal opening 196. In other words, terminal accommodation portion 167 opens in top surface 106. Therefore, first terminal 160 can be accessed from the outside of top surface 106.

Terminal opening 196 is located at top surface 106, between upper-surface button (right) 110 and upper-surface button (left) 120. Therefore, terminal accommodation portion 167 opens in top surface 106 between upper-surface button (right) 110 and upper-surface button (left) 120. First terminal 160 is located between upper-surface button (right) 110 and upper-surface button (left) 120 in the longitudinal direction of projection 100. First terminal 160 should only at least partially be located between upper-surface button (right) 110 and upper-surface button (left) 120 in the left-right direction, and does not have to be located between upper-surface button (right) 110 and upper-surface button (left) 120 in the front-rear direction and the upward-downward direction. From another point of view, the terminal is located between upper-surface button (right) 110 and upper-surface button (left) 120 when viewed in the direction toward the top surface of projection 100. First terminal 160 is located within projection 100. At least an upper end of first terminal 160 is arranged as high as or below top surface 106, or arranged below top surface 106, in the projection direction of projection 100. The upper end of first terminal 160 may be located between top surface 106 and upper side surface 11. A lower end of first terminal 160 may be arranged under upper side surface 11, that is, inside controller housing 10.

Light emission portion 150 is located at outer peripheral surface 107 of projection 100. More specifically, light emission portion 150 is located at the front surface side of outer peripheral surface 107. From another point of view, an area of outer peripheral surface 107 where light emission portion 150 is located faces the front surface side. When the user views front surface 15 of first game controller 1, the user can visually recognize light from light emission portion 150. Light emission portion 150 typically allows emission of light emitted by an LED to the outside.

Light emission portion 150 can notify the user of prescribed information. Light emission portion 150 may show to the user, information for identification of each game controller when game device 3 communicates with a plurality of game controllers. Light emission portion 150 may show another type of information to the user. The number of light emission portions 150 is not particularly limited, and for example, four light emission portions 150 are provided. In the present embodiment, four light emission portions 150 are arranged as being aligned in the left-right direction. For example, among four light emission portions 150, light emission portion 150 in a portion corresponding to an identification number provided to a game controller may be turned on, or light emission portion(s) 150 in number corresponding to the identification number may be turned on.

Light emission portion 150 is located between upper-surface button (right) 110 and upper-surface button (left) 120 in the longitudinal direction of projection 100. Light emission portion 150 is located at a position superimposed on first terminal 160 in the longitudinal direction of projection 100. From another point of view, when viewed from the front surface side, light emission portion 150 is located under terminal opening 196.

On top surface 106 of projection 100, first cushion 191 and second cushion 192 are placed. A height of a top surface of each of first cushion 191 and second cushion 192 from upper side surface 11 is higher than a height of top surface 106 of projection 100 from upper side surface 11. From another point of view, first cushion 191 and second cushion 192 raise the height of the top surface of projection 100. First cushion 191 and second cushion 192 do not have to be provided.

Game controller 1 may be placed in such a manner that the top surface of projection 100 is opposed to a grounding surface, for example, a desktop. At this time, first cushion 191 and second cushion 192 themselves come in contact with the grounding surface to suppress direct contact with the grounding surface, of a portion of top surface 106 of projection 100 where the cushion is not provided. The top surfaces of first cushion 191 and second cushion 192 come in contact with game-device-side bottom surface 3121 of game-device-side recess 310 while first game controller 1 is attached to game device 3.

Regarding the height from upper side surface 11, the height of the top surfaces of first cushion 191 and second cushion 192 is equal to or higher than a highest height of top surface 106 of projection 100. From another point of view, the top surfaces of first cushion 191 and second cushion 192 are located at an uppermost position in first game controller 1. First cushion 191 is not particularly limited in shape, and it may be, for example, in a circular shape, an elliptical shape, or a rectangular shape. First cushion 191 may be provided with a through hole. First cushion 191 and second cushion 192 may be the same or different in shape.

In the longitudinal direction of projection 100, first cushion 191 is located closer to right side surface 12 than upper-surface button (right) 110. In the longitudinal direction of projection 100, upper-surface button (right) 110 is located between first terminal 160 and first cushion 191.

In the longitudinal direction of projection 100, second cushion 192 is located closer to left side surface 14 than upper-surface button (left) 120. In the longitudinal direction of projection 100, upper-surface button (left) 120 is located between first terminal 160 and second cushion 192. More specifically, in the longitudinal direction of projection 100, upper-surface button (left) 120 is located between synchronization button 50 and second cushion 192.

Projection 100 may be divided. Projection 100 may be comprised, for example, of a plurality of projecting members. An attachment structure of game controller 1 is not limited to projection 100. Game controller 1 may include an attachment portion other than projection 100. In the attachment portion other than projection 100, a first opening 170 for a mouse operation may open in a direction in which upper side surface 11 faces.

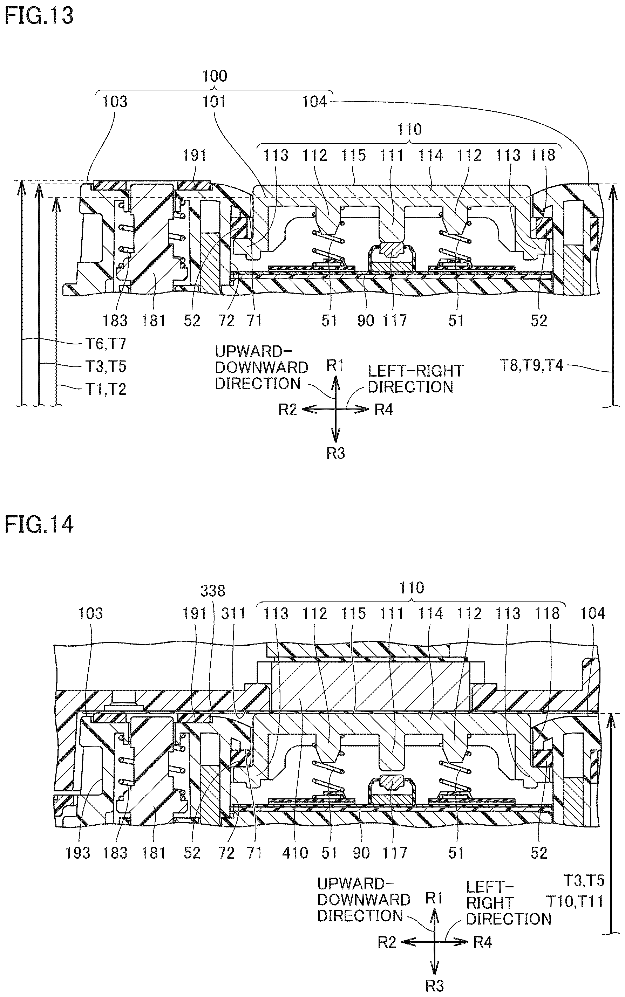

Fig. 13 is a partial schematic cross-sectional view along the line XIII-XIII in Fig. 11. A structure of upper-surface button (right) 110 and surroundings will be described in detail below. In the present embodiment, a structure of upper-surface button (left) 120 and surroundings and the structure of upper-surface button (right) 110 and the surroundings are substantially in symmetry in the left-right direction.

As shown in Fig. 13, a portion of upper-surface button (right) 110 that is exposed at the top surface of projection 100 forms an operation surface 115 which is a surface operated by the user. Upper-surface button (right) 110 includes a main body portion 114 including operation surface 115, a sidewall 118, a flange 113, a first protruding portion 111, and a second protruding portion 112. Operation surface 115 extends along the longitudinal direction of projection 100 at top surface 106 of projection 100. In other words, the longitudinal direction of operation surface 115 extends in the left-right direction. From another point of view, the longitudinal direction of operation surface 115 coincides with the longitudinal direction of projection 100.

In the present embodiment, upper-surface button (right) 110 is comprised of a single component and the entirety thereof is comprised of a material which is not a magnet but is attracted to the magnet. A material for upper-surface button (right) 110 is not particularly limited, and it may be comprised of a soft magnetic material. For example, iron may be adopted as the material for upper-surface button (right) 110, and by way of example, steel plate cold commercial (SPCC) may be adopted by way of example. The material for upper-surface button (right) 110 may contain iron. By way of example, iron to which silicon and/or nickel is added may be adopted as the material for upper-surface button (right) 110. By way of example, upper-surface button (right) 110 may be comprised of a single component made of a resin-molded soft magnetic material.

In another manner, upper-surface button (right) 110 may be comprised of a magnet or a combination of a magnet and a soft magnetic material.

In yet another manner, only a part of upper-surface button (right) 110 may be comprised of a soft magnetic material or a magnet. In this case, at least a portion of projection 100 exposed at top surface 106 may be comprised of a soft magnetic material or a magnet. Alternatively, at least a portion that forms operation surface 115 may be comprised of a soft magnetic material or a magnet.

Operation surface 115 is the operation surface of upper-surface button (right) 110 exposed through fifth opening 197 and pressed down by the user. Operation surface 115 faces first direction R1. Operation surface 115 extends in the left-right direction. A length in the left-right direction of operation surface 115 may be at least ten percent or at least twenty percent as long as the length in the left-right direction of top surface 106 of projection 100. The length in the left-right direction of operation surface 115 may be at least ten percent or at least twenty percent as long as the length in the left-right direction of upper side surface 11 of projection 100.

As shown in Fig. 13, tact switch 117 is located below first protruding portion 111. Tact switch 117 is arranged on a flexible printed circuit 90 (which is also called an FPC 90 below). An upper portion of tact switch 117 is a leaf spring.

While upper-surface button (right) 110 is not pressed down by the user, first protruding portion 111 is supported by tact switch 117 from below. When the user presses down upper-surface button (right) 110, upper-surface button (right) 110 is moved downward from an initial position. First protruding portion 111 of upper-surface button (right) 110 moved downward presses down the upper portion of tact switch 117. The upper portion of tact switch 117 is pressed down to deform as sinking downward. A switch is thus turned on inside the tact switch. When the user removes his/her hand from upper-surface button (right) 110, the upper portion of tact switch 117 returns to an original shape. As the upper portion of tact switch 117 returns to the original shape, first protruding portion 111 is pushed back upward. Therefore, upper-surface button (right) 110 is moved to the initial position. In other words, when upper-surface button (right) 110 is pressed down, tact switch 117 biases upper-surface button (right) 110 in a direction opposite to a direction of pressing-down. Tact switch 117 may bias upper-surface button (right) 110 in the direction opposite to the direction of pressing-down also while upper-surface button (right) 110 is not pressed down.

In another manner, upper-surface button (right) 110 may be biased upward by a biasing body such as a spring. In other words, upper-surface button (right) 110 may be distant from tact switch 117 by being biased upward by the biasing body such as a spring while it is not pressed down by the user. In another manner, a rubber switch may be employed instead of tact switch 117.

Second protruding portion 112 protrudes in third direction R3 from the rear surface of main body portion 114. The number of second protruding portions 112 is not particularly limited. In the present embodiment, two second protruding portions 112 are located with first protruding portion 111 lying therebetween in the left-right direction. A ground electrode is located on FPC 90 below second protruding portion 112. Ground connection portion 51 is located between second protruding portion 112 and the ground electrode in the upward-downward direction. Ground connection portion 51 is conductive. A shape and a material for ground connection portion 51 are not particularly limited, and a coil spring made of iron is employed in the present embodiment. An upper end of ground connection portion 51 is in contact with the rear surface of main body portion 114 and conducts to the main body portion. A lower end of second protruding portion 112 is surrounded by ground connection portion 51 formed from the coil spring. A lower end of ground connection portion 51 is in contact with the ground electrode.

In the present embodiment, upper-surface button (right) 110 is comprised of a soft magnetic material and comprised of iron by way of example, and hence it is conductive. Therefore, if a charged object comes in contact with upper-surface button (right) 110, a potential of upper-surface button (right) 110 may vary, which may affect projection 100 or an internal electronic component in controller housing 10. In the present embodiment, however, the potential of upper-surface button (right) 110 attains to a ground potential owing to electrical connection of upper-surface button (right) 110 to the ground electrode through ground connection portion 51. Therefore, even when a charged object comes in contact with upper-surface button (right) 110, possibility of influence on the internal electronic component is suppressed.

Since ground connection portion 51 is made up of the coil spring in the compressed state in the present embodiment, upper-surface button (right) 110 is biased upward by the coil spring. Since biasing force of the coil spring is weak in the present embodiment, upper-surface button (right) 110 is in contact with the upper portion of tact switch 117 at the initial position. In another manner, upper-surface button (right) 110 may be distant from tact switch 117 at the initial position by biasing force of the coil spring which is ground connection portion 51. In another manner, first game controller 1 does not have to include ground connection portion 51.

As shown in Figs. 12 and 13, upper-surface button (right) 110 includes main body portion 114 the surface of which defines the operation surface, sidewall 118 that extends from a lower surface of main body portion 114, and flange 113 that extends outward from sidewall 118. Sidewall 118 extends into projection 100 through fifth opening 197. Inside projection 100, flange 113 extends outward from sidewall 118. The flange may extend outward from the lower end of sidewall 118. Flange 113 includes a flange portion that projects to the right from a right end of sidewall 118 and a flange portion that extends to the left from a left end of sidewall 118. An upper surface of flange 113 is opposed to a part of a surface inside projection 100 (which is called a first inner surface 71 below) in the direction opposite to the direction of pressing-down of upper-surface button (right) 110. First inner surface 71 does not have to be an inner surface of projection 100 itself. The upper surface of flange 113 is located in the direction of pressing-down of upper-surface button (right) 110, with respect to first inner surface 71. Therefore, flange 113 performs a function to prevent upper-surface button (right) 110 from coming off, by being directly or indirectly caught by first inner surface 71.

The outer peripheral surface of sidewall 118 is opposed to a part of the surface inside projection 100 (which is called a second inner surface 72 below) in the left-right direction. Second inner surface 72 does not have to be the inner surface of projection 100 itself. The outer peripheral surface of sidewall 118 is located in a direction perpendicular to the direction of pressing-down of upper-surface button (right) 110, with respect to second inner surface 72.

First game controller 1 includes a first elastically deformable body 52 between the upper surface of flange 113 and first inner surface 71. First elastically deformable body 52 is elastically deformed by application of force and elastically returns by removal of application of force. A material for first elastically deformable body 52 is not particularly limited, and for example, rubber may be employed.

First elastically deformable body 52 may be fixed to first inner surface 71. First elastically deformable body 52 may be fixed to first inner surface 71, for example, with the use of an adhesive material or by being matched with a hole located at first inner surface 71.

When upper-surface button (right) 110 is located at the initial position, first elastically deformable body 52 is in contact with first inner surface 71 and flange 113. At this time, upper-surface button (right) 110 may be maintained at the initial position by balancing between biasing force in the direction opposite to the direction of pressing-down by tact switch 117 or ground connection portion 51 and biasing force in the direction of pressing-down by first elastically deformable body 52. When upper-surface button (right) 110 is located at the initial position, first elastically deformable body 52 may be in contact with only one of first inner surface 71 and flange 113 or neither of them.

First elastically deformable body 52 is located at a side close to second inner surface 72 in the left-right direction, between the outer peripheral surface of sidewall 118 and second inner surface 72. First elastically deformable body 52 is distant from sidewall 118. First elastically deformable body 52 may be in contact with second inner surface 72. First elastically deformable body 52 may be distant from second inner surface 72. In this case, an interval between second inner surface 72 and first elastically deformable body 52 in the left-right direction is smaller than an interval between sidewall 118 and first elastically deformable body 52. In another manner, first elastically deformable body 52 may be located at a side close to sidewall 118.

When first game controller 1 is attached to game device 3, upper-surface button (right) 110 is attracted to first game-device-side magnetic element 410. Fig. 14 is a schematic cross-sectional view showing a state in which upper-surface button (right) 110 is attracted to first game-device-side magnetic element 410.

As shown in Fig. 14, while first game controller 1 is attached to game device 3, upper-surface button (right) 110 and first game-device-side magnetic element 410 are opposed to each other. Upper-surface button (right) 110 is comprised of a soft magnetic material in the present embodiment. Therefore, when first game-device-side magnetic element 410 comes closer to upper-surface button (right) 110, upper-surface button (right) 110 is pulled by magnetic force toward first game-device-side magnetic element 410. Force in the direction opposite to the direction of pressing-down is then applied to upper-surface button (right) 110. At this time, first elastically deformable body 52 located between flange 113 and first inner surface 71 is pushed in a direction toward first inner surface 71 by flange 113 to experience elastic deformation in which the first elastic deformable body contracts in the direction opposite to the direction of pressing-down. Consequently, upper-surface button (right) 110 is moved in the direction opposite to the direction of pressing-down. In other words, upper-surface button (right) 110 is moved in the direction opposite to the direction of pressing-down from the initial position which is a position where the upper-surface button (right) has not been pressed down by the user. The direction of pressing-down is, for example, third direction R3. The direction opposite to the direction of pressing-down is, for example, first direction R1.

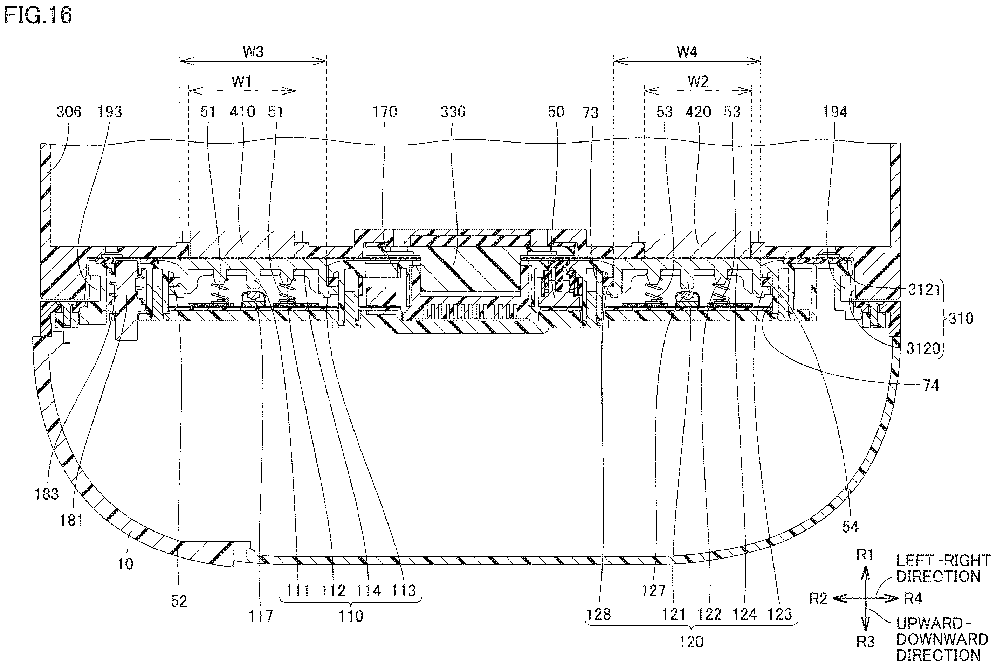

Upper-surface button (left) 120 is also similar in configuration to upper-surface button (right) 110. Tact switch 127 is located below upper-surface button (left) 120, and tact switch 127 is biased in the direction opposite to the direction of pressing-down at least while upper-surface button (left) 120 is pressed down. Upper-surface button (left) 120 includes a main body portion 124, a sidewall 128, and a flange 123 (see Fig. 16). A second elastically deformable body 54 is arranged between an upper surface of flange 123 and a first inner surface 73. Second elastically deformable body 54 may be fixed to first inner surface 73. Second elastically deformable body 54 may be located at a side close to a second inner surface 74 in the left-right direction, between an outer peripheral surface of sidewall 128 and second inner surface 74.

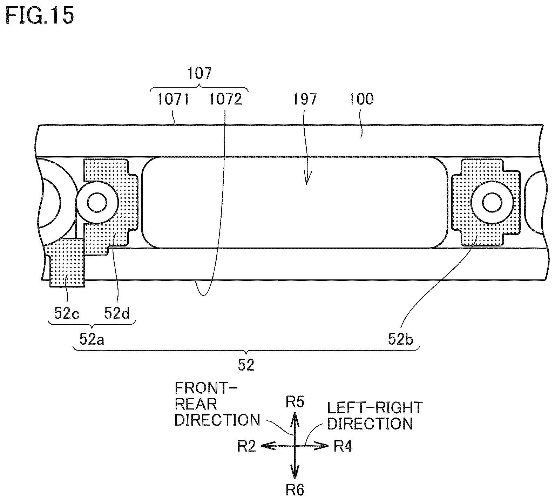

Fig. 15 is a schematic diagram when the direction toward top surface 106 is viewed from the inside of projection 100 and a schematic plan view showing a configuration of first elastically deformable body 52. Fig. 15 shows first elastically deformable body 52 and projection 100. First elastically deformable body 52 includes a first elastic portion 52a and a second elastic portion 52b. Second elastic portion 52b is distant from first elastic portion 52a. In the left-right direction, first elastic portion 52a is located at the side of second direction R2 relative to fifth opening 197. In the left-right direction, second elastic portion 52b is located at the side of fourth direction R4 relative to fifth opening 197.

A part of first elastically deformable body 52 projects from outer peripheral surface 107 of projection 100. Specifically, first elastic portion 52a is provided to project outward from the inside of projection 100 through an opening located in outer peripheral surface 107 of projection 100. Second elastic portion 52b is located inside projection 100 and does not have to project outward. The opening through which first elastically deformable body 52 projects may be located at outer peripheral surface 107 of projection 100, by a notch provided in projection 100 and upper side surface 11.

First elastic portion 52a includes a first elastic area 52c and a second elastic area 52d. In the upward-downward direction, first elastic area 52c is located below second elastic area 52d. In the left-right direction, first elastic area 52c may be located at the side of second direction R2 relative to second elastic area 52d. A part of first elastic area 52c projects from outer peripheral surface 107 of projection 100. Second elastic area 52d is located inside projection 100.

As shown in Figs. 10 and 12, first elastically deformable body 52 is located at outer peripheral surface 107 at the side of rear surface 16. From another point of view, first elastically deformable body 52 projects in sixth direction R6 from outer peripheral surface 107 of projection 100. Therefore, in the vertically held state or the horizontally held state, it is difficult for the user who faces front surface 15 of first game controller 1 to visually recognize first elastically deformable body 52. First elastically deformable body 52 may be located at outer peripheral surface 107, also at the side of front surface 15 or only at the side of front surface 15.

When projection 100 is matched with game-device-side recess 310, outer peripheral surface 107 and game-device-side inner peripheral surface 3120 are opposed to each other. At this time, first elastically deformable body 52 located at outer peripheral surface 107 may be in contact with opposing game-device-side inner peripheral surface 3120. Thus, projection 100 is more securely attached to game-device-side recess 310. More specifically, game-device-side inner peripheral surface 3120 opposed to the rear surface side of outer peripheral surface 107 comes in contact with first elastically deformable body 52, so that projection 100 is biased in the front direction by game-device-side inner peripheral surface 3120 with first elastically deformable body 52 being interposed. Consequently, the front surface side of outer peripheral surface 107 of projection 100 is pressed against opposing game-device-side inner peripheral surface 3120 and attachment becomes secure.

Since first elastically deformable body 52 is elastically deformable, in matching projection 100 with game-device-side recess 310, the first elastically deformable body is elastically deformed to contract in the front-rear direction and lowering in ease in attachment is suppressed. Furthermore, in the present embodiment, first elastically deformable body 52 is exposed at the root of outer peripheral surface 107. In other words, projecting first elastically deformable body 52 is adjacent to upper side surface 11. From another point of view, a position of the upper end of the first elastically deformable body is lower than the top surface of projection 100. Therefore, in insertion of projection 100 into game-device-side recess 310, a portion of outer peripheral surface 107 where first elastically deformable body 52 is not located initially enters game-device-side recess 310. In other words, at the beginning of insertion, first elastically deformable body 52 does not come in contact with game-device-side inner peripheral surface 3120. Therefore, lowering in ease in attachment is suppressed.

Second elastically deformable body 54 may also partially project through an opening located in the outer peripheral surface of projection 100, similarly to first elastically deformable body 52. Second elastically deformable body 54 may project from the surface of outer peripheral surface 107 the same as the surface from which first elastically deformable body 52 projects. First elastically deformable body 52 and second elastically deformable body 54 may both project from the rear surface side of outer peripheral surface 107.

The elastically deformable body located at outer peripheral surface 107 may be separate from elastically deformable body 52 or 54 located at the upper surface of flange 113. In this case, materials for them may be different. In this case again, the elastically deformable body may be located at outer peripheral surface 107, at the rear surface side. Instead of elastically deformable body 52 or 54, outer peripheral surface 107 itself may partially project at a position of and in a shape of elastically deformable body 52 or 54 to form a projecting portion 52 or 54. In this case, when projection 100 is matched with game-device-side recess 310, projecting portion 52 or 54 or projection 100 including projecting portions 52 and 54 may be deformed.

As shown in Figs. 10 to 13, top surface 106 of projection 100 includes areas different in height from upper side surface 11. Top surface 106 of projection 100 includes a first area 101, a second area 102, a third area 103, a fourth area 104, and a fifth area 105.

First area 101 is an area of a housing where upper-surface button (right) 110 is provided. The housing forms top surface 106 of projection 100. Upper-surface button (right) 110 is provided to pass through fifth opening 197 located in first area 101. Similarly, second area 102 is an area including upper-surface button (left) 120. Upper-surface button (left) 120 is provided to pass through a sixth opening 198 located in second area 102.

As shown in Fig. 11, third area 103 is an area of the housing including top surface 106 in one end area of projection 100. The housing forms top surface 106 of projection 100. From another point of view, third area 103 is contiguous to the end surface at the side of second direction R2 of outer peripheral surface 107 of projection 100. Third area 103 is an area located at the side of first direction R1 relative to each of first area 101 and second area 102. In the longitudinal direction of projection 100, a length of third area 103 may be shorter than a length of each of first area 101 and second area 102.

Third area 103 is provided with first cushion 191. More specifically, as shown in Fig. 13, first cushion 191 is arranged in a recess located at third area 103. A part of first cushion 191 is exposed to the outside of the recess. Third area 103 may be flat, without being provided with a recess. First cushion 191 may be placed on a flat surface in the third area.

As shown in Fig. 11, fifth area 105 is an area of the housing including top surface 106 in the other end area of projection 100. The housing forms top surface 106 of projection 100. From another point of view, fifth area 105 is contiguous to an end surface at the side of fourth direction R4 of outer peripheral surface 107 of projection 100. Fifth area 105 is an area located at the side of first direction R1 relative to each of first area 101 and second area 102. In the longitudinal direction of projection 100, a length of fifth area 105 may be shorter than the length of each of first area 101 and second area 102.

Fifth area 105 is provided with second cushion 192. Second cushion 192 is arranged in a recess located in fifth area 105. A part of second cushion 192 is exposed to the outside of the recess. Fifth area 105 may be flat, without being provided with a recess. Second cushion 192 may be placed on a flat surface in the fifth area. First cushions 191 and 192 can be concluded as raising the height of projection 100 from upper side surface 11.

Fourth area 104 is an area of the housing located between first area 101 and second area 102 in the longitudinal direction of top surface 106. The housing forms top surface 106 of projection 100. The fourth area is provided with terminal opening 196 and a synchronization button opening 195.

Third area 103 is located at a side of the projection direction relative to fourth area 104. Fifth area 105 is located at a side of the projection direction relative to fourth area 104.

In the longitudinal direction of projection 100, first area 101 is located between third area 103 and fourth area 104. In the longitudinal direction of projection 100, second area 102 is located between fifth area 105 and fourth area 104. In the longitudinal direction of projection 100, each of first area 101, second area 102, and fourth area 104 is located between third area 103 and fifth area 105.

As shown in Fig. 13, a height of first area 101 from upper side surface 11 is expressed as a first height T1. From another point of view, a distance from upper side surface 11 to first area 101 in the upward-downward direction is expressed as first height T1. Similarly, a height of second area 102 from upper side surface 11 is expressed as a second height T2. From another point of view, a distance from upper side surface 11 to second area 102 in the upward-downward direction is expressed as second height T2. Though first height T1 is the same as second height T2 in the present embodiment, they may be different from each other. First area 101 and second area 102 may be located from one end to the other end of top surface 106 in a direction perpendicular to the longitudinal direction of projection 100.

A height of third area 103 from upper side surface 11 is expressed as a third height T3. From another point of view, a distance from upper side surface 11 to third area 103 in the upward-downward direction is expressed as third height T3. Similarly, a height of fifth area 105 from upper side surface 11 is expressed as a fifth height T5. From another point of view, a distance from upper side surface 11 to fifth area 105 in the upward-downward direction is expressed as fifth height T5.

Though third height T3 is the same as fifth height T5 in the present embodiment, they may be different from each other. Though third height T3 and fifth height T5 are higher than first height T1 and second height T2 in the present embodiment, the former may be the same as or lower than the latter. Third area 103 and fifth area 105 may be located from one end to the other end of top surface 106 in the direction perpendicular to the longitudinal direction of projection 100.

A height of fourth area 104 from upper side surface 11 is expressed as a fourth height T4. From another point of view, a distance from upper side surface 11 to fourth area 104 in the upward-downward direction is expressed as fourth height T4. Though fourth height T4 is higher than first height T1 and second height T2 in the present embodiment, the former may be the same as or lower than the latter. Though fourth height T4 is lower than third height T3 and fifth height T5 in the present embodiment, the former may be the same as or higher than the latter. Fourth area 104 may be located from one end to the other end of top surface 106 in the direction perpendicular to the longitudinal direction of projection 100.

A height of the top surface of first cushion 191 from upper side surface 11 is expressed as a sixth height T6. From another point of view, a distance from upper side surface 11 to the top surface of first cushion 191 in the upward-downward direction is expressed as sixth height T6. Similarly, a height of the top surface of second cushion 192 from upper side surface 11 is expressed as a seventh height T7. From another point of view, a distance from upper side surface 11 to the top surface of second cushion 192 in the upward-downward direction is expressed as seventh height T7.

A height of operation surface 115 from upper side surface 11 at the time when upper-surface button (right) 110 is located at the initial position is expressed as an eighth height T8. From another point of view, a distance from upper side surface 11 to operation surface 115 in the upward-downward direction is expressed as eighth height T8. Similarly, a height of operation surface 125 from upper side surface 11 at the time when upper-surface button (left) 120 is located at the initial position is expressed as a ninth height T9. From another point of view, a distance from upper side surface 11 to operation surface 125 in the upward-downward direction is expressed as ninth height T9.

As shown in Figs. 13 and 14, upper-surface button (right) 110 is movable upward. As shown in Fig. 14, the height of operation surface 115 from upper side surface 11 at the time when upper-surface button (right) 110 is attracted to first game-device-side magnetic element 410 and is in contact with game-device-side bottom surface 3121 is expressed as a tenth height T10. Similarly, a height of operation surface 125 from upper side surface 11 at the time when upper-surface button (left) 120 is attracted to second game-device-side magnetic element 420 and is in contact with game-device-side bottom surface 3121 is expressed as an eleventh height T11.

### <Connection Structure>

Fig. 16 is a schematic cross-sectional view showing a state in which the game controller is attached to game device 3. The schematic cross-sectional view shown in Fig. 16 is in parallel to each of the left-right direction and the upward-downward direction.

As shown in Fig. 16, projection 100 of first game controller 1 is matched with game-device-side recess 310 of game device 3. Upper-surface button (right) 110 is to be attracted to first game-device-side magnetic element 410 by magnetic force. In the left-right direction, a length (a third length W3) of the top surface of upper-surface button (right) 110 is longer than a length (a first length W1) of first game-device-side magnetic element 410. Attraction to first game-device-side magnetic element 410 is achieved by magnetic force. Upper-surface button (left) 120 is to be attracted to second game-device-side magnetic element 420 by magnetic force. In the left-right direction, a length (a fourth length W4) of the top surface of upper-surface button (left) 120 is longer than a length (a second length W2) of second game-device-side magnetic element 420. Upper-surface button (left) 120 further includes a first protruding portion 121 and a second protruding portion 122.

### <Removal Mechanism>

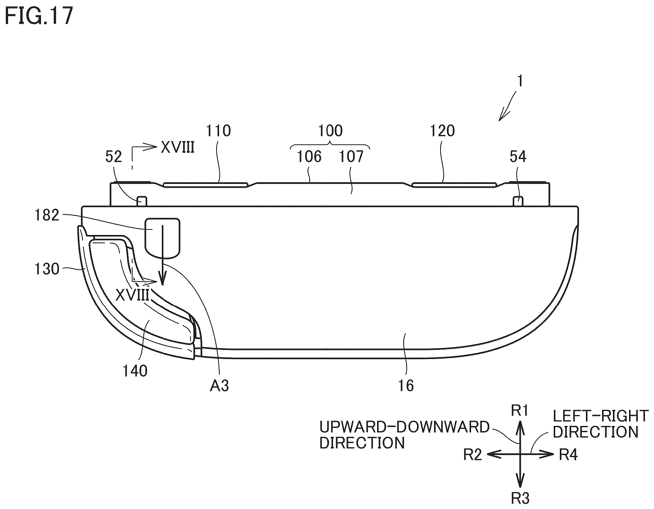

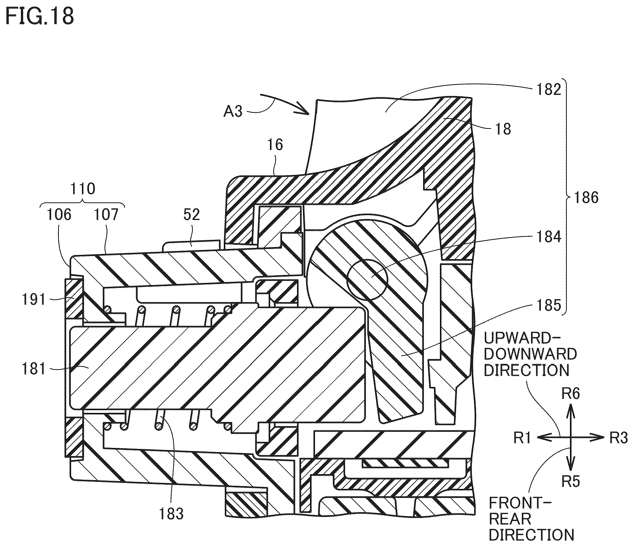

Fig. 17 is a schematic rear view showing the configuration of the game controller. Fig. 18 is a schematic cross-sectional view along the line XVIII-XVIII in Fig. 17. As shown in Fig. 18, first game controller 1 includes a pusher 181, a pusher operation member 186, and a biasing portion 183, which implement a removal mechanism. Pusher operation member 186 includes operation portion 182, a pusher actuation portion 185, and a rotation shaft 184.

As the user operates operation portion 182, pusher 181 projects from top surface 106 of projection 100. While first game controller 1 is attached to game device 3, pusher 181 that projects pushes game-device-side bottom surface 3121 of game-device-side recess 310. As pusher 181 pushes game-device-side bottom surface 3121, top surface 106 of projection 100 moves in a direction away from game-device-side bottom surface 3121. First game controller 1 rotates, with an end opposite to an end where pusher 181 is located being defined as the fulcrum. As set forth above, first game controller 1 can readily be removed from game device 3.

Pusher 181 may project from a side on the right of operation portion 182 in the longitudinal direction of projection 100. In the longitudinal direction of projection 100, the center of pusher 181 may be located on the right of the center of operation portion 182. Pusher 181 may project from the side on the right of first elastically deformable body 52 in the longitudinal direction of projection 100. In the longitudinal direction of projection 100, the center of pusher 181 may be located on the right of the center of first elastically deformable body 52.

An amount of projection of pusher 181 may be such magnitude that operation surface 115 of upper-surface button (right) 110 is distant from the surface of cover member 338 that forms game-device-side bottom surface 3121 of game-device-side recess 310 as a result of projection of pusher 181. From another point of view, the amount of projection of pusher 181 may be such magnitude that operation surface 115 of upper-surface button (right) 110 is distant from the surface of cover member 338 that forms game-device-side bottom surface 3121 of game-device-side recess 310 even when upper-surface button (right) 110 is attracted to first game-device-side magnetic element 410 to move upward to a maximum extent. First game controller 1 can thus readily be removed from game device 3. The amount of projection of pusher 181 may be such magnitude that at least a part of operation surface 125 of upper-surface button (left) 120 is not distant from the surface of cover member 338. Quick removal of first game controller 1 from game device 3 can thus be suppressed.

The amount of projection of pusher 181 may be such magnitude that a right end (an end at a side of second direction R2 in Fig. 11) of top surface 106 of projection 100 is exposed in the opening in game-device-side recess 310 as a result of projection of pusher 181. The amount of projection of pusher 181 may be such magnitude that the right end of top surface 106 is not exposed in the opening of game-device-side recess 310 even when pusher 181 projects. Alternatively, the amount of projection of pusher 181 may be such magnitude that the entire first elastically deformable body 52 exposed at outer peripheral surface 107 of projection 100 is exposed in the opening of game-device-side recess 310 as a result of projection of pusher 181. Second elastically deformable body 54 exposed at outer peripheral surface 107, on the other hand, may be exposed only in part in the opening of game-device-side recess 310. Alternatively, the amount of projection of pusher 181 may be such magnitude that light emission portion 150 located at outer peripheral surface 107 is not exposed in the opening of game-device-side recess 310 even when pusher 181 projects. Alternatively, the amount of projection of pusher 181 may be such magnitude that the right end (the end at the side of second direction R2 in Fig. 11) of upper side surface 11 and an upper end of main body right side surface 313 are distant from each other by a distance, for example, from 0.5 mm to 1 cm as a result of projection of pusher 181. The distance by which they are distant may be, for example, from 1 mm to 5 mm. The distance by which they are distant may be, for example, 2 mm.

As shown in Figs. 17 and 18, operation portion 182 is located, for example, at rear surface 16. Operation portion 182 is arranged as being exposed through an opening located in rear surface 16. Operation portion 182 is operated by the user. Rear surface 16 is provided with a projecting portion 18. Projecting portion 18 is located at the side of third direction R3 with respect to operation portion 182. Projecting portion 18 projects in sixth direction R6 at rear surface 16, Projecting portion 18 projects in the rear direction from rear surface 16 to cover Z shoulder button (right) 140 from below. For example, projecting portion 18 may be configured such that projecting portion 18 is grounded to the grounding surface but Z shoulder button (right) 140 is not grounded when first game controller 1 is placed such that rear surface 16 is opposed to the grounding surface. Operation portion 182 is operated in a direction shown with an arrow A3. The direction shown with arrow A3 is a direction of rotation from main body right side surface 313 to the right and from the rear surface side of game device 3 toward the front surface. From another point of view, the direction shown with arrow A3 is a direction of rotation in fifth direction R5 while it is directed to third direction R3 in first game controller 1. From another point of view, operation portion 182 is operated toward projecting portion 18. Operation portion 182 may be configured to be operated in a direction in parallel to third direction R3. Fig. 18 shows a state (natural state) before operation portion 182 is operated.

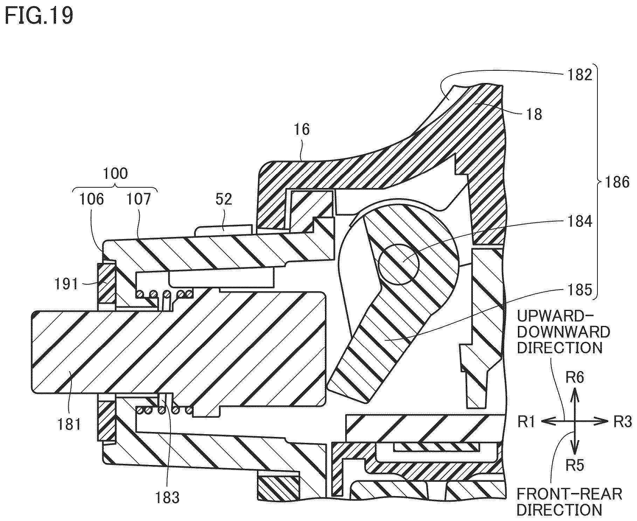

Fig. 19 is a schematic cross-sectional view showing a state in which operation portion 182 is operated. Rotation shaft 184 rotates together with pusher actuation portion 185 as a result of operation on operation portion 182. Pusher actuation portion 185 has pusher 181 project.

Before operation portion 182 is operated, pusher 181 is arranged inside projection 100. Biasing portion 183 biases pusher 181 in third direction R3. Biasing portion 183 is implemented, for example, by a coil spring. As the user operates operation portion 182 in third direction R3, rotation shaft 184 rotates together with each of operation portion 182 and pusher actuation portion 185 and pusher actuation portion 185 pushes pusher 181 in first direction R1. A part of pusher 181 projects from projection 100. As the user removes his/her hand from operation portion 182, biasing portion 183 extends and pusher 181 moves in third direction R3. Pusher 181 thus returns to a position in the natural state.

As shown in Figs. 18 and 19, operation portion 182 is operated at least in third direction R3. In the present example, operation portion 182 is rotationally operated in a direction including third direction R3 and fifth direction R5. In other words, the direction of operation on operation portion 182 is third direction R3 (a direction away from upper side surface 11) when viewed in the rear direction of first game controller 1 and fifth direction R5 (the direction toward the rear surface) when viewed in a side direction. Operated operation portion 182 is buried in projecting portion 18. The entire operation portion 182 does not have to completely be buried. A part of operation portion 182 is exposed to the outside of projecting portion 18. When operation portion 182 is operated in third direction R3, pusher 181 is moved in first direction R1. From another point of view, pusher 181 is moved toward the side opposite to the direction of operation on operation portion 182.

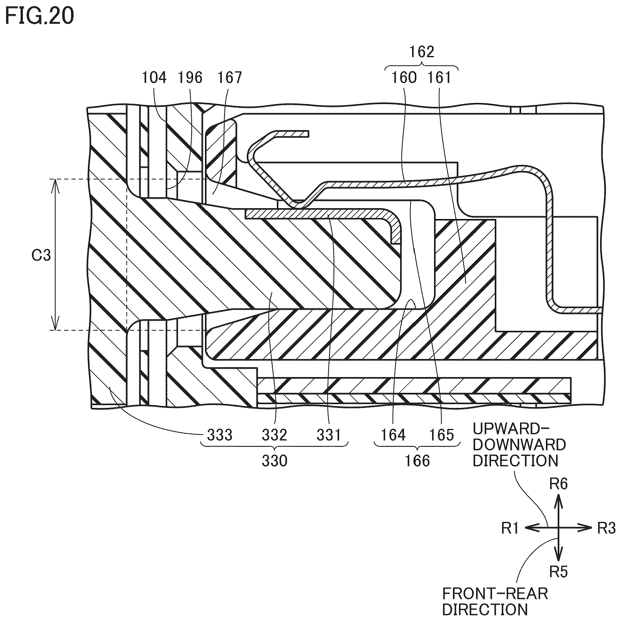

Fig. 20 is a schematic cross-sectional view along the line XX-XX in Fig. 11. The schematic cross-sectional view shown in Fig. 20 is in parallel to each of the front-rear direction and the upward-downward direction.

A female connector 162 is provided with first terminal 160 and a socket 161. An inner wall surface 166 of socket 161 defines at least a part of terminal accommodation portion 167. Inner wall surface 166 of socket 161 communicates with terminal opening 196 located at top surface 106 of projection 100. Inner wall surface 166 of socket 161 may be inclined to decrease in cross-sectional area from a side of terminal opening 196 toward the rear. First game controller 1 may not be provided with female connector 162 and terminal accommodation portion 167 may be defined by recessed top surface 106 of projection 100.

Inner wall surface 166 of socket 161 may include a first rear-surface-side wall surface 165 and a first front-surface-side wall surface 164. First front-surface-side wall surface 164 is a wall surface of inner wall surface 166 at a front surface side of first game controller 1. First rear-surface-side wall surface 165 is a wall surface of inner wall surface 166 at a rear surface side of first game controller 1. First rear-surface-side wall surface 165 is opposed to first front-surface-side wall surface 164.

A wall portion that forms first rear-surface-side wall surface 165 is provided with a slit that extends in the upward-downward direction (that is, the projection direction of projection 100) in first game controller 1. While first terminal 160 extends along a direction of extension of the slit, a part thereof is exposed at first rear-surface-side wall surface 165 through the slit. In other words, first terminal 160 is located along first rear-surface-side wall surface 165. From another point of view, first terminal 160 is located along the inner peripheral surface of terminal accommodation portion 167. First terminal 160 is not located along first front-surface-side wall surface 164. In another manner, first terminal 160 may be located along first front-surface-side wall surface 164. Alternatively, first terminal 160 may be located along each of first front-surface-side wall surface 164 and first rear-surface-side wall surface 165.

First terminal 160 may be formed from a leaf spring. The upper end of first terminal 160 extends to a position lower than terminal opening 196. Therefore, in the upward-downward direction, a position of the upper end of first terminal 160 is higher than upper side surface 11 and lower than top surface 106 of projection 100. A position of the lower end of first terminal 160 may be higher or lower than upper side surface 11.

As shown in Fig. 20, first plug connector 330 in the present embodiment is inserted in terminal accommodation portion 167. More particularly, tongue-shaped body 332 provided with main body first terminal 331 is inserted in terminal accommodation portion 167. Main body first terminal 331 is located at a rear surface side of tongue-shaped body 332. Inside terminal accommodation portion 167, first terminal 160 is in contact with main body first terminal 331. Main body first terminal 331 may be in contact with a portion of first terminal 160 that projects from the slit.

When the game controller in the integrally held state is used by the user as being held by both hands, game device 3 may slightly lean toward the rear surface side with respect to the game controller due to its weight. At this time, for example, tongue-shaped body 332 may lean toward the rear surface side inside terminal accommodation portion 167. Since first terminal 160 is located along first rear-surface-side wall surface 165, contact between first terminal 160 and main body first terminal 331 located at tongue-shaped body 332 tends to be maintained. When the user holds the game controller in the integrally held state with one hand, for example, when the user holds only first game controller 1, game device 3 may lean toward the rear surface side due to its weight with the side of held first game controller 1 being defined as the fulcrum. At this time, an interval between upper side surface 11 of first game controller 1 and main body right side surface 313 of game device 3 may be larger at the front surface side than at the rear surface side. In other words, first game controller 1 may be distant from game device 3 at the front surface side more than at the rear surface side. Since first terminal 160 is located along first rear-surface-side wall surface 165 in the present embodiment, contact between first terminal 160 and main body first terminal 331 tends to be maintained. Contact of first terminal 160 with main body first terminal 331 tends to be maintained more when it is located at a position in first rear-surface-side wall surface 165 to which main body first terminal 331 located at tongue-shaped body 332 comes closer when game device 3 leans toward the rear surface side with respect to the side of first game controller 1.

Since the position of the upper end of first terminal 160 is lower than top surface 106 of projection 100, the user is less likely to touch first terminal 160 when the user operates first game controller 1. Furthermore, first terminal 160 is located in terminal accommodation portion 167 located inside projection 100, which leads to efficient use of a space in a height direction provided as a result of projection of projection 100. Main body first terminal 331, on the other hand, should project for connection to first terminal 160 in terminal accommodation portion 167. Main body first terminal 331 is located in game-device-side recess 310. Therefore, main body first terminal 331 that projects is protected by game-device-side inner peripheral surface 3120 of game-device-side recess 310.

Main body first terminal 331 may be provided to extend from a side surface to a top surface of tongue-shaped body 332. From another point of view, main body first terminal 331 may be located at a surface of tongue-shaped body 332 to extend from the rear surface side toward the right side surface side of the game device. When tongue-shaped body 332 is inserted in terminal accommodation portion 167, a tip end (at the right side surface side) of tongue-shaped body 332 may be in contact with first terminal 160. In that case as well, first terminal 160 can be in contact with main body first terminal 331.

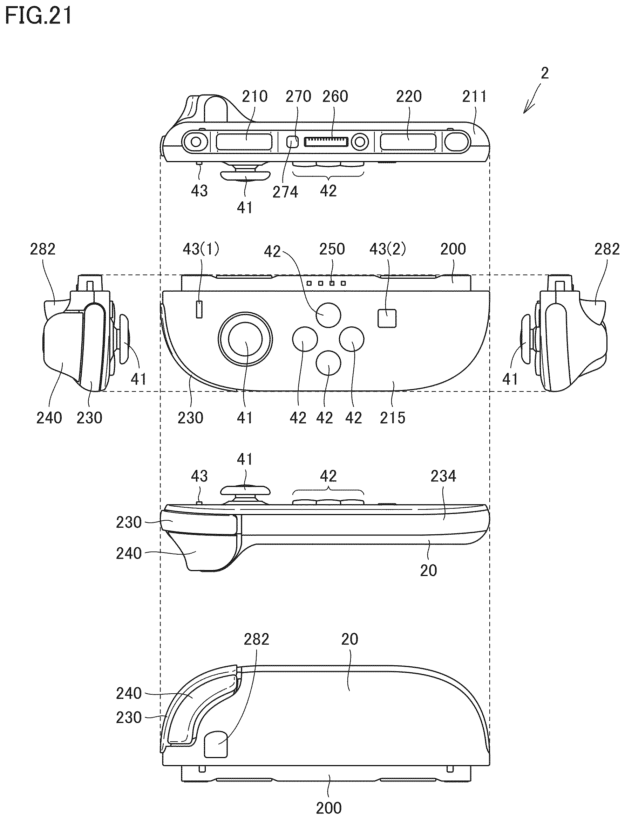

Fig. 21 is a six-view schematic diagram showing a configuration of second game controller 2. As shown in Fig. 21, second game controller 2 includes, for example, a joystick 41 which represents an exemplary direction input portion and one set of four buttons 42 aligned in a cross shape. Though first game controller 1 includes + button 33 (1) and home button 33 (2), second game controller 2 includes a - button 43 (1) and a capture button 43 (2). Second game controller 2 includes an upper-surface button (right) 210 and an upper-surface button (left) 220, a synchronization button, a shoulder button (left) 230, and a Z shoulder button (left) 240. Upper-surface button (right) 210 and upper-surface button (left) 220 and the synchronization button are located at projection 200. Furthermore, second game controller 2 includes a light emission portion 250, a second terminal 260 connected to a main body second terminal 341 of game device 3, a mouse sensor opening 270 that guides light to a mouse operation sensor 274, a mouse skate 253, a mouse skate 254, and an operation portion 282 that implements a removal mechanism for removal of projection 200 from game device 3. Each feature is substantially the same in structure or function as that of first game controller 1. A function of at least one of them may be different. For example, capture button 43 (2) may be used for storage of an image to be outputted to display 305. Each of upper-surface button (right) 210 and upper-surface button (left) 220 is an attraction button that is attracted by magnetic force.

In the horizontally held state, positional relation between joystick 31 and the set of four buttons 32 in first game controller 1 is the same as positional relation between joystick 41 and the set of four buttons 42 in second game controller 2. In other words, in first game controller 1, joystick 31 is located on the left of the set of four buttons 32. Similarly, in second game controller 2, joystick 41 is located on the left of the set of four buttons 42. In the horizontally held state, on the other hand, shoulder button (right) 130 and Z shoulder button (right) 140 are located on the right in first game controller 1, whereas shoulder button (left) 230 and Z shoulder button (left) 240 are located on the left in second game controller 2. From another point of view, in the integrally held state, joystick 31 in first game controller 1 is located under the set of four buttons 32, whereas joystick 41 in second game controller 2 is located above the set of four buttons 42. In the integrally held state, on the other hand, shoulder button (right) 130 and Z shoulder button (right) 140 of first game controller 1 and shoulder button (left) 230 and Z shoulder button (left) 240 of second game controller 2 are both located above.

### <Peripheral Device>

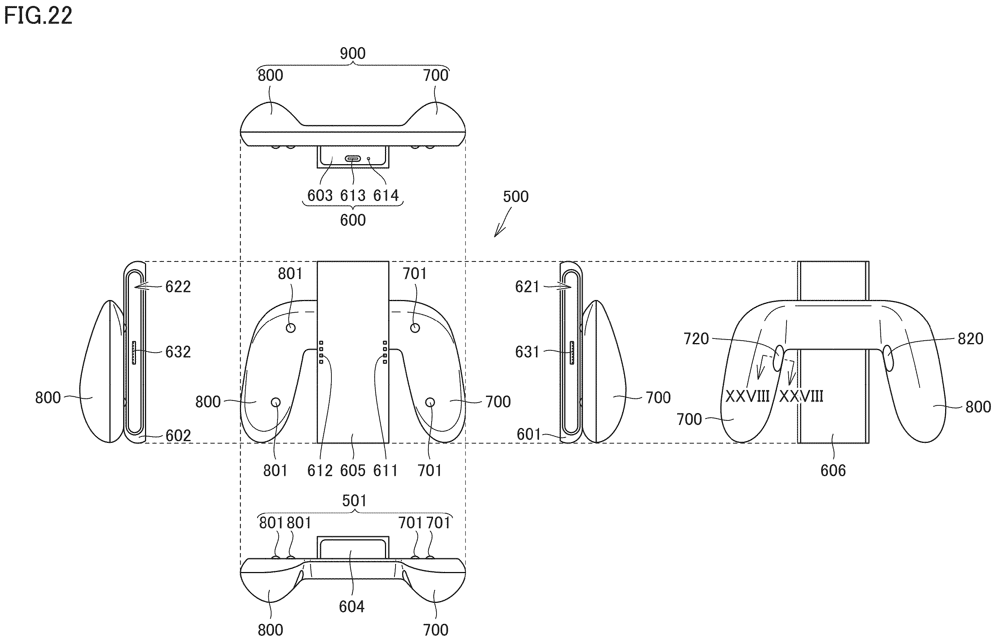

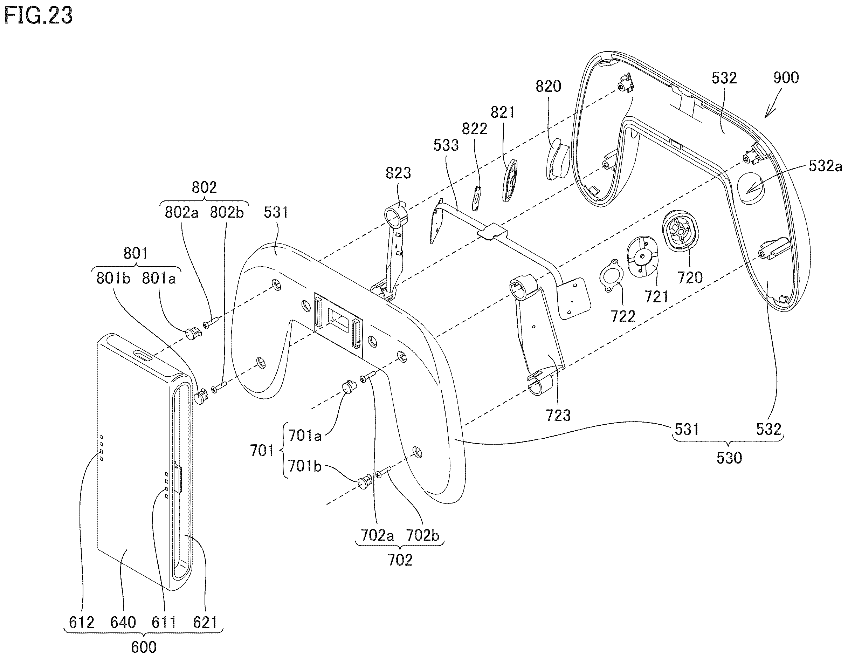

Details of the configuration of peripheral device 500 according to the present embodiment will now be described. Fig. 22 is a six-view schematic diagram showing the configuration of peripheral device 500 according to the present embodiment. Fig. 23 is a schematic perspective exploded view showing the configuration of peripheral device 500 according to the present embodiment.

As shown in Figs. 22 and 23, peripheral device 500 according to the present embodiment includes support portion 600, a grip module 900 attached to a rear surface of support portion 600, and an elastic member 501. Support portion 600 supports the game controller. Right grip 700 is a portion of grip module 900 located on the right of support portion 600 and to be held by the right hand of the user. Left grip 800 is a portion of grip module 900 located on the left of support portion 600 and to be held by the left hand of the user. Elastic member 501 includes two right elastic member pieces 701 and two left elastic member pieces 801. Two right elastic member pieces 701 are located at right grip 700. Two left elastic member pieces 801 are located at left grip 800. Three or more right elastic member pieces 701 may be located at right grip 700 or three or more left elastic member pieces 801 may be located at left grip 800.

Support portion 600 is provided with a support portion right side surface 601, a support portion left side surface 602, a support portion front surface 605, a support portion rear surface 606, a support portion upper surface 603, and a support portion lower surface 604. Support portion right side surface 601 is located on the right of support portion front surface 605. Support portion left side surface 602 is located on the left of support portion front surface 605. Support portion left side surface 602 is located opposite to support portion right side surface 601. Support portion rear surface 606 is located opposite to support portion front surface 605. Support portion upper surface 603 is located opposite to support portion lower surface 604. Support portion front surface 605 is contiguous to each of support portion right side surface 601, support portion left side surface 602, support portion upper surface 603, and support portion lower surface 604. Similarly, support portion rear surface 606 is contiguous to each of support portion right side surface 601, support portion left side surface 602, support portion upper surface 603, and support portion lower surface 604.

Support portion 600 is provided with first recess 621 and second recess 622. First recess 621 is located at support portion right side surface 601. Second recess 622 is located at support portion left side surface 602. Projection 100 of first game controller 1 is to be matched with first recess 621. Projection 200 of second game controller 2 is to be matched with second recess 622. Any of projection 100 and projection 200 may be matched with first recess 621 and second recess 622.

Peripheral device 500 includes a charging external connector 613, a charging LED component 614, first optical guide path 611, and second optical guide path 612. Each of charging external connector 613 and charging LED component 614 is located at support portion upper surface 603. The game controller is charged by external supply of electric power through charging external connector 613 while the game controller is attached to peripheral device 500. Charging LED component 614 notifies the user of charging by illuminating or blinking during charging of the game controller.

Each of first optical guide path 611 and second optical guide path 612 is located at support portion front surface 605. When first game controller 1 is attached to peripheral device 500, first optical guide path 611 is opposed to light emission portion 150 of first game controller 1. In other words, as shown in Fig. 23, first optical guide path 611 passes through support portion front surface 605 and an inner peripheral surface of first recess 621 at the front surface side. As shown in Figs. 22 and 23, first optical guide path 611 is provided with a plurality of holes. The plurality of holes are aligned in the upward-downward direction. At least one or all of the plurality of holes is/are located as high as a later-described first plug 631 in the upward-downward direction. When second game controller 2 is attached to peripheral device 500, second optical guide path 612 is opposed to light emission portion 250 of second game controller 2.

As shown in Fig. 23, grip module 900 includes a front grip housing 531, a rear grip housing 532, a right grip button 720, a left grip button 820, a right rubber member 721, a left rubber member 821, a right contact 722, a left contact 822, a first circuit 533, a right contact support member 723, a left contact support member 823, two right fastening members 702, and two left fastening members 802. Front grip housing 531 and rear grip housing 532 form a grip housing 530.

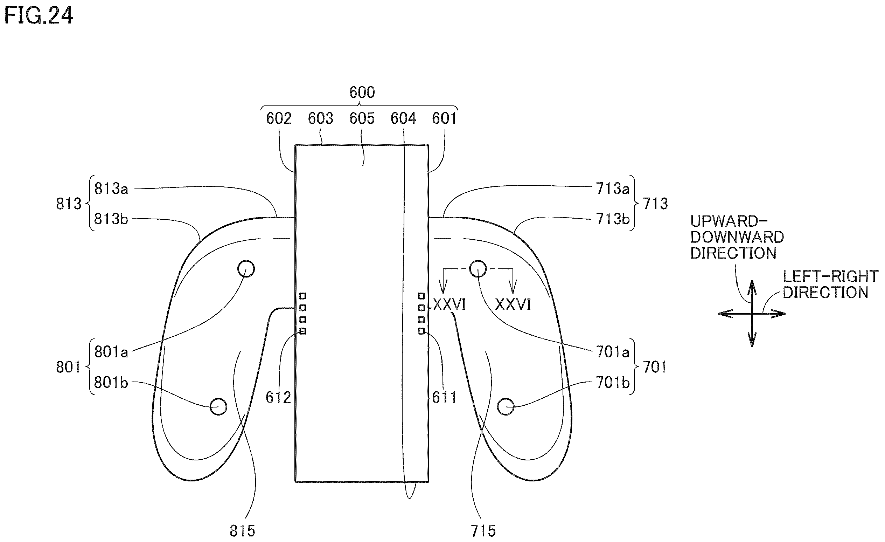

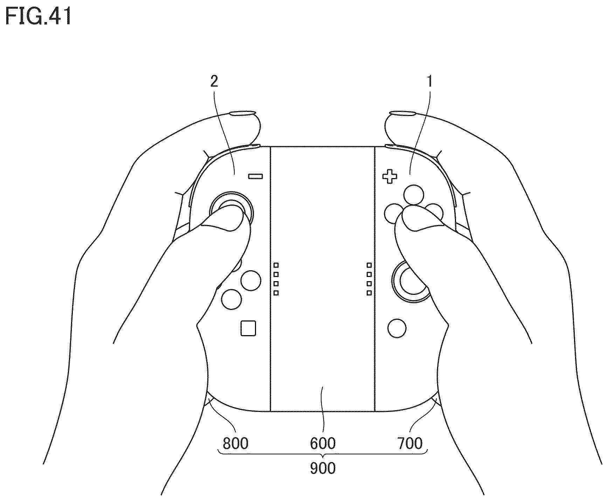

Fig. 24 is a schematic front view showing the configuration of peripheral device 500 according to the present embodiment. As shown in Fig. 24, right grip 700 is provided with a first opposing surface 715. First opposing surface 715 is an area of a front surface of right grip 700 that is opposed to a rear surface of first game controller 1 while first game controller 1 is attached to peripheral device 500. Referring to Fig. 41, when viewed from the front surface, first opposing surface 715 is not seen by being hidden by first game controller 1. First opposing surface 715 is provided with two right elastic member pieces 701. When viewed in the front-rear direction, two right elastic member pieces 701 are located at positions different in distance from support portion 600. Specifically, when viewed in the front-rear direction, lower right elastic member piece 701b is located at a position more distant from support portion 600 than upper right elastic member piece 701a. In the left-right direction, a shortest distance (a second distance D2) between support portion 600 and lower right elastic member piece 701b is longer than a shortest distance (a first distance D1) between support portion 600 and upper right elastic member piece 701a.

When viewed in the front-rear direction, two right elastic member pieces 701 are aligned in a direction not in parallel to a direction of extension of a bottom surface of first recess 621. The bottom surface of first recess 621 extends along the upward-downward direction. When viewed in the front-rear direction, two right elastic member pieces 701 are aligned in a direction inclined with respect to each of the upward-downward direction and the left-right direction. When viewed in the front-rear direction, a portion of grip housing 530 on the right of support portion 600 is in a shape that extends downward as it extends to the right from support portion 600. Right grip 700 is provided with a first upper surface 713. First upper surface 713 includes a first portion (right) 713a and a second portion (right) 713b. First portion (right) 713a extends in a direction in parallel to the left-right direction. Second portion (right) 713b is connected to an outer end of first portion (right) 713a. Second portion (right) 713b is curved downward with respect to first portion (right) 713a. When viewed in the front-rear direction, second portion (right) 713b is inclined with respect to each of the upward-downward direction and the left-right direction.

Left grip 800 and two left elastic member pieces 801 are in a structure substantially in symmetry to right grip 700 and two right elastic member pieces 701 with support portion 600 lying therebetween.

When viewed in the front-rear direction, support portion 600 is arranged between two right elastic member pieces 701 and two left elastic member pieces 801. First distance D1 is substantially the same as a third distance D3. Second distance D2 is substantially the same as a fourth distance D4. In the upward-downward direction, first optical guide path 611 is located between lower right elastic member piece 701b and upper right elastic member piece 701a. In the upward-downward direction, second optical guide path 612 is located between lower left elastic member piece 801b and upper left elastic member piece 801a.

In the upward-downward direction, first portion (right) 713a and first portion (left) 813a are located substantially at the same height. A distance between second portion (right) 713b and second portion (left) 813b in the left-right direction increases toward the lower side in the upward-downward direction.

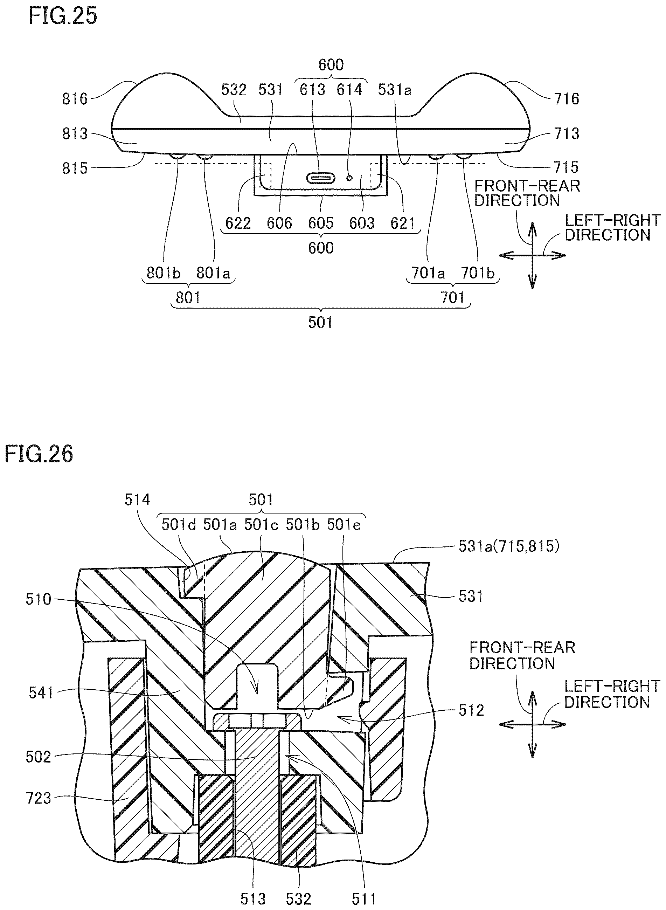

Fig. 25 is a schematic top view showing the configuration of peripheral device 500 according to the present embodiment. As shown in Fig. 25, grip module 900 is located at support portion rear surface 606. The front surface of right grip 700 is located in the rear of support portion 600 in the front-rear direction. The rear refers to a direction from support portion front surface 605 toward support portion rear surface 606. As shown in Fig. 25, the front surface of right grip 700 is a curved surface curved slightly rearward with distance from support portion 600 to the right. First opposing surface 715 is a part of the front surface of right grip 700. Therefore, first opposing surface 715 is a curved surface. First opposing surface 715 includes a portion as a front end of right grip 700. In other words, the front end of right grip 700 is located in the rear of support portion 600. The front surface of right grip 700 may be planar. First opposing surface 715 may be planar. First opposing surface 715 does not have to include the portion as the front end of right grip 700.

As shown in Fig. 25, elastic member 501 projects forward from first opposing surface 715 of right grip 700. In Fig. 25, chain dotted lines extend to the left and the right from rear ends of openings of first recess 621 and second recess 622, respectively. In the front-rear direction, each of two right elastic member pieces 701 is located in the rear of first recess 621. A front end of each of two right elastic member pieces 701 is located in the rear of the opening of first recess 621 located at support portion right side surface 601. In the front-rear direction, the front end of each of two right elastic member pieces 701 is located in front of support portion rear surface 606. In the front-rear direction, the front end of each of two right elastic member pieces 701 may be located at a position the same as support portion rear surface 606. Left grip 800 and two left elastic member pieces 801 are similar in structure to the above.

Fig. 26 is a schematic cross-sectional view along the line XXVI-XXVI in Fig. 24. Since cross-sections of the elastic member pieces are also substantially the same in structure, description will be given below without particular distinction between the left and the right. As shown in Fig. 26, front grip housing 531 is provided with an elastic member arrangement hole 510. Elastic member 501 is arranged in elastic member arrangement hole 510. Elastic member 501 includes an elastic member main body 501c, a first projecting portion 501d, and a second projecting portion 501e. Elastic member main body 501c extends in the front-rear direction. First projecting portion 501d projects from elastic member main body 501c toward one side in a direction perpendicular to the front-rear direction. Second projecting portion 501e projects from elastic member main body 501c toward the other side in the direction perpendicular to the front-rear direction.

Elastic member 501 is provided with a first side surface area 501a and a second side surface area 501b. First side surface area 501a is located opposite to second side surface area 501b. First side surface area 501a is exposed through elastic member arrangement hole 510. First side surface area 501a is curved as being convex outward. While first game controller 1 and/or second game controller 2 is/are attached to peripheral device 500, first side surface area(s) 501a is/are in contact with the rear surface of first game controller 1 and/or the rear surface of second game controller 2.

First side surface area 501a is formed by elastic member main body 501c and first projecting portion 501d. Second side surface area 501b is formed by elastic member main body 501c and second projecting portion 501e. Elastic member arrangement hole 510 is provided with a step portion 514. Step portion 514 is provided to sink rearward in a front surface 531a of front grip housing 531. First projecting portion 501d is arranged in step portion 514. Step portion 514 restricts an amount of projection of elastic member 501.

Front grip housing 531 includes a first fastened portion 541. First fastened portion 541 extends rearward from an inner wall surface of front grip housing 531. First fastened portion 541 is provided with a first through hole 511 and a second through hole 512. First through hole 511 extends in the front-rear direction. Second through hole 512 extends in a direction perpendicular to the front-rear direction. Second through hole 512 extends, for example, in the left-right direction. Second through hole 512 may extend in the upward-downward direction or a direction inclined in each of the left-right direction and the upward-downward direction. Each of first through hole 511 and second through hole 512 is contiguous to elastic member arrangement hole 510. Second projecting portion 501e is arranged in second through hole 512. Second projecting portion 501e abuts on a wall surface of second through hole 512 to prevent elastic member 501 from coming out of elastic member arrangement hole 510.

Rear grip housing 532 is provided with a screw boss 513. First through hole 511 and screw boss 513 are aligned along the front-rear direction. A fastening member 502 (702, 802) passes through first through hole 511 and is attached to screw boss 513. Front grip housing 531 and rear grip housing 532 are fastened by fastening member 502. Second side surface area 501b of elastic member 501 is opposed to fastening member 502. Fastening member 502 is covered with elastic member 501. Detachment of fastening member 502 can thus be suppressed. Since elastic member 501 also performs a function to suppress detachment, the number of components can be suppressed. Furthermore, since fastening member 502 is not externally visually recognized, touching to fastening member 502 is suppressed.

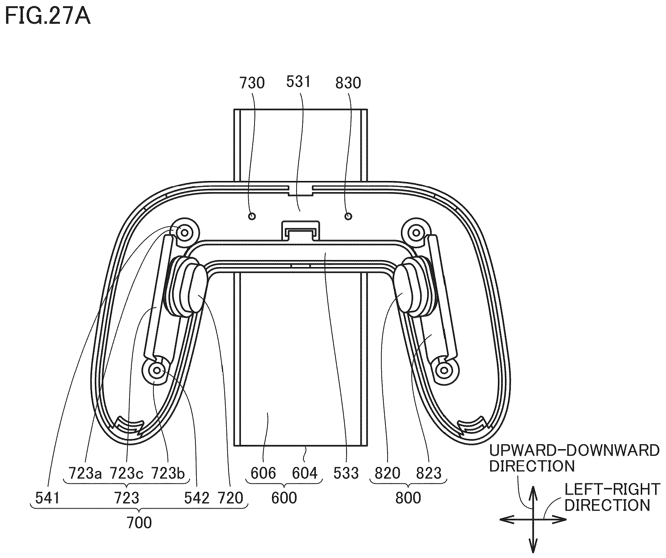

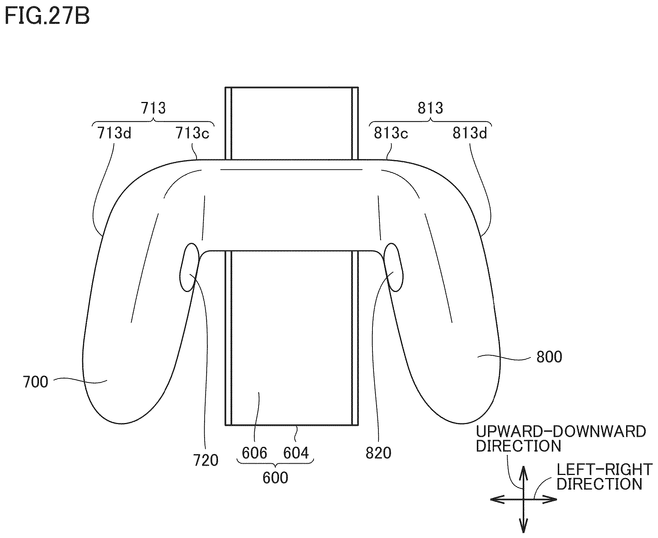

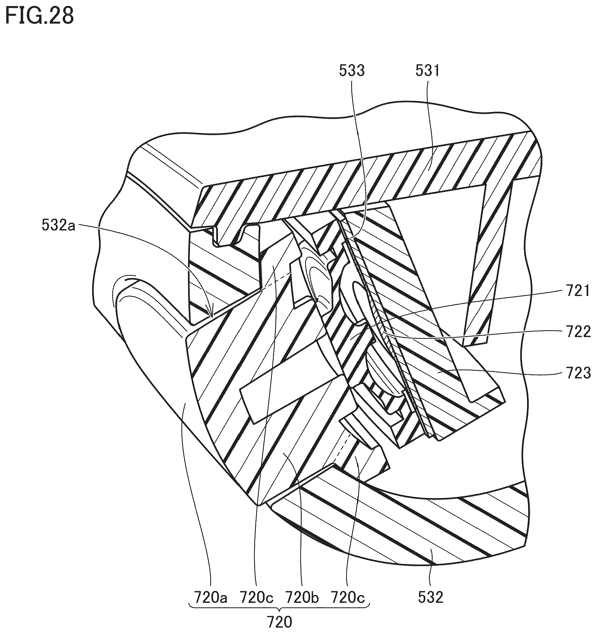

Figs. 27A and 27B are each a schematic rear view showing the configuration of peripheral device 500 according to the present embodiment. In Fig. 27A, rear grip housing 532 and fastening member 502 are not shown. Fig. 28 is a schematic cross-sectional view along the line XXVIII-XXVIII in Fig. 22.

As shown in Fig. 27A, front grip housing 531 is provided with a first screw hole 730 and a second screw hole 830. Front grip housing 531 is fixed to support portion 600 by being fastened by a fastening screw (not shown) from a back surface side of front grip housing 531. A method of fixing front grip housing 531 and support portion 600 to each other is not limited to fastening. Front grip housing 531 and support portion 600 may be in contact with each other or distant from each other.

As shown in Figs. 27A and 28, right grip 700 includes right grip button 720, right rubber member 721, right contact 722, and right contact support member 723. Right rubber member 721, right contact 722, and right contact support member 723 are arranged between front grip housing 531 and rear grip housing 532. Right contact support member 723 supports right contact 722, first circuit 533 provided with right contact 722, and right rubber member 721. Right rubber member 721 is distant from right contact 722. Right rubber member 721 is arranged on first circuit 533 to cover right contact 722.

Right grip button 720 is arranged on right rubber member 721. Right grip button 720 may be distant from right rubber member 721. Right contact 722 is pressed down by right grip button 720. Specifically, right contact 722 is pressed down by right grip button 720 with right rubber member 721 being interposed. Right grip button 720 is located at the rear surface of peripheral device 500. Specifically, right grip button 720 is located at the rear surface of right grip 700.

As shown in Fig. 28, rear grip housing 532 is provided with a grip button arrangement hole 532a. Right grip button 720 is arranged in grip button arrangement hole 532a. Right grip button 720 includes a grip button main body portion 720b and a grip button coming-off prevention portion 720c. A top surface of grip button main body portion 720b defines a grip button operation surface 720a. Grip button operation surface 720a is a surface to be operated by the user. Grip button operation surface 720a is exposed through grip button arrangement hole 532a. Grip button operation surface 720a may substantially be flush with an outer surface of rear grip housing 532. Grip button operation surface 720a may substantially be flush with an outer surface of rear grip housing 532. Grip button operation surface 720a may project from grip button arrangement hole 532a.

Grip button main body portion 720b is inserted in grip button arrangement hole 532a. Grip button coming-off prevention portion 720c is contiguous to grip button main body portion 720b. Grip button coming-off prevention portion 720c is arranged in a space defined by front grip housing 531 and rear grip housing 532. Right grip button 720 is prevented from coming out of grip button arrangement hole 532a by abutment of grip button coming-off prevention portion 720c on an inner wall surface of rear grip housing 532. Left grip button 820 is substantially the same in configuration to right grip button 720.

As shown in Fig. 27A, right contact support member 723 includes a first attachment portion 723a, a second attachment portion 723b, and a contact support main body portion 723c. Each of first attachment portion 723a and second attachment portion 723b is contiguous to contact support main body portion 723c. Contact support main body portion 723c is located between first attachment portion 723a and second attachment portion 723b. First attachment portion 723a is attached to first fastened portion 541 of front grip housing 531. Similarly, second attachment portion 723b is attached to a second fastened portion 542 of front grip housing 531.

As shown in Fig. 26, first attachment portion 723a of right contact support member 723 is fastened to rear grip housing 532 with the use of fastening member 502 while it is attached to first fastened portion 541. In other words, right contact support member 723 is fastened by fastening member 502, between front grip housing 531 and rear grip housing 532. Peripheral device 500 can thus be compact and the number of components can be suppressed. Accuracy in positioning of right contact support member 723 and front grip housing 531 and rear grip housing 532 can be improved. Left contact support member 823 is substantially the same in configuration as right contact support member 723.

As shown in Fig. 27B, first upper surface 713 of the right portion of grip housing 530 of peripheral device 500 includes a third portion (right) 713c and a fourth portion (right) 713d. Third portion (right) 713c extends in the direction in parallel to the left-right direction. Fourth portion (right) 713d is connected to an outer end of third portion (right) 713c. Fourth portion (right) 713d is curved downward with respect to third portion (right) 713c. When viewed in the front-rear direction, fourth portion (right) 713d is inclined with respect to each of the upward-downward direction and the left-right direction.

A second upper surface 813 of the left portion of grip housing 530 includes a third portion (left) 813c and a fourth portion (left) 813d. Third portion (left) 813c extends in the direction in parallel to the left-right direction. Fourth portion (left) 813d is connected to an outer end of third portion (left) 813c. Fourth portion (left) 813d is curved downward with respect to third portion (left) 813c. When viewed in the front-rear direction, fourth portion (left) 813d is inclined with respect to each of the upward-downward direction and the left-right direction.

### <Support Portion>

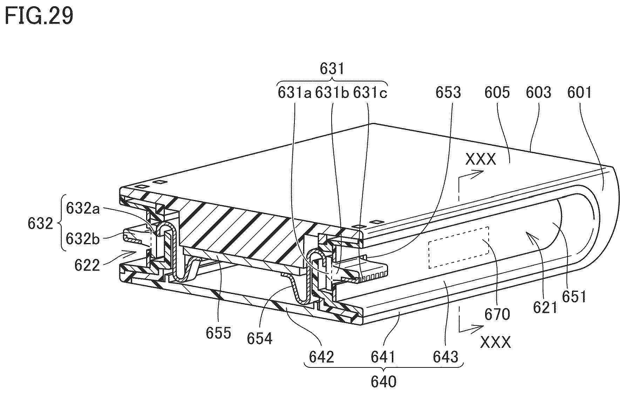

A configuration of the support portion will now be described. Fig. 29 is a partial schematic cross-sectional view showing the configuration of support portion 600. As shown in Fig. 29, support portion 600 of peripheral device 500 according to the present embodiment includes a support portion housing 640, a substrate 655, first plug 631, a second plug 632, a first bottom surface cover 651, and a second circuit 654. Support portion housing 640 includes a first housing 641, a second housing 642, and a third housing 643. Substrate 655 is arranged inside support portion housing 640.

Each of first recess 621 and second recess 622 is defined by third housing 643. When viewed in the left-right direction, third housing 643 is annular. First housing 641 surrounds third housing 643. First housing 641 is in contact with third housing 643. When viewed in the left-right direction, first housing 641 is annular.

A material for third housing 643 is harder than a material for each of first housing 641 and second housing 642. Strength of each of first recess 621 and second recess 622 can thus be higher. A material for third housing 643 is, for example, polycarbonate (PC), polyamide (PA), polyacetal (POM), acrylic (PMMA), and polybutylene terephthalate (PBT) which are engineering plastic or an alloy thereof. A material for each of first housing 641 and second housing 642 is, for example, acrylonitrile butadiene styrene (ABS) which is general-purpose plastic.

First housing 641 forms, for example, support portion front surface 605, support portion upper surface 603, and support portion lower surface 604. First housing 641 forms a part of each of support portion right side surface 601 and support portion left side surface 602. Second housing 642 forms support portion rear surface 606. Third housing 643 forms a part of each of support portion right side surface 601 and support portion left side surface 602.

First plug 631 includes a first plug base portion 631a and a first tongue-shaped body 631b. First tongue-shaped body 631b projects from a surface of first plug base portion 631a. First tongue-shaped body 631b is contiguous to first plug base portion 631a. First tongue-shaped body 631b may be separate from first plug base portion 631a. First tongue-shaped body 631b projects from the bottom surface of first recess 621. Specifically, first bottom surface cover 651 is provided with a first bottom surface through hole 653. First tongue-shaped body 631b passes through first bottom surface through hole 653 and projects from first bottom surface cover 651.

First tongue-shaped body 631b is inserted in first opening 170 of first game controller 1 attached to peripheral device 500. First tongue-shaped body 631b includes a third terminal 631c. Third terminal 631c is electrically connected to first terminal 160 of first game controller 1. Second circuit 654 is electrically connected to third terminal 631c. Peripheral device 500 includes first circuit 533 (see Fig. 27A). First circuit 533 and second circuit 654 are each connected to substrate 655. First circuit 533 is electrically connected to second circuit 654 through substrate 655. First circuit 533 is electrically connected to each of right contact 722 and left contact 822. First circuit 533, second circuit 654, and substrate 655 send a signal in accordance with an operation on right grip button 720 to first terminal 160 through third terminal 631c. A game controller side can thus perform processing in accordance with the operation on the grip button. For example, when the game controller includes a communication unit, a signal from the grip button can be transmitted to the outside such as game device 3 through the communication unit. By way of example, the signal from the grip button may be handled by game device 3 or an application executed by game device 3 as a signal for performing a specific function or as a signal for another input means.

First game controller 1 is charged through second circuit 654 and third terminal 631c by external supply of electric power through charging external connector 613 while first game controller 1 is attached to peripheral device 500. Second game controller 2 is also similarly charged.

Right grip button 720 and left grip button 820 are located at the rear surface of peripheral device 500 according to the present embodiment. Therefore, additional input means can be provided.

Second plug 632 includes a second plug base portion 632a and a second tongue-shaped body 632b. Second tongue-shaped body 632b is substantially the same in configuration as first tongue-shaped body 631b. Each of first tongue-shaped body 631b and second tongue-shaped body 632b can slightly move with respect to the bottom surface where the tongue-shaped body is located. In other words, each of first tongue-shaped body 631b and second tongue-shaped body 632b has a floating structure. Therefore, each of first tongue-shaped body 631b and second tongue-shaped body 632b can readily be inserted into the terminal opening of the game controller. When each of first tongue-shaped body 631b and second tongue-shaped body 632b includes a terminal, electrical connection between the game controller and peripheral device 500 can readily be maintained in spite of slight movement of the game controller attached to support portion 600 with respect to support portion 600.

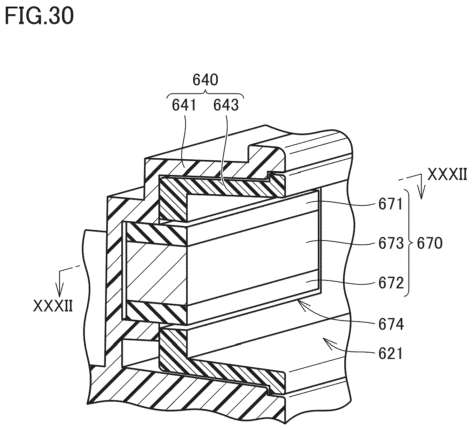

Fig. 30 is a partial schematic cross-sectional view along the line XXX-XXX in Fig. 29. Fig. 30 shows a state in which first bottom surface cover 651 is removed from first recess 621. As shown in Figs. 30 and 2, support portion 600 of peripheral device 500 includes two peripheral-device-side magnetic elements 670 located along the longitudinal direction of first recess 621. One of two peripheral-device-side magnetic elements 670 is arranged above first plug 631. The other of two peripheral-device-side magnetic elements 670 is arranged under first plug 631. Support portion 600 of peripheral device 500 includes two peripheral-device-side magnetic elements (not shown) located along the longitudinal direction of second recess 622.

As shown in Fig. 30, each of two peripheral-device-side magnetic elements 670 includes a magnet 673, a first yoke member 671, and a second yoke member 672. In the front-rear direction, magnet 673 is located between first yoke member 671 and second yoke member 672. Each of first yoke member 671 and second yoke member 672 is attracted to magnet 673. A magnet through hole 674 is located at a bottom surface of third housing 643. Magnet 673, first yoke member 671, and second yoke member 672 are located in magnet through hole 674.

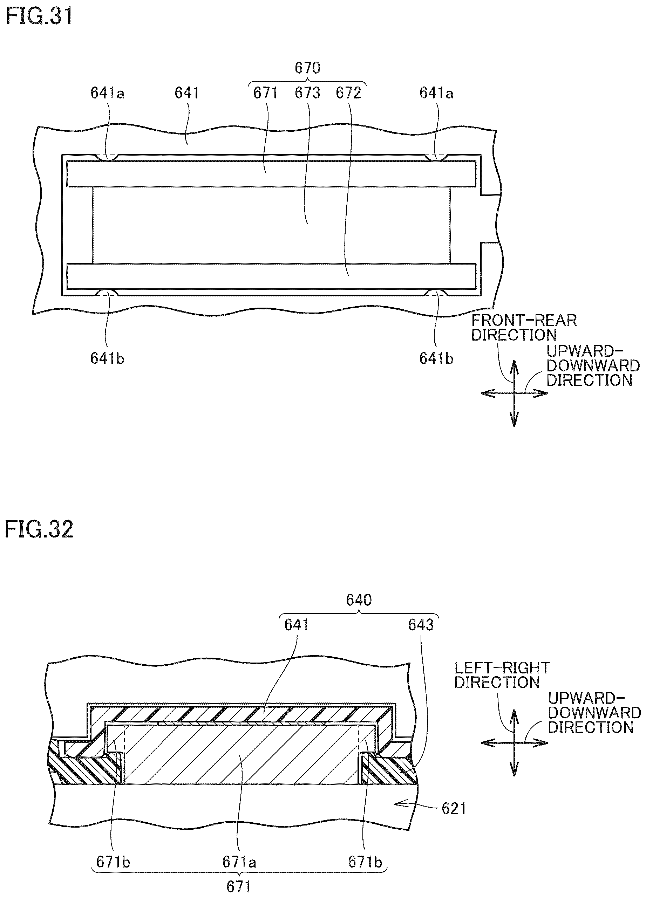

Fig. 31 is a schematic right side view showing a state in which third housing 643 is removed from Fig. 30. As shown in Fig. 31, first housing 641 is provided with two front ribs 641a and two rear ribs 641b. First yoke member 671 is pressed by two front ribs 641a. Second yoke member 672 is pressed by two rear ribs 641b. In the upward-downward direction, each of first yoke member 671 and second yoke member 672 is longer in length than magnet 673.

Fig. 32 is a partial schematic cross-sectional view along the line XXXII-XXXII in Fig. 30. The cross-section shown in Fig. 32 is perpendicular to the front-rear direction. First yoke member 671 includes a yoke main body portion 671a and two flange portions 671b. Two flange portions 671b are located at respective opposing sides of yoke main body portion 671a in the upward-downward direction. Abutment of two flange portions 671b on an inner wall surface of third housing 643 prevents first yoke member 671 from coming out of magnet through hole 674. Second yoke member 672 is substantially the same in configuration as first yoke member 671.

The attraction button of first game controller 1 is attracted by magnetic force to magnet 673 located in first recess 621. Specifically, upper-surface button (right) 110 of first game controller 1 is attracted to magnet 673 located above first plug 631 in first recess 621 and upper-surface button (left) 120 of first game controller 1 is attracted to magnet 673 located under first plug 631 in first recess 621. Similarly, the attraction button of second game controller 2 is attracted by magnetic force to magnet 673 located in second recess 622.

Two peripheral-device-side magnetic elements 670 each do not have to include the yoke. Each of two peripheral-device-side magnetic elements 670 may be arranged in an area above or below first plug 631.

### <Charging LED Component>

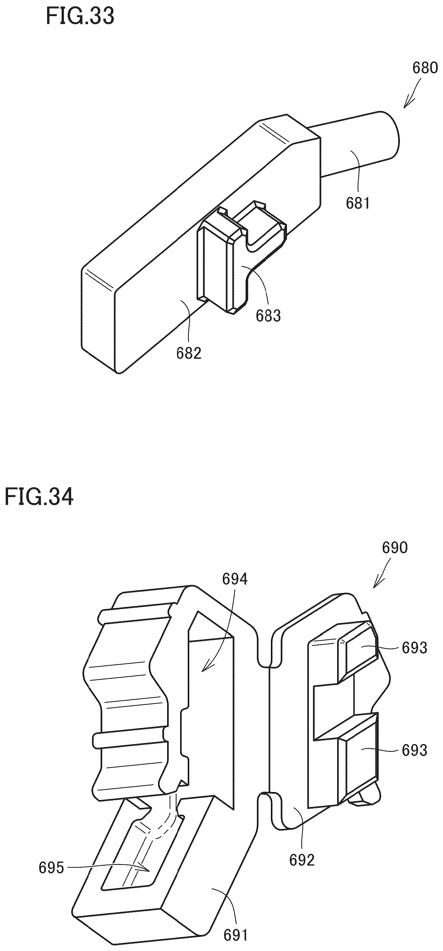

Fig. 33 is a schematic perspective view showing a configuration of an LED lens. As shown in Fig. 33, an LED lens 680 includes a lens main body portion 682, a lens light emission portion 681, and a lens protruding portion 683. Lens main body portion 682 is, for example, in a form of a plate. Lens light emission portion 681 is located at a side surface in the longitudinal direction of lens main body portion 682. Lens protruding portion 683 is located at a side surface in a direction of a short side of lens main body portion 682.

Fig. 34 is a schematic perspective view showing a configuration of an LED lens cover. As shown in Fig. 34, an LED lens cover 690 includes a lens accommodation portion 691 and a lid portion 692. A lens accommodation hole 694 is located at lens accommodation portion 691. Lens main body portion 682 is arranged in lens accommodation hole 694. Lid portion 692 is provided with a position adjustment protrusion 693. Position adjustment protrusion 693 is arranged at each of opposing sides of lens protruding portion 683 when LED lens 680 is arranged in lens accommodation hole 694. An LED accommodation recess 695 is located at lens accommodation portion 691. LED accommodation recess 695 is contiguous to lens accommodation hole 694.

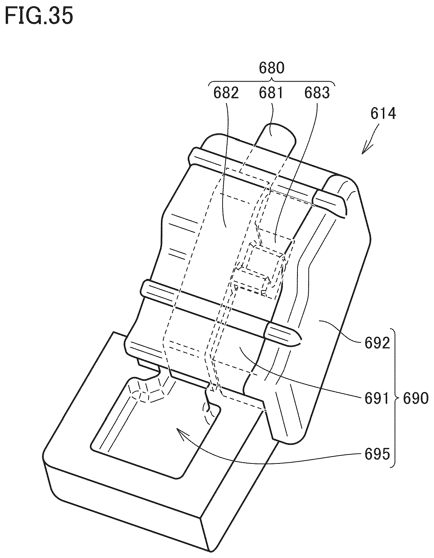

Fig. 35 is a schematic perspective view showing a charging LED component. As shown in Fig. 35, a charging LED component 614 includes LED lens 680 and LED lens cover 690. Lid portion 692 is closed to cover an opening of lens accommodation portion 691 while lens main body portion 682 is arranged in lens accommodation hole 694. Lens light emission portion 681 passes through a hole located in LED lens cover 690. Lens light emission portion 681 has a tip end located outside LED lens cover 690. LED lens 680 has a rear end exposed in LED accommodation recess 695. Light is incident from the rear end of LED lens 680 and emitted from the tip end of lens light emission portion 681 through lens main body portion 682.

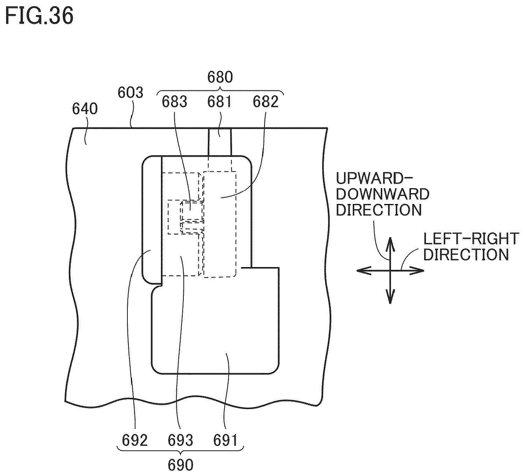

Fig. 36 is a schematic diagram showing a state in which charging LED component 614 is attached to the housing of support portion 600. As shown in Fig. 36, LED lens cover 690 is arranged inside support portion housing 640. Lens light emission portion 681 has the tip end located outside the housing of support portion 600. As shown in Fig. 25, lens light emission portion 681 of LED lens 680 has the tip end exposed at support portion upper surface 603 of support portion 600.

Fig. 37 is a six-view schematic diagram showing a state in which first game controller 1 and second game controller 2 are attached to peripheral device 500. As shown in Fig. 37, first game controller 1 is attached to the right side of support portion 600. At this time, the attraction button of first game controller 1 is attracted by magnetic force to magnet 673 located at first recess 621. Second game controller 2 is attached to the left side of support portion 600. At this time, the attraction button of second game controller 2 is attracted by magnetic force to magnet 673 located at second recess 622. First opposing surface 715 of right grip 700 is opposed to the rear surface of first game controller 1 while first game controller 1 is attached to peripheral device 500. Similarly, a second opposing surface 815 of left grip 800 is opposed to the rear surface of second game controller 2 while second game controller 2 is attached to peripheral device 500. Grip module 900 is connected in the rear of support portion 600. Though description will be given below mainly from a point of view of first game controller 1, the description is also similar for second game controller 2 unless particularly mentioned.

In the front-rear direction, Z shoulder button (right) 140 has a rear end located in the rear of first opposing surface 715. In the front-rear direction, Z shoulder button (right) 140 has the rear end located in front of the rear end of right grip 700. In the front-rear direction, shoulder button (right) 130 has a rear end located in front of first opposing surface 715. In the front-rear direction, projecting portion 18 has a rear end located in the rear of first opposing surface 715. In the front-rear direction, projecting portion 18 has the rear end located in front of the rear end of right grip 700. In a top view, a part of an upper surface of grip housing 530 is covered with Z shoulder button (right) 140. More specifically, in the top view, a part of first upper surface 713 of right grip 700 is covered with Z shoulder button (right) 140.

In the right side view, grip housing 530 is located in the rear of first game controller 1. More specifically, at a position the same as first game controller 1 in the upward-downward direction, grip housing 530 is located in the rear of first game controller 1. From another point of view, in the right side view, grip housing 530 does not cover first game controller 1 but first game controller 1 is exposed. Therefore, first game controller 1 is readily attached to or removed from support portion 600 from the right side.

In the rear view, grip housing 530 covers a part of first game controller 1 but a part thereof is exposed.

In the left-right direction, right grip 700 has a right end located on the right of a right end of first game controller 1.

In the upward-downward direction, right grip 700 has an upper end located under an upper end of first game controller 1. In the upward-downward direction, right grip 700 has a lower end located at a position substantially the same as a lower end of first game controller 1 or above the same. In the upward-downward direction, first operation portion 182 is located above the upper end of right grip 700. In the upward-downward direction, projecting portion 18 has the rear end located above the upper end of right grip 700.

In the upward-downward direction, grip housing 530 has an upper surface located under first operation portion 182 and second operation portion 282. More particularly, a portion in the upper surface of grip housing 530 located between first operation portion 182 and second operation portion 282 in the left-right direction is located under first operation portion 182 and second operation portion 282 in the upward-downward direction. The portion may extend in parallel to the left-right direction. Therefore, the user who holds peripheral device 500 to which first game controller 1 and second game controller 2 are attached readily puts his/her finger on first operation portion 182 and second operation portion 282. Specifically, by way of example, interference between the forefinger and the upper surface of grip housing 530 is suppressed when the user extends his/her right forefinger to an inner side of first operation portion 182 (the side of second operation portion 282) to press down first operation portion 182 from the inner side.

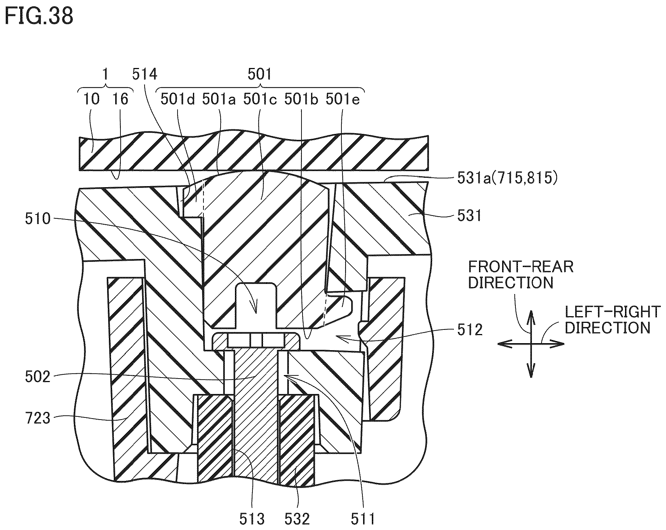

Fig. 38 is a schematic cross-sectional view showing a configuration of a vicinity of first opposing surface 715 of right grip 700. While first game controller 1 is attached to peripheral device 500, rear surface 16 of first game controller 1 abuts on elastic member 501. Rear surface 16 of first game controller 1 is distant from first opposing surface 715 of right grip 700. Elastic member 501 may contract in the front-rear direction by pressing thereof by the rear surface of the game controller. In this case, rear surface 16 of first game controller 1 may abut on first opposing surface 715 of right grip 700.

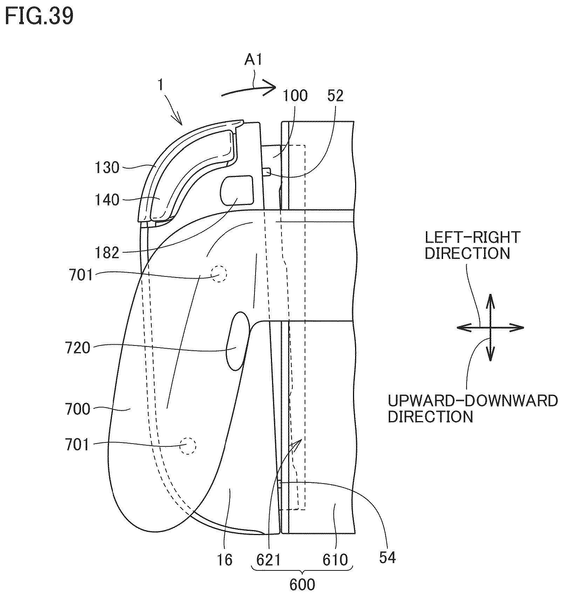

Fig. 39 is a schematic rear view showing a state of exemplary attachment of first game controller 1 to peripheral device 500. As shown in Fig. 39, a lower end of projection 100 of first game controller 1 is inserted in first recess 621 in support portion 600. In this state, the longitudinal direction of projection 100 of first game controller 1 is inclined with respect to the longitudinal direction of first recess 621 in support portion 600. First game controller 1 then rotates along a first rotation direction A1 on a plane perpendicular to the front-rear direction such that an upper end of projection 100 of first game controller 1 is matched with first recess 621 in support portion 600. First game controller 1 is thus attached to peripheral device 500 such that projection 100 of first game controller 1 is matched with first recess 621 located at the right side surface of support portion 600. A method of attaching first game controller 1 to peripheral device 500 is not limited thereto. First game controller 1 may be attached to peripheral device 500, for example, by matching projection 100 with first recess 621 from a direction perpendicular to the bottom surface of first recess 621 while the bottom surface of first recess 621 is in parallel to the longitudinal direction of projection 100.

According to peripheral device 500 according to the present embodiment, the front surface of right grip 700 is located in the rear of support portion 600 in the front-rear direction (see Fig. 22). Therefore, when first game controller 1 is brought closer toward first recess 621 from the outer side of support portion right side surface 601, right grip 700 is less likely to interfere with first game controller 1 and first game controller 1 can readily be attached to peripheral device 500. When the front surface of right grip 700 is curved rearward with distance from support portion 600, attachment of the game controller is further facilitated.

According to the configuration as above, a clearance may be located between the rear surface of the game controller and the front surface of the grip. In this case, when the game controller is operated or when the game controller includes a vibration module and vibrates, collision between the rear surface of the game controller and the front surface of the grip may cause wobbling or noise.

Peripheral device 500 according to the present embodiment includes elastic member 501 that projects forward from the opposing surface of right grip 700 (see Fig. 22). Abutment of the rear surface of the game controller on elastic member 501 can thus suppress collision between the rear surface of the game controller and the front surface of the grip. Consequently, wobble or noise can be suppressed. In other words, according to peripheral device 500 according to the present embodiment, while attachment of the game controller to peripheral device 500 including the grip is facilitated, occurrence of wobble or noise at the time of attachment of the game controller can be suppressed.

According to peripheral device 500 according to the present embodiment, a front end of elastic member 501 located at right grip 700 is located in the rear of first recess 621. Attachment of the game controller to peripheral device 500 including the grip can further be facilitated. Slide of the rear surface of the game controller with respect to the front surface of the grip at the time of attachment and removal of the game controller to and from peripheral device 500 can also be suppressed.

According to peripheral device 500 according to the present embodiment, in the front-rear direction, the front end of elastic member 501 is located at a position the same as the rear end of support portion 600 or in front thereof. Thus, while the game controller is readily attached to peripheral device 500, the rear surface of the game controller and elastic member 501 are readily in contact with each other to some extent. Therefore, occurrence of wobble or noise at the time of attachment of the game controller can further be suppressed.

According to peripheral device 500 according to the present embodiment, lower right elastic member piece 701 of two right elastic member pieces 701 is located at the position more distant from support portion 600 than upper right elastic member piece 701. Therefore, when game controller 1 is attached to peripheral device 500 to bring first game controller 1 closer to first recess 621 in the manner shown in Fig. 39, lower right elastic member piece 701 initially comes in contact with the rear surface of first game controller 1. Slide of the rear surface of first game controller 1 with respect to first opposing surface 715 of right grip 700 during subsequent movement is thus suppressed. Furthermore, since upper right elastic member piece 701 is located relatively closer to first recess 621 than lower right elastic member piece 701, timing of occurrence of resistance due to contact between the rear surface of first game controller 1 and upper right elastic member piece 701 in attachment of first game controller 1 to peripheral device 500 while first game controller 1 is rotated can be delayed. Therefore, attachment of first game controller 1 is facilitated.

In an example where first game controller 1 is brought closer toward first recess 621 to match projection 100 with first recess 621 from the direction perpendicular to the bottom surface of first recess 621 while the bottom surface of first recess 621 is in parallel to the longitudinal direction of projection 100, when two right elastic member pieces 701 are arranged in parallel to the bottom surface of first recess 621, two right elastic member pieces 701 may simultaneously come in contact with the rear surface of first game controller 1 in the middle of an attachment operation. In this case, resistance is simultaneously applied from two right elastic member pieces 701 to first game controller 1 at the time of attachment, and resistance in the attachment operation may suddenly increase.

According to peripheral device 500 according to the present embodiment, elastic member 501 includes two right elastic member pieces 701 and two right elastic member pieces 701 are aligned in the direction not in parallel to the direction of extension of the bottom surface of first recess 621. Two right elastic member pieces 701 are located at positions different in distance from support portion 600. Thus, in attachment of first game controller 1 to peripheral device 500 as above, two right elastic member pieces 701 come in contact with the rear surface of first game controller 1 one by one at different timing. Therefore, sudden increase in resistance applied to first game controller 1 by two right elastic member pieces 701 at the time of attachment can be suppressed.

While first game controller 1 is attached to peripheral device 500, upper side surface 11 of first game controller 1 and support portion right side surface 601 may be distant from each other. From another point of view, a depth from support portion right side surface 601 to the bottom surface of first recess 621 may be larger than the largest height from upper side surface 11 to top surface 106 of projection 100. Therefore, for example, while first cushion 191 and second cushion 192 of the first game controller are in contact with the bottom surface of first recess 621, upper side surface 11 and support portion right side surface 601 do not have to be in contact with each other. In an example where force to rotate first game controller 1 as twisting the same around the side of projection 100 in a forward direction is applied while first game controller 1 is attached to peripheral device 500, while upper side surface 11 and support portion right side surface 601 are in contact with each other, force for detachment may tend to be applied, with the contact being defined as the fulcrum. According to the configuration above, when force to rotate first game controller 1 is applied, the contact between projection 100 and first recess 621 serves as the fulcrum and hence force for detachment is suppressed.

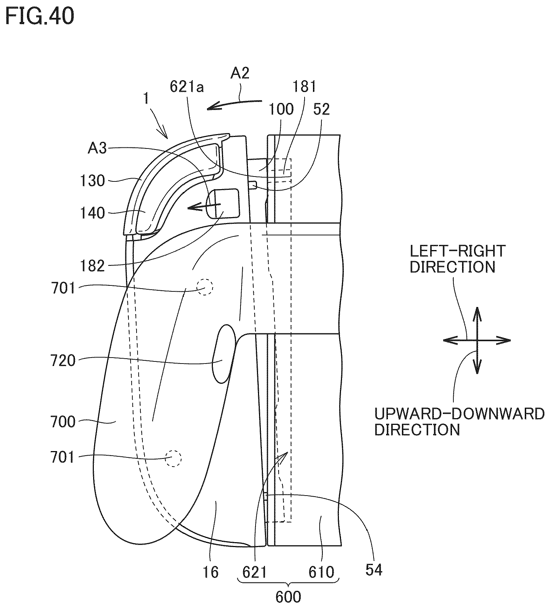

Fig. 40 is a schematic rear view showing a state of removal of first game controller 1 from peripheral device 500. As shown in Fig. 40, first game controller 1 includes first operation portion 182 and pusher 181. First operation portion 182 is located at the rear surface of first game controller 1. First operation portion 182 is configured as being operated in a direction including the left-right direction while first game controller 1 is attached to peripheral device 500. Pusher 181 projects from the top surface of projection 100 of first game controller 1 in accordance with an operation on first operation portion 182.

The bottom surface of first recess 621 includes an abutment area 621a on which pusher 181 of first game controller 1 abuts. As pusher 181 pushes abutment area 621a, first game controller 1 rotates along a second rotation direction A2 with the lower end of projection 100 being defined as the fulcrum. The attraction button of first game controller 1 thus moves away from magnet 673 located in first recess 621. In particular, upper-surface button (right) 110 moves away from magnet 673 more than upper-surface button (left) 120. Therefore, magnetic force between upper-surface button (right) 110 and magnet 673 is particularly weakened. Since projection 100 of first game controller 1 can thus readily be detached from first recess 621, first game controller 1 can readily be taken out of peripheral device 500. In the right side view, grip housing 530 does not cover first game controller 1 but the first game controller is exposed. Therefore, when the pusher pushes the abutment area, first game controller 1 tends to move away toward the right. When pusher 181 projects, upper-surface button (left) 120 does not have to move away from magnet 673.

In the upward-downward direction, the upper end of right grip 700 is provided as being located below a lower end of first operation portion 182. From another point of view, in the upward-downward direction, the upper surface of grip housing 530 that forms right grip 700 is located below the lower end of first operation portion 182 of first game controller 1 attached to peripheral device 500.

Interference between a finger with which first operation portion 182 is operated and right grip 700 in operations on first operation portion 182 is thus suppressed.

Abutment area 621a in first recess 621 is located above the center of first recess 621 in the upward-downward direction of first recess 621. When first operation portion 182 is operated, first game controller 1 pivots around a lower side of projection 100 such that an upper side of projection 100 moves away from first recess 621. The finger with which first operation portion 182 is operated is also moved downward with distance from first recess 621.

According to peripheral device 500 according to the present embodiment, the upper surface of right grip 700 includes a portion that extends in the direction in parallel to the left-right direction and a portion connected to the outer end of the portion and curved downward. Since the upper surface of right grip 700 includes the portion curved downward, interference with the upper surface of right grip 700, of a finger with which first operation portion 182 is operated is suppressed in spite of movement downward of the finger as first game controller 1 moves away from first recess 621. Interference of projecting portion 18 with the upper surface of grip housing 530 is also suppressed. By way of example, the upper surface of right grip 700 includes a portion curved along a trace of movement of first operation portion 182 when first game controller 1 pivots around the lower side of projection 100 as moving away from first recess 621.

According to peripheral device 500 according to the present embodiment, upper right elastic member piece 701 of two right elastic member pieces 701 is located at the position closer to support portion 600 than lower right elastic member piece 701. When operation portion 182 is operated, the game controller pivots around the lower side of the projection such that the upper side of the projection moves away from the recess. Since upper right elastic member piece 701 is located at the inner side of lower right elastic member piece 701, contact between the rear surface of the game controller and upper right elastic member piece 701 is released early. Therefore, detachment of the game controller is facilitated.

As shown in Fig. 40, projection 100 of first game controller 1 includes an upper projecting portion 52 and a lower projecting portion 54 located at the outer peripheral surface of projection 100. First recess 621 may have such a depth that at least more than half of upper projecting portion 52, for example, the entirety of upper projecting portion 52, of upper projecting portion 52 and lower projecting portion 54 is exposed in first recess 621 when pusher 181 projects. Interference between upper projecting portion 52 and the inner peripheral surface of first recess 621 is thus lessened. Therefore, after first operation portion 182 is operated, projection 100 of first game controller 1 can manually smoothly be detached from first recess 621.

As shown in Fig. 40, when pusher 181 completely projects, the entirety of upper projecting portion 52 may be exposed in first recess 621 but a part of lower projecting portion 54 does not have to be exposed in first recess 621. As described above, upper projecting portion 52 and lower projecting portion 54 may each be an elastically deformable body or may be formed from outer peripheral surface 107 of projection 100.

First recess 621 may have such a depth that the entire top surface of projection 100 of first game controller 1 is kept accommodated in first recess 621 when pusher 181 projects. At this time, the upper end and the lower end of the top surface of projection 100 are not out of first recess 621 simply due to projection of the pusher, and therefore first game controller 1 and peripheral device 500 are kept restricted to some extent in the upward-downward direction. Therefore, for example, when the operation portion is operated to remove first game controller 1 from peripheral device 500 but removal is stopped and the first game controller is again attached to peripheral device 500, first game controller 1 can smoothly be attached again to peripheral device 500.

Fig. 41 is a schematic front view showing a state in which the user operates first game controller 1 and second game controller 2. As shown in Fig. 41, right grip 700 is held by the right hand of the user. Grip housing 530 of right grip 700 is held, for example, by the palm, the middle finger, the ring finger, and/or the little finger of the right hand. Left grip 800 is held by the left hand of the user. Grip housing 530 of left grip 800 is held, for example, by the palm, the middle finger, the ring finger, and/or the little finger of the left hand.

The input portions located at the front surfaces of the game controllers are operated with the thumbs of respective hands. The Z shoulder button and/or the shoulder button of the game controller is/are operated with the forefinger and/or the middle finger. The grip button is operated with the middle finger and/or the ring finger. By being attached to peripheral device 500, first game controller 1 and second game controller 2 can thus be handled like a game controller to be held and operated by both hands. Right grip 700 and left grip 800 each including the grip button can not only facilitate holding but also substantially increase input means for first game controller 1 and second game controller 2. A finger to be used for operations is by way of illustration. For example, in an example, an input portion located at the front surface of the game controller may be operated with the forefinger.

### <Modification>

A configuration of a peripheral device according to a modification will now be described. Though the peripheral device according to the embodiment is configured to electrically be connected to the game controller, the peripheral device does not have to electrically be connected to the game controller. In this case, the peripheral device may simply support the game controller, and does not have to include the grip button. The peripheral device does not have to include the charging LED component and the charging external connector either. In other words, the peripheral device does not have to include an electric component.

The peripheral device may include a radio communication unit. In this case, the peripheral device may include the grip button and an input from the grip button may be transmitted to the game controller or the game device through the radio communication unit. At this time, the peripheral device may include at least a charging external connector.

When the peripheral device is not electrically connected to the game controller, the peripheral device does not have to include the first tongue-shaped body and the second tongue-shaped body. When the peripheral device does not include the tongue-shaped body, however, a phenomenon as below may occur.

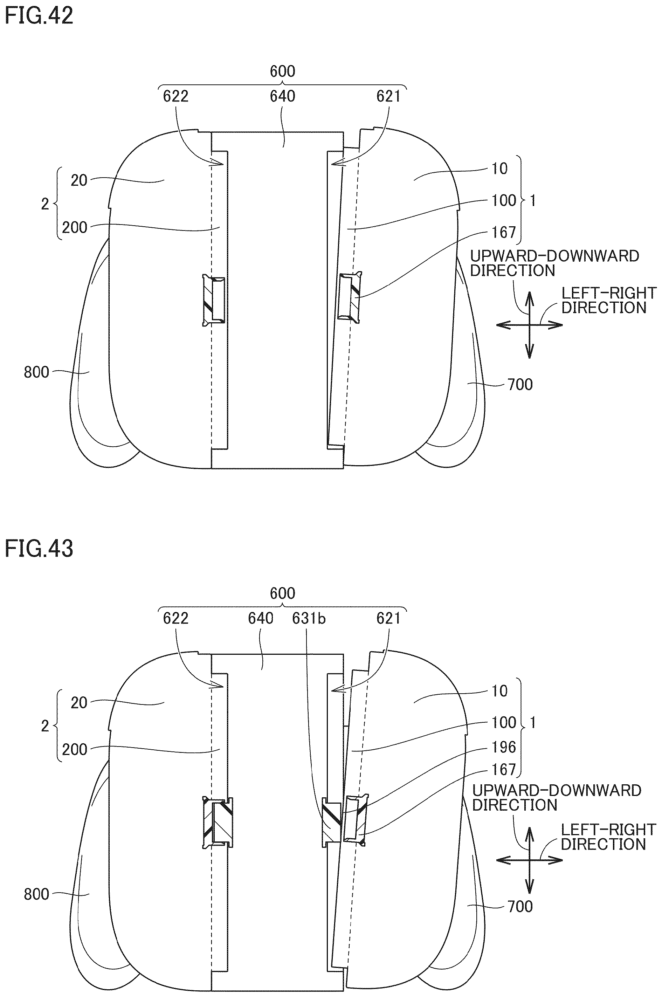

Fig. 42 is a partial schematic cross-sectional view showing a state of attachment of first game controller 1 to peripheral device 500 when support portion 600 does not include the tongue-shaped body. As shown in Fig. 42, the lower end of projection 100 of first game controller 1 is matched with first recess 621 in support portion 600. In this case, the upper end of projection 100 of first game controller 1 may ride on an upper portion of the right side surface of support portion 600 provided with first recess 621.

Fig. 43 is a partial schematic cross-sectional view showing a state of attachment of first game controller 1 to peripheral device 500 when support portion 600 includes the tongue-shaped body. When first tongue-shaped body 631b and terminal opening 196 located in terminal accommodation portion 167 are aligned in the upward-downward direction, first tongue-shaped body 631b is matched with terminal opening 196. When first tongue-shaped body 631b and terminal opening 196 are not aligned in the upward-downward direction, on the other hand, first tongue-shaped body 631b is in contact with the top surface of projection 100. In this case, first tongue-shaped body 631b and terminal opening 196 can be aligned while first tongue-shaped body 631b slides over the top surface of projection 100 by movement of projection 100 in the upward-downward direction.

First tongue-shaped body 631b may be the same as or different from tongue-shaped body 332 (see Fig. 8) of game device 3 in shape. First tongue-shaped body 631b of the peripheral device according to the embodiment is in a shape substantially the same as tongue-shaped body 332 of game device 3.

Thus, not only tongue-shaped body 322 is provided with a terminal that electrically connects peripheral device 500 and the game controller to each other but also it plays a role as a guide in attachment of the game controller to peripheral device 500. The peripheral device not electrically connected to the game controller may be provided with a projecting body that serves as a guide in attachment of the game controller to the peripheral device, instead of the tongue-shaped body.

An exemplary shape of the projecting body will be described below in comparison to the tongue-shaped body of the game device. A structure of the tongue-shaped body will initially be described in further detail.

### <Tongue-Shaped Body>

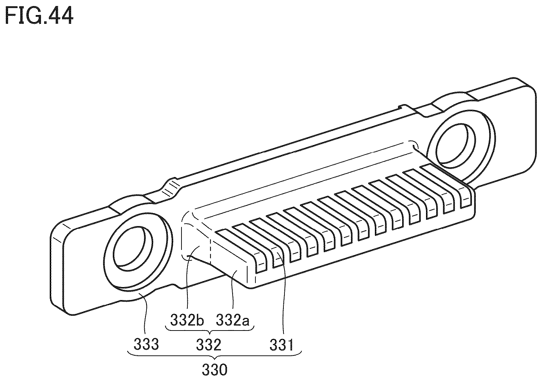

Fig. 44 is a schematic perspective view showing a configuration of the tongue-shaped body of the game device. As shown in Fig. 44, game device 3 includes tongue-shaped body 332. Tongue-shaped body 332 is located at game-device-side recess 310. Tongue-shaped body 332 is inserted in first opening 170 of first game controller 1. Tongue-shaped body 332 includes main body first terminal 331. Main body first terminal 331 is a game device terminal to electrically be connected to a game controller terminal (first terminal 160).

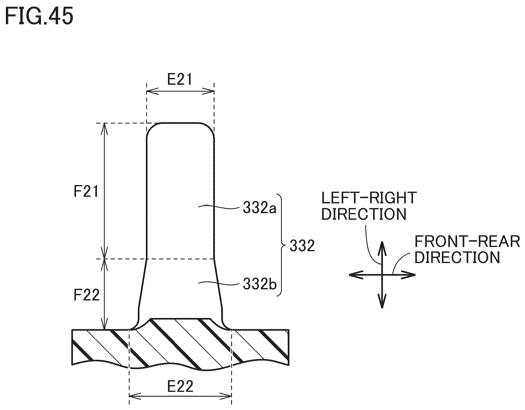

Fig. 45 is a partial schematic cross-sectional view showing the configuration of the tongue-shaped body. Tongue-shaped body 332 includes a second tip end portion 332a and a second root portion 332b. Second tip end portion 332a is contiguous to second root portion 332b. Second tip end portion 332a is smaller in thickness than second root portion 332b. Second tip end portion 332a is in line symmetry with respect to the left-right direction. Second root portion 332b increases in thickness with distance from second tip end portion 332a. Second root portion 332b is in line symmetry with respect to the left-right direction. In the left-right direction, a height of second root portion 332b (a second root portion height F22) is smaller than a height of second tip end portion 332a (a second tip end portion height F21).

A thickness of the tip end (a second tip end thickness E21) of tongue-shaped body 332 is smaller than a thickness of a root (a second root thickness E22) of tongue-shaped body 332. A thickness of a tip end (a first tip end thickness E11) of a projecting body is smaller than the thickness of the tip end (second tip end thickness E21) of tongue-shaped body 332. A thickness of a root (a first root thickness E12) of the projecting body is equal to the thickness of the root (second root thickness E22) of tongue-shaped body 332.

### <Projecting Body>

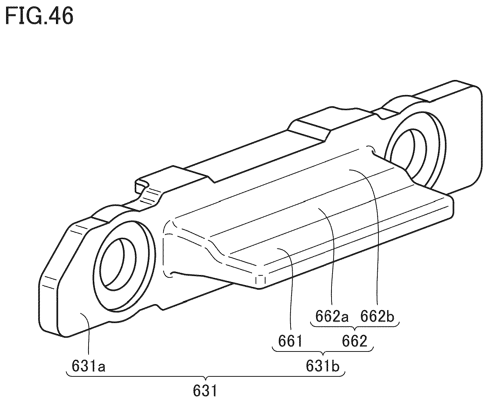

Fig. 46 is a schematic perspective view showing a configuration of the projecting body of the peripheral device according to the modification of the present embodiment. As shown in Fig. 46, a first projecting body 631b does not include a terminal to electrically be connected to the game controller terminal (first terminal 160) of first game controller 1.

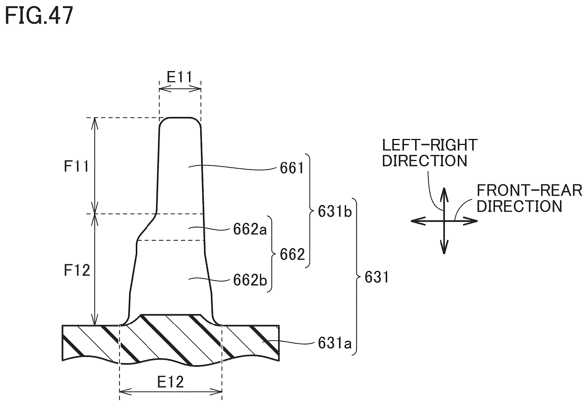

Fig. 47 is a partial schematic cross-sectional view showing the configuration of the projecting body of the peripheral device according to the modification of the present embodiment. As shown in Fig. 47, first projecting body 631b includes a first tip end portion 661 and a first root portion 662. First tip end portion 661 is contiguous to first root portion 662. First tip end portion 661 is smaller in thickness than first root portion 662. In the cross-section shown in Fig. 47, first tip end portion 661 is in line symmetry with respect to the left-right direction. First root portion 662 increases in thickness with distance from first tip end portion 661. In the left-right direction, a height of first root portion 662 (first root portion height F12) is larger than a height of first tip end portion 661 (first tip end portion height F11).

First root portion 662 includes a first root area 662a and a second root area 662b. Second root area 662b is a portion that extends from first plug base portion 631a and is large in thickness for securing strength. The thickness of second root area 662b gently decreases with distance from first plug base portion 631a or is constant. First root area 662a is contiguous to second root area 662b. The thickness of first root area 662a suddenly decreases with distance from second root area 662b. An inclination of a surface of first root area 662a with respect to the left-right direction is larger than an inclination of a surface of second root area 662b with respect to the left-right direction. First root area 662a is contiguous to first tip end portion 661. In the cross-section shown in Fig. 31, first root area 662a is asymmetric with respect to the left-right direction. First root area 662a is located between first tip end portion 661 and second root area 662b. The thickness of first root area 662a is equal to or larger than a maximum value of the thickness of first tip end portion 661 and equal to or smaller than a minimum value of the thickness of second root area 662b. Second root area 662b may be in line symmetry with respect to the left-right direction. The thickness of the tip end (first tip end thickness E11) of a protruding portion is smaller than the thickness of the root (first root thickness E12) of the protruding portion.

First projecting body 631b has a such a height as achieving contact with the top surface of projection 100 of first game controller 1 when a part of projection 100 is inserted in the first recess while projection 100 of first game controller 1 is inclined in the upward-downward direction with respect to the first recess. First projecting body 631b comes in contact with the top surface of projection 100 when it is not aligned with terminal opening 196 in the upward-downward direction. Alignment between first projecting body 631b and terminal opening 196 is facilitated by moving first game controller 1 in the upward-downward direction while the top surface of projection 100 is in contact with first projecting body 631b. Ride of the end of projection 100 of first game controller 1 on the right side surface of the support portion provided with the first recess can be suppressed. Second projecting body 632b located at the side of the left side surface of the support portion achieves the configuration and effects substantially the same as those of first projecting body 631b.

According to the peripheral device according to the present modification, the thickness of the tip end of first projecting body 631b is smaller than the thickness of the tip end of tongue-shaped body 332. Contact of first terminal 160 of first game controller 1 with first projecting body 631b at the time of attachment of projection 100 of first game controller 1 to the first recess in the peripheral device can thus be suppressed.

According to the peripheral device according to the present modification, the thickness of the root of first projecting body 631b is equal to the thickness of the root of tongue-shaped body 332. Great strength of first projecting body 631b can thus be maintained.

The shape of the projecting body is by way of example and another shape may be applicable. For example, the projecting body may have a thickness constant from the root to the tip end. For example, the projecting body may be in a shape decreasing in thickness at a constant rate from the root to the tip end. The projecting body does not have to include a portion in line symmetry with respect to the left-right direction.

In another modification, peripheral device 500 includes a right grip button and a left grip button and does not have to include a charging LED component and a charging external connector. Peripheral device 500 includes the charging external connector but does not have to include the right grip button and the left grip button.

First game controller 1 and second game controller 2 do not have to include the operation portion and the pusher that projects from the top surface of the projection in accordance with an operation on the operation portion.

First game controller 1 and second game controller 2 do not have to include the projecting portion that projects from the rear surface.

Peripheral device 500 may include a processor (not shown). For example, the processor may read an application program and perform information processing. Peripheral device 500 may include a radio communication unit (not shown). Peripheral device 500 may transmit and receive data to and from the game controller through the radio communication unit. The radio communication unit may support such a communication system as Bluetooth^{®} or infrared communication. Peripheral device 500 may transmit and receive data to and from an information processing apparatus other than the game controller through the radio communication unit.

In the front-rear direction, the front end of the elastic member may be located at a position the same as the recess or in front thereof.

In the front-rear direction, the front end of the elastic member may be located in the rear of the support portion.

The peripheral device does not have to include the elastic member.

The upper surface of grip housing 530 may be located above the projecting portion or the operation portion.

The grip module and the support portion do not have to be separate components. For example, a housing at a rear side of the support portion and a front housing of the grip may integrally be formed. Alternatively, a right portion of the support portion and a right housing may form an integrated right housing, a left portion of the support portion and a left housing may form an integrated left housing, and they may be connected to each other.

The right side surface and the left side surface of the support portion do not have to be in parallel. At this time, the first game controller and the second game controller attached to the support portion do not have to be in parallel to each other.

The abutment area in peripheral device 500 may be located at the center of the recess or located below the center of the recess of the upward-downward direction.

In another embodiment, the recess in the peripheral device does not have to be provided with the abutment area. By way of example, the pusher that projects does not have to abut on the recess by being inserted in a hole located in the recess.

In another embodiment, the grip housing may cover the game controller in the side view.

In another embodiment, though the peripheral device is provided with the opposing surface opposed to the rear surface of the game controller, it does not have to have a grip structure. Specifically, the peripheral device may be comprised of a recess with which the game controller is to be matched, a support portion provided with a magnet to which the attraction button of the game controller is to be attracted by magnetic force, an opposing surface opposed to the rear surface of the game controller attached to the peripheral device, and an elastic member that projects forward from the opposing surface. The game controller can thus readily be attached to peripheral device 500 and the elastic member that projects forward from the opposing surface may suppress chatter or wobble.

In another embodiment, the peripheral device is not provided with the grip structure or the opposing surface opposed to the rear surface of the game controller but may be comprised of a recess with which the projection of the game controller is to be matched, a support portion provided with a magnet to which the attraction button of the game controller is to be attracted by magnetic force, and a projecting body that projects from the bottom surface of the recess, is to be inserted in the opening in the game controller attached to the peripheral device, and does not include a terminal electrically connected to the game controller terminal. Alignment between the recess and the projection can thus be achieved with the use of the projecting body. The peripheral device may include another fixing structure instead of the magnet, or does not have to include the fixing structure.

In another embodiment, only any one of first game controller 1 and second game controller 2 may be attached to the peripheral device. When both of first game controller 1 and second game controller 2 are attached to the peripheral device, attachment is not limited to a manner in which the game controllers are attached with the support portion lying therebetween. In another embodiment, the peripheral device does not have to include a magnet. A mechanism to fix the game controller to the support portion is not limited, and for example, an engagement element may be used.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 first game controller, game controller
2 second game controller
3 game device
10, 20 controller housing
11, 211 upper side surface
12 right side surface
13 lower side surface
14 left side surface
15 front surface
16 rear surface
17 housing opening
18 projecting portion
19 projection flange
31, 41 joystick
32, 42 one set of four buttons
33(1) + button
33(2) home button
43(1) - button
43(2) capture button
50 synchronization button
51, 53 ground connection portion
52 first elastically deformable body, upper projecting portion
52a first elastic portion
52b second elastic portion
52c first elastic area
52d second elastic area
54 second elastically deformable body, lower projecting portion
61 front-surface-side housing
62 rear-surface-side housing
71, 73 first inner surface
72, 74 second inner surface
90 flexible printed circuit
100, 200 projection
101 first area
102 second area
103 third area
104 fourth area
105 fifth area
106 top surface
107 outer peripheral surface
110, 210 upper-surface button (right)
111, 121 first protruding portion
112, 122 second protruding portion
113, 123 flange
114, 124 main body portion
115, 125 operation surface
117, 127 tact switch
118, 128 sidewall
120, 220 upper-surface button (left)
130 shoulder button (right)
140 Z shoulder button (right)
150, 250 light emission portion
160 first terminal
161 socket
162 female connector
164 first front-surface-side wall surface
165 first rear-surface-side wall surface
166 inner wall surface
167 terminal accommodation portion
170 first opening
181 pusher
182 operation portion, first operation portion
183 biasing portion
184 rotation shaft
185 pusher actuation portion
186 pusher operation member
191 first cushion
192 second cushion
193 first engagement hole
194 second engagement hole
195 synchronization button opening
196 terminal opening
197 fifth opening
198 sixth opening
230 shoulder button (left)
240 Z shoulder button (left)
253, 254 mouse skate
260 second terminal
270 mouse sensor opening
274 mouse operation sensor
282 operation portion, second operation portion
301 audio input and output terminal
302 upper terminal
303 lower terminal
304 storage medium slot
305 display
306 main body housing
307 power button
310, 320 game-device-side recess
311 base surface
313 main body right side surface
314 main body left side surface
315 main body front surface
316 main body upper side surface
317 main body lower side surface
330 first plug connector
331 main body first terminal
332 tongue-shaped body
332a second tip end portion
332b second root portion
333 connector support portion
334 shoulder screw
337 through hole
338 cover member
341 main body second terminal
401 first hole
402 second hole
410 first game-device-side magnetic element
420 second game-device-side magnetic element
500 peripheral device
501 elastic member
501a first side surface area
501b second side surface area
501c elastic member main body
501d first projecting portion
501e second projecting portion
502 fastening member
510 elastic member arrangement hole
511 first through hole
512 second through hole
513 screw boss
514 step portion
530 grip housing
531 front grip housing
531a front surface
532 rear grip housing
532a grip button arrangement hole
533 first circuit
541 first fastened portion
542 second fastened portion
600 support portion
601 support portion right side surface
602 support portion left side surface
603 support portion upper surface
604 support portion lower surface
605 support portion front surface
606 support portion rear surface
611 first optical guide path
612 second optical guide path
613 charging external connector
614 charging LED component
621 first recess
621a abutment area
622 second recess
631 first plug
631a first plug base portion
631b first projecting body, first tongue-shaped body
631c third terminal
632 second plug
632a second plug base portion
632b second projecting body, second tongue-shaped body
640 support portion housing
641 first housing
641a front rib
641b rear rib
642 second housing
643 third housing
651 first bottom surface cover
653 first bottom surface through hole
654 second circuit
655 substrate
661 first tip end portion
662 first root portion
662a first root area
662b second root area
670 peripheral-device-side magnetic element
671 first yoke member
671a yoke main body portion
671b flange portion
672 second yoke member
673 magnet
674 magnet through hole
680 lens
681 lens light emission portion
682 lens main body portion
683 lens protruding portion
690 lens cover
691 lens accommodation portion
692 lid portion
693 position adjustment protrusion
694 lens accommodation hole
695 LED accommodation recess
700 right grip
701, 701a, 701b right elastic member piece
702 right fastening member
713 first upper surface
715 first opposing surface
720 right grip button
720a grip button operation surface
720b grip button main body portion
720c coming-off prevention portion
721 right rubber member
722 right contact
723 right contact support member
723a first attachment portion
723b second attachment portion
723c contact support main body portion
800 left grip
801, 801a, 801b left elastic member piece
802 left fastening member
813 second upper surface
815 second opposing surface
820 left grip button
821 left rubber member
822 left contact
823 left contact support member
900 grip module
1000 information device apparatus
3120 game-device-side inner peripheral surface
3121 game-device-side bottom surface
A1 first rotation direction
A2 second rotation direction
A3 arrow
D1 first distance
D2 second distance
D3 third distance
D4 fourth distance
E11 first tip end thickness
E12 first root thickness
E21 second tip end thickness
E22 second root thickness
F11 first tip end portion height
F12 first root portion height
F21 second tip end portion height
F22 second root portion height
R1 first direction
R2 second direction
R3 third direction
R4 fourth direction
R5 fifth direction
R6 sixth direction
T1 first height
T2 second height
T3 third height
T4 fourth height
T5 fifth height
T6 sixth height
T7 seventh height
T8 eighth height
T9 ninth height
T10 tenth height
T11 eleventh height
W1 first length
W2 second length
W3 third length
W4 fourth length

## Claims

1. A peripheral device to which a first game controller and a second game controller are removably attachable,
the first game controller being removably attachable to a game device right side surface which is a right side surface of a game device, the first game controller including a first input portion located at a first game controller front surface, a first projecting portion that projects in a rear direction, the first projecting portion located at a first game controller rear surface, a first projection located at a first game controller side surface, the first projection being to be matched with a game device right recess located in the game device right side surface, a first operation portion, and a first pusher that projects from a top surface of the first projection as a result of an operation on the first operation portion,
the second game controller being removably attachable to a game device left side surface which is a left side surface of the game device, the second game controller including a second input portion located at a second game controller front surface, a second projecting portion that projects in the rear direction, the second projecting portion being located at a second game controller rear surface, a second projection located at a second game controller side surface, the second projection being to be matched with a game device left recess located at the game device left side surface, a second operation portion, and a second pusher that projects from a top surface of the second projection as a result of an operation on the second operation portion,
the peripheral device comprising:
a first portion to which the first game controller and the second game controller are removably attachable such that the first game controller front surface and the second game controller front surface face front; and
a second portion fixed to a rear surface of the first portion, the second portion being to be held by both hands of a user, wherein
the first portion is provided with
a first recess with which the first projection is to be matched, the first recess being located at a right side surface, and
a second recess with which the second projection is to be matched, the second recess being located at a left side surface,
the second portion includes
a right portion which is a portion on right of the right side surface of the first portion in a front view and includes a portion to be held by a right hand of the user, and
a left portion which is a portion on left of the left side surface of the first portion in the front view and includes a portion to be held by a left hand of the user,
in a right side view, the right portion is located in rear of the first game controller at a same position in an upward-downward direction as the first game controller attached to the first portion,
at least a part of the right portion is opposed to the first game controller rear surface of the first game controller attached to the first portion, in front of a rear end of the first projecting portion,
in a left side view, the left portion is located in rear of the second game controller at a same position in the upward-downward direction as the second game controller attached to the second portion,
at least a part of the left portion is opposed to the second game controller rear surface of the second game controller attached to the second portion, in front of a rear end of the second projecting portion,
the first recess is provided with a first abutment area on which the first pusher that projects is to abut, and
the second recess is provided with a second abutment area on which the second pusher that projects is to abut.

2. The peripheral device according to claim 1, wherein
an upper surface of the right portion is located below the rear end of the first projecting portion of the first game controller attached to the first portion in the upward-downward direction and in a shape that extends downward as the upper surface of the right portion extends to the right, and
an upper surface of the left portion is located below the rear end of the second projecting portion of the second game controller attached to the first portion in the upward-downward direction and in a shape that extends downward as the upper surface of the left portion extends to the left.

3. The peripheral device according to claim 1, wherein
the first recess is provided with the first abutment area above a center in the upward-downward direction, and
the second recess is provided with the second abutment area above the center in the upward-downward direction.

4. The peripheral device according to claim 3, wherein
the first operation portion is located at the first game controller rear surface,
the second operation portion is located at the second game controller rear surface,
an upper surface of the right portion is located below the first operation portion of the first game controller attached to the first portion in the upward-downward direction and in a shape that extends downward as the upper surface of the right portion extends to the right, and
an upper surface of the left portion is located below the second operation portion of the second game controller attached to the first portion in the upward-downward direction and in a shape that extends downward as the upper surface of the left portion extends to the left.

5. The peripheral device according to claim 4, wherein
the first operation portion is operable in a direction including the left in a rear view,
the second operation portion is operable in a direction including the right in the rear view, and
a portion in an upper surface of the second portion between the first operation portion and the second operation portion of the first game controller and the second game controller attached to the first portion in a left-right direction is located below the first operation portion and the second operation portion in the upward-downward direction.

6. The peripheral device according to claim 3, wherein
the first operation portion is located at the first game controller rear surface and on the right of the first projecting portion in a rear view and can be pressed down toward the first projecting portion,
the second operation portion is located at the second game controller rear surface and on the left of the second projecting portion in the rear view and can be pressed down toward the second projecting portion,
an upper surface of the right portion is located below the rear end of the first projecting portion of the first game controller attached to the first portion and the first operation portion in the upward-downward direction and in a shape that extends downward as the upper surface of the right portion extends to the right, and
an upper surface of the left portion is located below the rear end of the second projecting portion of the second game controller attached to the first portion and the second operation portion in the upward-downward direction and in a shape that extends downward as the upper surface of the left portion extends to the left.

7. The peripheral device according to claim 6, wherein
a portion in an upper surface of the second portion between the first operation portion and the second operation portion of the first game controller and the second game controller attached to the first portion in a left-right direction is located below the first operation portion and the second operation portion in the upward-downward direction.

8. A peripheral device to which a first game controller and a second game controller are removably attachable,
the first game controller being removably attachable to a game device right side surface which is a right side surface of a game device, the first game controller including a first input portion located at a first game controller front surface, a first projection located at a first game controller side surface, the first projection being to be matched with a game device right recess located at the game device right side surface, a first operation portion, and a first pusher that projects from a top surface of the first projection as a result of an operation on the first operation portion,
the second game controller being removably attachable to a game device left side surface which is a left side surface of the game device, the second game controller including a second input portion located at a second game controller front surface, a second projection located at a second game controller side surface, the second projection being to be matched with a game device left recess located at the game device left side surface, a second operation portion, and a second pusher that projects from a top surface of the second projection as a result of an operation on the second operation portion,
the peripheral device comprising:
a first portion to which the first game controller and the second game controller are removably attachable; and
a second portion fixed to a rear surface of the first portion, the second portion being to be held by both hands of a user, wherein
the first portion is provided with
a first recess with which the first projection is to be matched, the first recess being located at a right side surface, and
a second recess with which the second projection is to be matched, the second recess being located at a left side surface,
the second portion includes
a right portion which is a portion on right of the right side surface of the first portion in a front view, the right portion including a portion to be held by a right hand of the user, and
a left portion which is a portion on left of the left side surface of the first portion in the front view, the left portion including a portion to be held by a left hand of the user,
the right portion is in such a shape that the right portion does not cover the first game controller attached to the first portion in a right side view but the right portion is covered at least in part with the first game controller attached to the first portion in a top view,
the left portion is in such a shape that the left portion does not cover the second game controller attached to the second portion in a left side view but the left portion is covered at least in part with the second game controller attached to the second portion in the top view,
the first recess is provided with a first abutment area on which the first pusher that projects is to abut, and
the second recess is provided with a second abutment area on which the second pusher that projects is to abut.

9. The peripheral device according to claim 8, wherein
the first recess is provided with the first abutment area above a center in an upward-downward direction, and
the second recess is provided with the second abutment area above the center in the upward-downward direction.

10. The peripheral device according to claim 9, wherein
the first operation portion is located at a first game controller rear surface,
the second operation portion is located at a second game controller rear surface,
an upper surface of the right portion is located below the first operation portion of the first game controller attached to the first portion in the upward-downward direction and in a shape that extends downward as the upper surface of the right portion extends to the right, and
an upper surface of the left portion is located below the second operation portion of the second game controller attached to the first portion in the upward-downward direction and in a shape that extends downward as the upper surface of the left portion extends to the left.

11. The peripheral device according to claim 10, wherein
the first operation portion is operable in a direction including the left in a rear view,
the second operation portion is operable in a direction including the right in the rear view, and
a portion in an upper surface of the second portion between the first operation portion and the second operation portion of the first game controller and the second game controller attached to the first portion in a left-right direction is located below the first operation portion and the second operation portion in the upward-downward direction.

12. The peripheral device according to claim 3 or 9, wherein
the first operation portion is located at the first game controller rear surface and operable in a direction including the left in a rear view,
the second operation portion is located at the second game controller rear surface and operable in a direction including the right in the rear view, and
a portion in an upper surface of the second portion in a left-right direction between the first operation portion and the second operation portion of the first game controller and the second game controller attached to the first portion is located below the first operation portion and the second operation portion in the upward-downward direction.

13. The peripheral device according to claim 3 or 9, wherein
the first recess has such a depth that entirety of the top surface of the first projection is kept accommodated in the first recess when the first pusher of the first game controller attached to the first portion projects, and
the second recess has such a depth that entirety of the top surface of the second projection is kept accommodated in the second recess when the second pusher of the second game controller attached to the first portion projects.

14. The peripheral device according to any one of claims 3, 9, and 13, wherein
each of the first projection and the second projection includes a first projecting portion and a second projecting portion that project from an outer peripheral surface, the first projecting portion being located above the second projecting portion in the upward-downward direction when the first game controller and the second game controller are attached to the first portion,
the first recess has such a depth that at least a part of the second projecting portion of the first game controller is kept accommodated in the first recess when the first pusher of the first game controller attached to the first portion projects, and
the second recess has such a depth that at least a part of the second projecting portion of the second game controller is kept accommodated in the second recess when the second pusher of the second game controller attached to the first portion projects.

15. The peripheral device according to claim 14, wherein
the first recess has such a depth that entirety of the first projecting portion of the first game controller is exposed in the first recess when the first pusher of the first game controller attached to the first portion projects, and
the second recess has such a depth that entirety of the first projecting portion of the second game controller is exposed in the second recess when the second pusher of the second game controller attached to the first portion projects.

16. The peripheral device according to claim 14 or 15, wherein
the first projecting portion is formed by the outer peripheral surface of the first projection and the second projecting portion is formed by the outer peripheral surface of the second projection.

17. The peripheral device according to claim 3 or 9, further comprising a first magnet and a second magnet located below the first magnet, the first magnet and the second magnet being located in each of the first recess and the second recess, the first magnet and the second magnet attracting the first game controller and the second game controller by magnetic force, wherein
the first abutment area and the second abutment area are located above the first magnet in the upward-downward direction.

18. The peripheral device according to claim 17, further comprising terminals located in the first recess and the second recess, respectively, each of the terminals being located between the first magnet and the second magnet in the upward-downward direction, the terminals being connectable to the first game controller and the second game controller, respectively.

19. The peripheral device according to any one of claims 1 to 17, further comprising terminals located in the first recess and the second recess, respectively, the terminals being located at centers in the upward-downward direction of the first recess and the second recess, respectively, the terminals being connectable to the first game controller and the second game controller, respectively.

20. The peripheral device according to any one of claims 1 to 19, wherein
the first portion is provided with
a plurality of first holes aligned in the upward-downward direction, the plurality of first holes passing through a front surface of the first portion and a front-surface-side inner peripheral surface of the first recess, light emitted from the first game controller attached to the first portion passing through the plurality of first holes, and
a plurality of second holes aligned in the upward-downward direction, the plurality of second holes passing through the front surface of the first portion and a front-surface-side inner peripheral surface of the second recess, light emitted from the second game controller attached to the first portion passing through the plurality of second holes.

21. The peripheral device according to any one of claims 1 to 20, wherein
a depth of the first recess is smaller than a largest height of the first projection from the first game controller side surface, and
a depth of the second recess is smaller than a largest height of the second projection from the second game controller side surface.

22. The peripheral device according to any one of claims 1 to 21, wherein
the right side surface of the first portion is configured not to abut on the first game controller side surface of the first game controller attached to the first portion, and
the left side surface of the first portion is configured not to abut on the second game controller side surface of the second game controller attached to the first portion.

23. The peripheral device according to claim 1 or 8, wherein
the first portion is provided with
a plurality of first holes aligned in an upward-downward direction, the plurality of first holes passing through a front surface of the first portion and a front-surface-side inner peripheral surface of the first recess, light emitted from the first game controller attached to the first portion passing through the plurality of first holes, and
a plurality of second holes aligned in the upward-downward direction, the plurality of second holes passing through the front surface of the first portion and a front-surface-side inner peripheral surface of the second recess, light emitted from the second game controller attached to the first portion passing through the plurality of second holes, and
the peripheral device comprises:
a first terminal at a same position as at least one of the plurality of first holes in the upward-downward direction, the first terminal being located in the first recess, the first terminal being connectable to the first game controller; and
a second terminal at a same position as at least one of the plurality of second holes in the upward-downward direction, the second terminal being located in the second recess, the second terminal being connectable to the second game controller.
